(19) Europäisches Patentamt
European Patent Office
Office européen des brevets

(11) **EP 2 124 451 A2**

(12) **EUROPEAN PATENT APPLICATION**

(43) Date of publication:
**25.11.2009 Bulletin 2009/48**

(51) Int Cl.:
*H04N 7/24* (2006.01)      *H04N 7/26* (2006.01)

(21) Application number: **09251299.5**

(22) Date of filing: **12.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.05.2008 JP 2008135035**
**23.05.2008 JP 2008135036**

(71) Applicant: **Sony Corporation**
**Tokyo 108-0075 (JP)**

(72) Inventor: **Igarashi, Tatsuya**
**Tokyo (JP)**

(74) Representative: **Robinson, Nigel Alexander Julian et al**
**D Young & Co**
**120 Holborn**
**London EC1N 2DY (GB)**

(54) **Content server, information processing apparatus, network device, content distribution method, information processing method, and content distribution system**

(57)   A content server according to the present invention includes a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, and a plurality of distribution sections for respectively acquiring from a separate encoder the compressed data stream generated by the encoder and for distributing the acquired compressed data stream, the plurality of distribution sections being assigned individual network addresses.

**FIG.1**

EP 2 124 451 A2

**Description**

The present invention relates to a content server, an information processing apparatus, a network device, a content distribution method, an information processing method, and a content distribution system.

An Internet Protocol Television (IPTV), which is a video distribution system using an IP network, can, by distributing a video compressed by a high-efficiency coding technique such as MPEG2, H.264/AVC or the like to a plurality of terminals by IP multicasting, realize a service equivalent to that of a TV system using traditional radio waves.

However, due to the characteristics of the system, the IPTV system needs about 1 to 3 seconds for channel switching, and there is a problem that the time needed for the channel switching is longer compared to a usual digital television broadcast and the like.

This problem results from the two problems as described below. The first problem is that a time is needed for the switching control of data to be distributed to an access network. This is a problem that arises because, in the IPTV system, the access network to a service subscriber's premise is a network of a limited bandwidth (for example, about 10Mbps in the case of ADSL2), and a method of transmitting only the data of a channel being received by a terminal to the access network is adopted.

The second problem is that, since data of the channel is distributed through the access network of a limited data bandwidth, Group of Picture (GOP) length of a compressed video, for example, MPEG2, needs to be longer compared to the digital broadcast, and thus, one is kept waiting until an I picture (IDR picture in the case of AVC) at the beginning of an MPEG2 stream GOP of a channel after switching is received.

Regarding the problems, two methods as described below are being proposed as an approach to speeding up the channel switching of the IPTV. The first method is a method of simultaneously distributing to terminals, as a stream for channel switching, a compressed data acquired by encoding a video signal of a channel at low resolution to low bit rate (for example, see pamphlets of International Publication No. WO 2004/114667 and International Publication No. WO 2004/114668). According to this method, after displaying a compressed data of low bit rate at the time of channel switching, switching to a display according to a compressed data method having a bit rate of the original resolution is performed. The second method is a method of providing, near an access server, a server for caching/buffering an I picture (IDR picture) and for temporarily displaying the I picture by transmitting the I picture at a high speed to a terminal by unicast at the time of channel switching (for example, see specification of US2005/0081244A).

However, the methods described in the pamphlets of International Publication No. WO 2004/114667 and International Publication No. WO 2004/114668 have a problem that the quality of the video for channel switching is poor due to low resolution. Further, the method described in the specification of US2005/0081244A needs to have a special server provided near the access network, and thus, there is a problem that, as the entire system becomes large, the material cost increases proportionally, and the system becomes complicated resulting in the increase in the operational cost.

Further, for both of the methods, there are problems that the protocol at the time of the channel switching and the mechanism for switching the data stream are complicated, and that the implementation thereof in the reproduction system of a terminal is difficult.

Thus, at least preferred embodiments of the present invention are provided in view of the above-described problems, and it is desirable to provide a content server, an information processing apparatus, a network device, a content distribution method, an information processing method and a content distribution system that are new and improved, and that are capable of realizing the speeding up of channel switching in an IPTV system by a simple method without drastically changing the reproduction system of an existing network device or a terminal.

Further, the waiting time until the video of the next channel is displayed at the time of the channel switching depends on the frequency of appearance of the I picture or the IDR picture depending on the MPEG compression method. However, although the methods described in the pamphlets of International Publication No. WO 2004/114667 and International Publication No. WO 2004/114668 and the specification of US2005/0081244A seek improvement in the channel switching, there is a problem in selecting a channel by previewing the channels being broadcast at a high speed in a multi-channel service providing more than 100 channels.

For example, with the IPTV using an MPEG system where the IDR picture (corresponds to the I picture of MPEG2) is encoded once every second, theoretically, even if the channel switching is performed continuously at the highest speed, it will take more than 100 seconds to perform the channel switching for 100 channels.

Thus, at least preferred embodiments of the present invention are provided in view of the above-described problems, and it is desirable to provide a content server, an information processing apparatus, a content distribution method, an information processing method and a content distribution system that are new and improved, and that are capable of providing an equally or more comfortable TV viewing environment than the channel switching (hereinafter, also referred to as "channel zapping") of a traditional analog TV system.

According to at least preferred embodiments of the present invention, there is provided a content server including a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections for respectively acquiring from a separate encoder the compressed data stream generated by the encoder and for distributing the acquired compressed data stream, the plurality of distribution sections being assigned individual network addresses.

Here, the reference compressed video data is data, in time series data generated by compressing a video signal, for which encoding of a subsequent video signal can be started without depending on previous data, and the compressed time series data can include multiple reference compressed video data.

With this configuration, the plurality of encoders encode a video/audio content and generate multiple compressed data streams from the video/audio content, where the video/audio content is encoded in such a manner that the positions of video frames corresponding to reference compressed video data and the time points of distribution of the reference compressed video data are different for the respective multiple compressed data streams, and a plurality of distribution sections respectively acquire from a separate encoder the compressed data stream generated by the encoder and distribute the acquired compressed data stream, the plurality of distribution sections being assigned individual network addresses.

The plurality of encoders may respectively encode the video/audio content under the same compression and encoding conditions.

Each of the plurality of distribution sections may output reference compressed video data scheduled distribution time point information relating to a scheduled distribution time point of distribution of the generated reference compressed video data.

A clock in the content server may be synchronized with a reference clock that is provided from a reference clock server located outside the content server, and the plurality of encoders may respectively measure the reference compressed video data scheduled distribution time point based on the synchronized clock.

The content server may include several devices, each of which having one encoder and one distribution section, connected in parallel with each other. Or, the plurality of encoders and the plurality of distribution sections may be provided within the same device.

According to another example embodiment of the present invention, there is provided an information processing apparatus including an acquisition stream selection section for selecting a compressed data stream to be acquired among multiple compressed data streams distributed by a content server that includes a plurality of encoders to encode a video/audio content and to generate the multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by a compressing video signal, for which encoding of a subsequent video signal can be started without depending on previous data, and a plurality of distribution sections to respectively acquire from a separate encoder the compressed data stream generated by the encoder and to distribute the acquired compressed data stream, the plurality of distribution sections being assigned individual network addresses, and a content acquisition section for acquiring the compressed data stream distributed by the content server based on a selection result of the acquisition stream selection section.

The acquisition stream selection section may acquire reference compressed video data scheduled distribution time point information relating to a scheduled distribution time point, which is when the generated reference compressed video data outputted from the content server is to be distributed, and may select the compressed data stream to be acquired based on the acquired reference compressed video data scheduled distribution time point information.

The acquisition stream selection section may calculate estimated switching completion time point, which is when switching to the acquired compressed data stream is to be completed, by using a required switching time required for switching a display to the acquired compressed data stream and the time point when a selection process for a stream to be acquired was started, and may select the compressed data stream having a nearest reference compressed video data scheduled distribution time point after the calculated estimated switching completion time point.

The acquisition stream selection section does not have to select any of the compressed data streams when all of the reference compressed video data scheduled distribution time points corresponding to the respective compressed data streams are ahead of the estimated switching completion time point.

The acquisition stream selection section may notify the content acquisition section of the selection result for the compressed data stream when a time interval between the scheduled distribution time point and the estimated switching completion time point for the selected compressed data stream is equal to or below a predetermined threshold value.

The content acquisition section may perform, by IGMP, a switching control of the compressed data stream selected by the acquisition stream selection section.

According to another example embodiment of the present invention, there is provided a network device including an acquisition stream selection section for selecting a compressed data stream to be acquired among multiple compressed data streams distributed by a content server that includes a plurality of encoders to encode a video/audio content and to generate the multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections to respectively acquire from a separate encoder the compressed data stream generated by the encoder and to distribute the acquired compressed data stream, the plurality of distribution sections being assigned individual network addresses, a content acquisition section for acquiring the compressed data stream distributed by the content server based on a selection result of the acquisition stream selection section, and a distribution control section for distributing the acquired compressed data stream to an information processing apparatus that is connected via a network.

According to another example embodiment of the present invention, there is provided a content distribution method including the steps of encoding a video/audio content and generating multiple compressed data streams from the video/audio content, where the video/audio content is inputted in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and of distributing simultaneously each of the multiple compressed data streams that are generated.

According to another example embodiment of the present invention, there is provided an information processing method including the steps of selecting a compressed data stream to be acquired among the distributed multiple compressed data streams generated from a video/audio content encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and of acquiring the selected compressed data stream.

According to another example embodiment of the present invention, there is provided a content distribution method including the steps of selecting a compressed data stream to be acquired among the distributed multiple compressed data streams generated from a video/audio content encoded in such a manner that the positions of video frames corresponding to reference compressed video data and the time points of distribution of the reference compressed video data are different for the respective multiple compressed data streams,, the reference compressed video data being data, in time series data generated by compressing a video signal, for which encoding of a subsequent video signal can be started without depending on previous data, of acquiring the selected compressed data stream, and of distributing the acquired compressed data stream to an information processing apparatus that is connected via a network.

According to another example embodiment of the present invention, there is provided a content distribution system including a content server including a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections for respectively acquiring from a separate encoder the compressed data stream generated by the encoder and for distributing the acquired compressed data stream, the plurality of distribution sections being assigned individual network addresses, and an information processing apparatus including an acquisition stream selection section for selecting the compressed data stream to be acquired among the multiple compressed data streams distributed by the content server and a content acquisition section for acquiring the compressed data stream distributed by the content server based on a selection result of the acquisition stream selection section.

According to another example embodiment of the present invention, there is provided a content distribution system including a content server including a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections for respectively acquiring from a separate encoder the compressed data stream generated by the encoder and for distributing the acquired compressed data stream, the plurality of distribution sections being assigned individual network addresses, an information processing apparatus for notifying a network device of the compressed data stream desired to be reproduced among the multiple compressed data streams distributed by the content server and for reproducing the compressed data stream acquired from the network device, and the network device including an acquisition stream selection section for selecting, based on the notification received from the information processing apparatus, the compressed data stream to be acquired among the multiple compressed data streams distributed by the content server, a content acquisition section for acquiring the compressed data stream distributed by the content server based on a selection result of the acquisition stream selection section and a distribution control section for distributing the acquired compressed data stream to the information processing apparatus that is connected via a network.

According to another example embodiment of the present invention, there is provided a content server including a first encoder for encoding a video/audio content and for generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder for encoding the video/audio content and for generating a second compressed data stream having a compressed video data stream and a compressed audio data stream, the compressed video data stream including the reference compressed video data and compressed video data generated by using the reference compressed video data, a first distribution section for acquiring the first compressed data stream, for dividing the first compressed data stream into a data distribution period and a data non-distribution period, and for intermittently distributing the first compressed data stream so that the data non-distribution period acquired by the dividing and a data non-distribution period of a first compressed data stream distributed by another content server correspond to each other, the first distribution section being assigned a unique network address, and a second distribution section for acquiring the second compressed data stream and for distributing the acquired second compressed data stream, the second distribution section being assigned a network address different from that of the first distribution section.

Here, the reference compressed video data is data, in time series data generated by compressing a video signal, for which encoding of a subsequent video signal can be started without depending on previous data, and the compressed time series data can include multiple reference compressed video data.

With this configuration, the first encoder encodes a video/audio content and generates a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, the second encoder encodes the video/audio content and generates a second compressed data stream having a compressed video data stream and a compressed audio data stream, the compressed video data stream including the reference compressed video data and compressed video data generated by using the reference compressed video data, the first distribution section, which is assigned a unique network address, acquires the first compressed data stream, divides the first compressed data stream into a data distribution period and a data non-distribution period and intermittently distributes the first compressed data stream so that the data non-distribution period acquired by the dividing and a data non-distribution period of a first compressed data stream distributed by another content server correspond to each other, and the second distribution section, which is assigned a network address different from that of the first distribution section, acquires the second compressed data stream and distributes the acquired second compressed data stream.

The first distribution section may store the first compressed data stream in a data packet so that the reference compressed video data exists at the beginning of the data distribution period.

The second distribution section may divide the second compressed data stream into a data distribution period and a data non-distribution period and intermittently distribute the second compressed data stream so that the data non-distribution period of the second compressed data stream and the data non-distribution period of the first compressed data stream exist at the same time point.

The second distribution section may store the second compressed data stream in a data packet so that the reference compressed video data exists at the beginning of the data distribution period.

In the data distribution period, the first distribution section may arrange data packets in which the first compressed data streams are stored at regular intervals and may transmit the data packets.

In the data distribution period, the second distribution section may arrange data packets in which the second compressed data streams are stored at regular intervals and may transmit the data packets.

The compressed video data stream in the first compressed data stream and the compressed video data stream in the second compressed data stream may have the same resolution.

The first distribution section and the second distribution section may output reference compressed video data scheduled distribution time point information relating to scheduled distribution time points, which are when the generated

5

reference compressed video data are to be distributed.

The content server may include a device having the first encoder and the first distribution section and a device having the second encoder and the second distribution section connected in parallel with each other. Further, the first encoder, the second encoder, the first distribution section and the second distribution section may be provided within a same device.

According to another example embodiment of the present invention, there is provided an information processing apparatus including an acquisition stream selection section for selecting a compressed data stream to be acquired among multiple first compressed data streams and second compressed data streams distributed by a plurality of content servers, where there are the plurality of content servers that respectively include a first encoder to encode a video/audio content and to generate a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder to encode the video/audio content and to generate a second compressed data stream having a compressed video data stream and a compressed audio data stream, the compressed video data stream including the reference compressed video data and compressed video data generated by using the reference compressed video data, a first distribution section to acquire the first compressed data stream, to divide the first compressed data stream into a data distribution period and a data non-distribution period, and to intermittently distribute the first compressed data stream so that the data non-distribution period acquired by the dividing and a data non-distribution period of a first compressed data stream distributed by another content server correspond to each other, the first distribution section being assigned a unique network address, and a second distribution section to acquire the second compressed data stream and to distribute the acquired second compressed data stream, the second distribution section being assigned a network address different from that of the first distribution section, and a content acquisition section for acquiring the compressed data stream distributed by the content server based on a selection result of the acquisition stream selection section.

The information processing apparatus may further include a channel selection section that converts an operation for selecting a channel corresponding to the video/audio content performed on the information processing apparatus to a predetermined signal, and the acquisition stream selection section may select the compressed data stream to be acquired based on the signal transmitted from the channel selection section.

The acquisition stream selection section may select, when a change of the channel being acquired is notified from the channel selection section, the first compressed data stream corresponding to the channel after change.

The acquisition stream selection section may select, when the channel after change is designated, the second compressed data stream corresponding to the designated channel.

When switching from the first compressed data stream of a channel to the first compressed data stream of another channel, the acquisition stream selection section may notify the content acquisition section of an acquisition timing of the compressed data stream so that switching to the compressed data stream to be acquired is performed during the data non-distribution period.

When switching from the first compressed data stream of a channel being viewed to the second compressed data stream of another channel, the acquisition stream selection section may notify the content acquisition section of an acquisition timing of the compressed data stream so that switching to the compressed data stream to be acquired is performed during the data non-distribution period.

The acquisition stream selection section may acquire reference compressed video data scheduled distribution time point information relating to a scheduled distribution time point, which is when the generated reference compressed video data outputted from the content server is to be distributed, and may determine a timing of acquiring the compressed data stream based on the acquired reference compressed video data scheduled distribution time point information.

The acquisition stream selection section may calculate estimated switching completion time point, which is when switching to the acquired compressed data stream is to be completed, by using a required switching time required for switching a display to the acquired compressed data stream and the time point when a selection process for a stream to be acquired was started, and may notify the content acquisition section of an acquisition timing of the compressed data stream when a time interval between the scheduled distribution time point and the estimated switching completion time point for the selected compressed data stream is equal to or below a predetermined threshold value.

The content acquisition section may perform, by IGMP, a switching control of the compressed data stream selected by the acquisition stream selection section.

According to another example embodiment of the present invention, there is provided an network device including an acquisition stream selection section for selecting a compressed data stream to be acquired among multiple first compressed data streams and second compressed data streams distributed by a plurality of content servers, where there are the plurality of content servers that respectively include a first encoder to encode a video/audio content and to generate a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder to encode the video/audio content and to generate a second compressed data stream having a compressed video data stream and a compressed audio data stream, the compressed video data stream including the reference compressed video data and compressed video data generated by using the reference compressed video data, a first distribution section to acquire the first compressed data stream, to divide the first compressed data stream into a data distribution period and a data non-distribution period, and to intermittently distribute the first compressed data stream so that the data non-distribution period acquired by the dividing and a data non-distribution period of a first compressed data stream distributed by another content server correspond to each other, the first distribution section being assigned a unique network address, and a second distribution section to acquire the second compressed data stream and to distribute the acquired second compressed data stream, the second distribution section being assigned a network address different from that of the first distribution section, a content acquisition section for acquiring the compressed data stream distributed by the content server based on a selection result of the acquisition stream selection section, and a distribution control section for distributing the acquired compressed data stream to an information processing apparatus that is externally connected.

When switching from the first compressed data stream of a channel to the first compressed data stream of another channel, the acquisition stream selection section may notify the content acquisition section of an acquisition timing of the compressed data stream so that switching to the compressed data stream to be acquired is performed during the data non-distribution period.

When switching from the first compressed data stream of a channel being viewed to the second compressed data stream of another channel, the acquisition stream selection section may notify the content acquisition section of an acquisition timing of the compressed data stream so that switching to the compressed data stream to be acquired is performed during the data non-distribution period.

According to another example embodiment of the present invention, there is provided a content distribution method including the steps of encoding a video/audio content and generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, of encoding the video/audio content and generating a second compressed data stream having a compressed video data stream and a compressed audio data stream, the compressed video data stream including the reference compressed video data and compressed video data generated by using the reference compressed video data, and of dividing the generated first compressed data stream into a data distribution period and a data non-distribution period, intermittently distributing the first compressed data stream so that the data non-distribution period acquired by the dividing and a data non-distribution period of a first compressed data stream distributed by another content server correspond to each other, and, at the same time, distributing the second compressed data stream.

According to another example embodiment of the present invention, there is provided an information processing method including the steps of selecting a compressed data stream to be acquired among multiple compressed data streams corresponding to multiple video/audio contents being distributed, where there are a plurality of content servers that respectively distribute, in relation to the video/audio content, a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, where the first compressed data stream is intermittently distributed so that a data non-distribution period, acquired by dividing a data packet into a data distribution period and the data non-distribution period, and a data non-distribution period of a first compressed data stream distributed by another content server correspond to each other, and a second compressed data stream having a compressed video data stream and a compressed audio data stream, the compressed video data stream including the reference compressed video data and compressed video data generated by using the reference compressed video data; and of acquiring the selected compressed data stream.

According to another example embodiment of the present invention, there is provided a content distribution method including the steps of selecting a compressed data stream to be acquired among multiple compressed data streams corresponding to multiple video/audio contents being distributed, where there are a plurality of content servers that respectively distribute, in relation to the video/audio content, a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, where the first compressed data stream is intermittently distributed so that a data non-distribution period, acquired by dividing a data packet into a data distribution period and the data non-distribution period, and a data non-distribution period of a first compressed data stream distributed by another content server correspond to each other, and a second compressed data stream having a compressed video data stream and a compressed audio data stream, the compressed video data stream including the reference compressed video data and compressed video data generated by using the reference compressed video data, of acquiring the selected compressed data stream, and of distributing the acquired compressed data stream to an information processing apparatus that is connected via a network.

In the step of acquiring the selected compressed data stream, an acquisition of the compressed data stream may be performed from immediately after the data non-distribution period.

According to another example embodiment of the present invention, there is provided a content distribution system including a plurality of content servers respectively including a first encoder for encoding a video/audio content and for generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder for encoding the video/audio content and for generating a second compressed data stream having a compressed video data stream and a compressed audio data stream, the compressed video data stream including the reference compressed video data and compressed video data generated by using the reference compressed video data, a first distribution section for acquiring the first compressed data stream, for dividing the first compressed data stream into a data distribution period and a data non-distribution period, and for intermittently distributing the first compressed data stream so that the data non-distribution period acquired by the dividing and a data non-distribution period of a first compressed data stream distributed by another content server correspond to each other, the first distribution section being assigned a unique network address and a second distribution section for acquiring the second compressed data stream and for distributing the acquired second compressed data stream, the second distribution section being assigned a network address different from that of the first distribution section; and an information processing apparatus including an acquisition stream selection section for selecting a compressed data stream to be acquired among the multiple compressed data streams distributed by the plurality of content servers and a content acquisition section for acquiring the compressed data stream distributed by the content server based on a selection result of the acquisition stream selection section.

According to another example embodiment of the present invention, there is provided a content distribution system including a plurality of content servers respectively including a first encoder for encoding a video/audio content and for generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder for encoding the video/audio content and for generating a second compressed data stream having a compressed video data stream and a compressed audio data stream, the compressed video data stream including the reference compressed video data and compressed video data generated by using the reference compressed video data, a first distribution section for acquiring the first compressed data stream, for dividing the first compressed data stream into a data distribution period and a data non-distribution period, and for intermittently distributing the first compressed data stream so that the data non-distribution period acquired by the dividing and a data non-distribution period of a first compressed data stream distributed by another content server correspond to each other, the first distribution section being assigned a unique network address and a second distribution section for acquiring the second compressed data stream and for distributing the acquired second compressed data stream, the second distribution section being assigned a network address different from that of the first distribution section, an information processing apparatus for notifying a network device of the compressed data stream desired to be reproduced among multiple compressed data streams distributed by the plurality of content servers and for reproducing the compressed data stream acquired from the network device, and the network device including an acquisition stream selection section for selecting, based on the notification received from the information processing apparatus, the compressed data stream to be acquired among the multiple compressed data streams distributed by the plurality of content servers, a content acquisition section for acquiring the compressed data stream distributed by the content server based on a selection result of the acquisition stream selection section and a distribution control section for distributing the acquired compressed data stream to the information processing apparatus that is connected via a network.

According to at least preferred embodiments of the present invention described above, speeding up of channel switching in an IPTV system can be realized by a simple method without drastically changing the reproduction system of an existing network device or terminal.

Further, according to at least preferred embodiments of the present invention, an equally or more comfortable TV viewing environment than the channel switching (hereinafter, also referred to as "channel zapping") of a traditional analog TV system can be realized, and multiple channels can be previewed at a high speed.

Embodiments of the invention will now be described, by way of example only, with reference to the accompanying drawings in which:

FIG. 1 is an explanatory diagram for describing a content distribution system according to an example first embodiment of the present invention.

FIG. 2 is a block diagram for describing a configuration of a content server.

FIG. 3 is a block diagram for describing a configuration of an information processing apparatus.

FIG. 4 is an explanatory diagram for describing the positional relationship between IDR pictures in MPEG2-TS streams that are outputted from the content server.

FIG. 5 is an explanatory diagram for describing a format of a UDP packet to be transmitted from the content server.

FIG. 6 is an explanatory diagram for describing a calculation method for scheduled distribution time point to be carried out by the content server.

FIG. 7 is an explanatory diagram for describing an example of reference compressed video data scheduled distribution time point information.

FIG. 8 is an explanatory diagram for describing a data format of Broadcast Discovery Record according to DVB-IP.

FIG. 9 is an explanatory diagram for describing an example where the Broadcast Discovery Record is expressed in XML.

FIG. 10 is a flow chart for describing an information processing method.

FIG. 11A is an explanatory diagram for describing a format of an IGMP message.

FIG. 11B is an explanatory diagram for describing a format of the IGMP message.

FIG. 12A is an explanatory diagram for describing an example of the IGMP message.

FIG. 12B is an explanatory diagram for describing an example of the IGMP message.

FIG. 13 is a flow chart for describing a channel selection process of the information processing method.

FIG. 14A is an explanatory diagram for describing different cases for selection of a multicast address of the information processing method.

FIG. 14B is an explanatory diagram for describing different cases for selection of the multicast address of the information processing method.

FIG. 15 is an explanatory diagram for describing different cases for start of reception of a packet or switching timing of the packet of the information processing method.

FIG. 16A is an explanatory diagram for describing an example of the IGMP message.

FIG. 16B is an explanatory diagram for describing an example of the IGMP message.

FIG. 16C is an explanatory diagram for describing an example of the IGMP message.

FIG. 17 is a flow chart for describing a channel reception termination process of the information processing method.

FIG. 18 is a block diagram for describing a hardware configuration of the content server and the information processing apparatus.

FIG. 19 is an explanatory diagram for describing a content distribution system according to a example second embodiment of the present invention.

FIG. 20 is a block diagram for describing a configuration of a content server.

FIG. 21 is a block diagram for describing a configuration of an information processing apparatus.

FIG. 22 is an explanatory diagram for describing picture structures of a compressed video data stream.

FIG. 23 is an explanatory diagram for describing a format of a UDP packet to be transmitted from the content server.

FIG. 24 is an explanatory diagram for describing a compressed data stream for preview.

FIG. 25A is an explanatory diagram for describing a format of an IGMP message.

FIG. 25B is an explanatory diagram for describing a format of the IGMP message.

FIG. 26 is an explanatory diagram for describing a shaping process for a packet to be carried out by the content server.

FIG. 27 is an explanatory diagram for describing a calculation method for scheduled distribution time point to be carried out by the content server.

FIG. 28 is an explanatory diagram for describing an example of reference compressed video data scheduled distribution time point information.

FIG. 29 is an explanatory diagram for describing a data format of Broadcast Discovery Record according to DVB-IP.

FIG. 30 is an explanatory diagram for describing an example where the Broadcast Discovery Record is expressed in XML.

FIG. 31 is a flow chart for describing an information processing method.

FIG. 32A is an explanatory diagram for describing an example of the IGMP message.

FIG. 32B is an explanatory diagram for describing an example of the IGMP message.

FIG. 33 is a flow chart for describing a channel preview process of the information processing method.

FIG. 34 is a flow chart for describing a switching process to a compressed data stream for preview of the information processing method.

FIG. 35A is an explanatory diagram for describing an example of the IGMP message.

FIG. 35B is an explanatory diagram for describing an example of the IGMP message.

FIG. 35C is an explanatory diagram for describing an example of the IGMP message.

FIG. 36 is a flow chart for describing a switching process to a compressed data stream for viewing and listening of the information processing method.

FIG. 37 is an explanatory diagram for describing different cases for switching timings of data streams of the information processing method.

FIG. 38 is a flow chart for describing a channel reception termination process of the information processing method.

FIG. 39 is an explanatory diagram for describing an example of a preview screen of an IPTV using the information processing method.

FIG. 40 is a block diagram for describing a hardware configuration of the content server and the information processing apparatus.

FIG. 41 is an explanatory diagram for describing a general IPTV system.

Hereinafter, example embodiments of the present invention will be described in detail with reference to the appended drawings. Note that, in this specification and the appended drawings, structural elements that have substantially the same function and structure are denoted with the same reference numerals, and repeated explanation of these structural elements is omitted.

<Explanation on Infrastructure Technology>

First, before giving a detailed description of example embodiments according to the present invention, technological matters laying a basis for realizing the present example embodiments will be described. Incidentally, the present example embodiments are configured to obtain more significant effects by improving on the infrastructure technology described below. Accordingly, the technology relating to the improvement forms the characteristics of the present example embodiments. That is, although the present example embodiments follow the basic concept of the technological matters described herein, it is to be noted that the substance of the present example embodiments is aggregated in the improvements, and thus, the configuration and effect thereof are clearly different from those of the infrastructure technology.

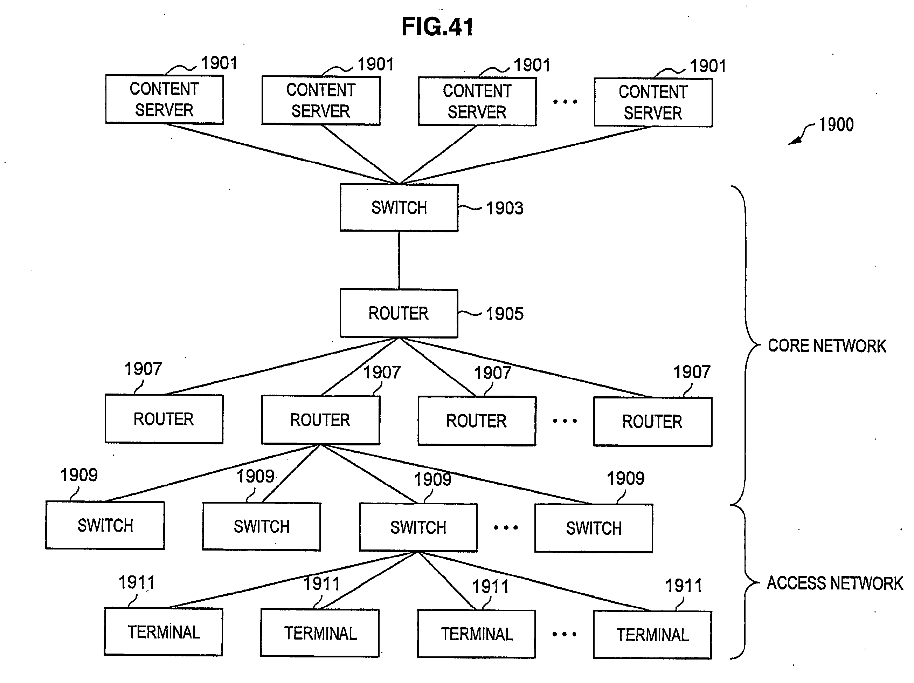

FIG. 41 is a network configuration diagram relating to a multicast video distribution in a general IPTV system 1900. As shown in FIG. 41, the general IPTV system 1900 mainly includes, for example, a plurality of content servers 1901 corresponding to respective channels, edge switches 1903 and 1909, routers 1905 and 1907, and a plurality of terminals 911 to be used by viewers.

The content server 901 is configured from an encoder for encoding a video/audio signal (video/audio content) and a distribution server. A video signal of each TV channel (300 channels in total, for example), is encoded in real time by using, for example, H.264/AVC, and an audio signal of each TV channel is encoded in real time by using a high-efficiency coding technique such as High-efficiency Advanced Audio Coding (HE-AAC). Then, after multiplexing each of the encoded signals to an MPEG-transport Stream (MPEG2-TS) format, the encoder transmits the same as stream data to the distribution server. The distribution server inserts the multiple MPEG2-TS packets in a Real-time Transport Protocol (RTP) packet, and further, multicasts the same to an IP network by a transmission protocol of User Datagram Protocol (UDP).

The IP packet of the stream of each channel is specified an individual multicast address, and is distributed to the terminal 1911 via a core network and an access network. As the core network, a wide bandwidth network that uses optical fibre and that is capable of data transmission at several gigabits to several tens of gigabits per second by using a technology such as a Wavelength Division Multiplexing (WDM) is used. On the other hand, a technology such as Asymmetric Digital Subscriber Line (ADSL) using copper wires of existing analog telephone line, for example, is used for the access network to an IPTV service subscriber's premise (that is, from the edge switch 1909 to the terminal 1911). There are various standards for ADSL, and the data bandwidth also depends on the length of the line. If, for example, the ADSL2 standard is used, when within 4km from a base station, a bandwidth of 10 or more megabits per second can be realized and at least one video signal at a resolution of high definition television can be distributed.

As described above, in contrast to the core network having a sufficient bandwidth and capable of distributing the streams of all the channels provided by the IPTV service, the access network has a limited data bandwidth, and the access network has to be distributed only the data of the channels being received by the terminal. Generally, Internet Group Management Protocol (IGMP) is used for the distribution control of the multicast data.

When the terminal 1911 transmits an IGMP message to the network to join a multicast group of data of a channel desired to be received, the edge router 1907 distributes the multicast data only to the network to which the request has been made. However, when a plurality of terminals are connected to the edge router 1907, the edge router 1907 distributes the data also to the access network to which the terminal 1911 not receiving the corresponding multicast data is connected. Thus, it is necessary to prevent the distribution to the access network to which the terminal 1911 not requesting to join the multicast group by IGMP is connected. Accordingly, a Digital Subscriber Line Access Multiplexer (DSALM), which is the edge switch 1909, is implemented with IGMP SNOOPING. The DSLAM snoops the IGMP packet transmitted from the terminal 1911, and performs a filtering control so that the data of the multicast group is distributed only to the access network to which the terminal 1911 that issued the request is connected.

The IPTV system according to each example embodiment of the present invention has been achieved by following the IPTV system of a general architecture as described above. Each example embodiment of the present invention will be described below in detail.

<Content Distribution System>

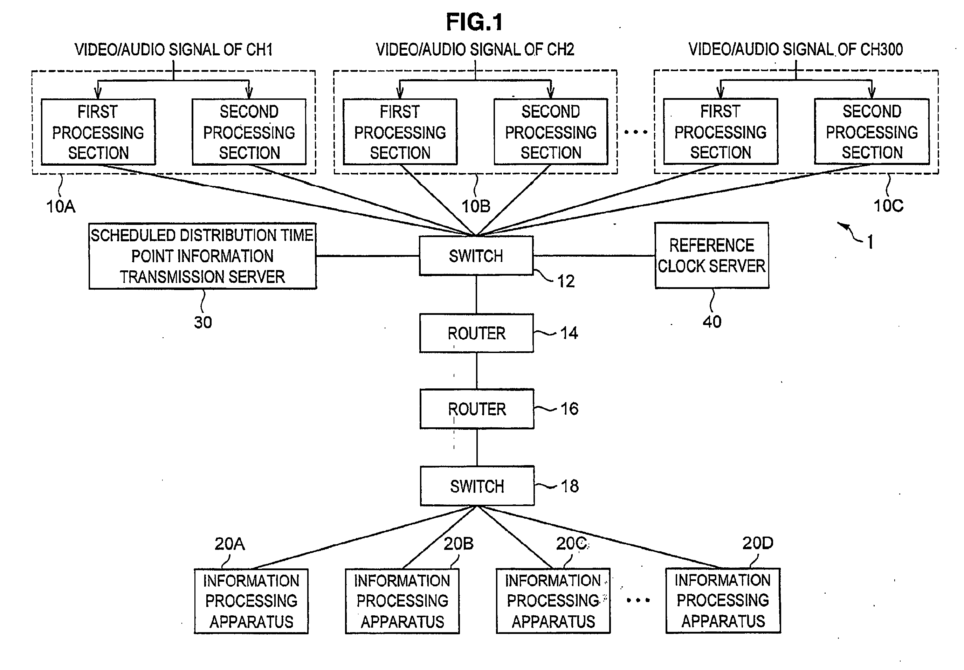

First, referring to FIG. 1, a content distribution system according to an example embodiment of the present invention will be described in detail. FIG. 1 is an explanatory diagram for describing the content distribution system according to the example embodiment. Incidentally, in the following explanation, an explanation will be made with an IPTV system as an example of the content distribution system.

As shown in FIG. 1, for example, a content distribution system 1 according to the present embodiment mainly includes a plurality of content servers 10A, 10B and 10C corresponding to respective channels, switches 12 and 18, routers 14 and 16, a plurality of information processing apparatuses 20A, 20B, 20C and 20D to be used by viewers, a scheduled distribution time point information transmission server 30, and a reference clock server 40.

The content server 10 corresponds to the broadcasting station of each channel in the IPTV system, and encodes a video/audio content (video/audio signal) according to a predetermined method to make it a compressed data stream and multicast the same to an IP network by using a predetermined transmission protocol. In FIG. 1, only three content servers are shown. However, the content server 10 exists as many as the number of channels in the IPTV system, for example, and where there are 300 channels in total, there are 300 content servers 10 in the content distribution system 1.

The switch 12 is a communication device having a changing function (switching function) for a packet flowing through the core network, and the switch 18 is a communication device having a changing function for a packet flowing through the access network and is particularly called an edge switch because it exists in the vicinity of the core network. These switches 12 and 18 are set so as to determine the destination of a packet and relay the communication only to a specific third party.

The routers 14 and 16 are devices for relaying data such as a packet flowing through the network. These routers analyze a partial protocol, that is, the network layer or the transport layer of the so-called OSI reference model, and transfer the data. Further, the routers 14 and 16 have a path selection function of analyzing the address described in the network layer and determining through which path the data is to be transferred.

The information processing apparatus 20 is a terminal to be used by the viewer of the content distribution system 1, and acquires a content desired to be viewed and listened to among multiple video/audio contents distributed by respective content servers 10 and reproduces the acquired content.

Incidentally, the content server 10 and the information processing apparatus 20 described above will be described again in detail in the following.

The scheduled distribution time point information transmission server 30 receives each of reference compressed video data scheduled distribution time point information outputted from each content server 10, and collects the reference compressed video data scheduled distribution time point information of all the content servers 10 existing in the content distribution system 1. Further, the scheduled distribution time point information transmission server 30 transmits the collected reference compressed video data scheduled distribution time point information to the information processing apparatus 20 connected to the system at a predetermined time interval (for example, a cycle of 10 to 20 ms). Incidentally, the reference compressed video data scheduled distribution time point information described above will be described in detail in the following.

The reference clock server 40 is a server having, for example, time point information source with accuracy of 1/10000 seconds, and synchronizes the internal clock of the content server 10, the information processing apparatus 20 or the like connected to the content distribution system 1 with the time point information source of the reference clock server 40 by using, for example, Network Time Protocol (NTP).

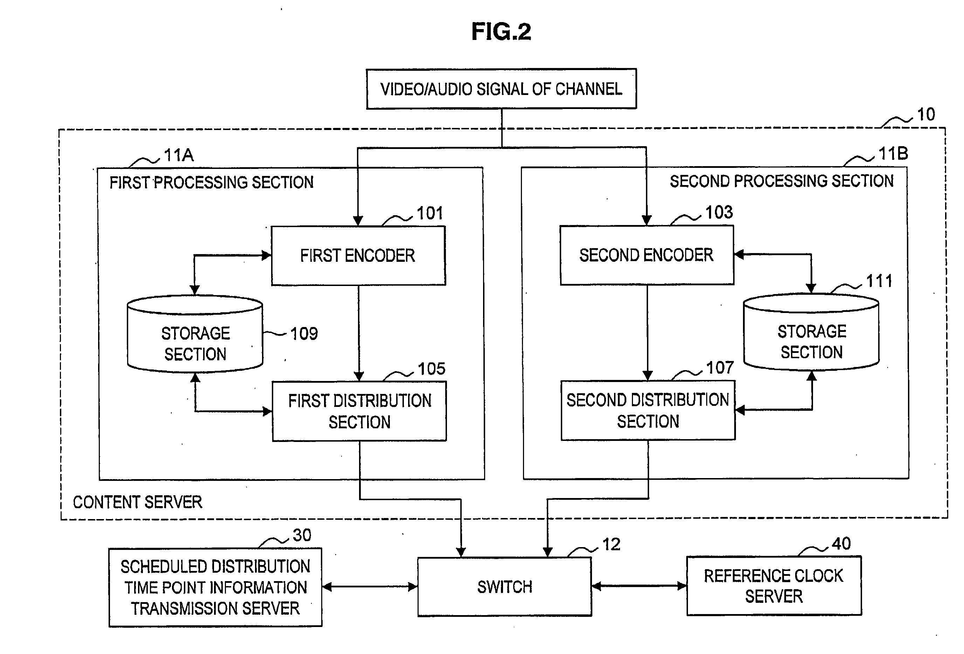

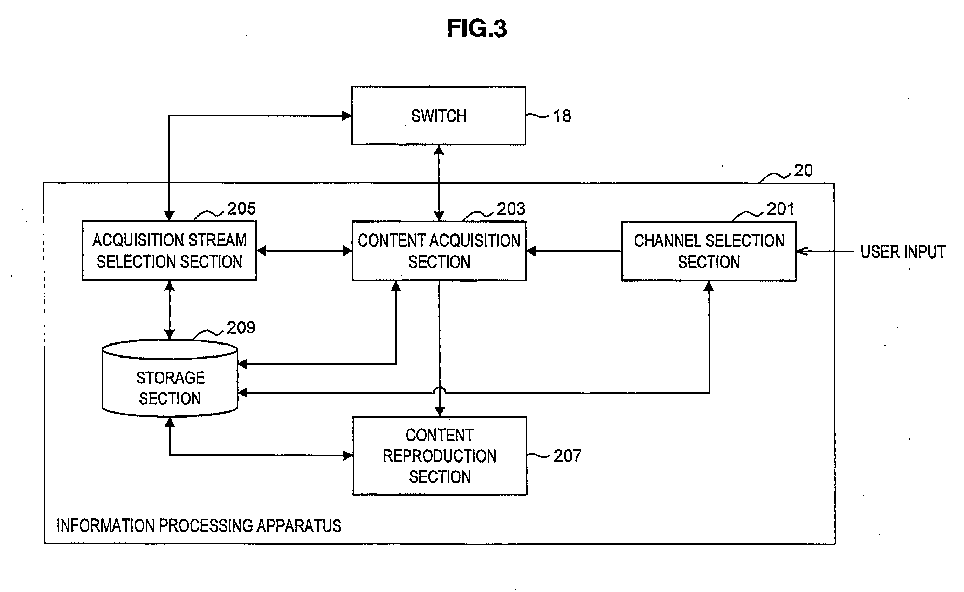

Heretofore, the content distribution system 1 according to the present example embodiment has been described. Next, referring to FIGS. 2 and 3, the content server 10 and the information processing apparatus 20 according to the present example embodiment will be described in detail.

<Configuration of Content Server>

Next, referring to FIG. 2, the configuration of the content server 10 according to the present example embodiment will be described in detail. FIG. 2 is a block diagram for describing the configuration of the content server 10 according to the present example embodiment.

The content server 10 according to the present embodiment has its clock synchronizing with the reference clock server 40 existing in the content distribution system 1. The content server 10 can synchronize the internal clock with the time of the reference clock server 40 by using the NTP, for example, at an arbitrary timing such as when the server is started, when the administrator of the content server 10 inputs a command for updating the internal clock, or the like.

Each of the processing sections of the content server 10 according to the present embodiment executes a predetermined process by referring to the current time of the internal clock synchronized with the reference clock server 40.

As shown in FIG. 2, for example, the content server 10 according to the present example embodiment includes a first processing section 11A and a second processing section 11B. A video/audio signal of a same channel is input to the first processing section 11A and the second processing section 11B, respectively.

As shown in FIG. 2, the first processing section 11A mainly includes a first encoder 101, a first distribution section 105 and a storage section 109, for example. Further, as shown in FIG. 2, the second processing section 11B mainly includes a second encoder 103, a second distribution section 107 and a storage section 111, for example.

As shown in FIG. 2, the first processing section 11A and the second processing section 11B are processing sections including at least one set of an encoder and a distribution section where each of the encoders and each of the distribution sections function independent of each other.

The first encoder 101 and the second encoder 103 are configured from a central processing unit (CPU), a read only memory (ROM) and a random access memory, for example. Of the inputted video/audio signal, the first encoder 101 and the second encoder 103 encode the video signal in real time by using, for example, H.264/AVC, and also, encode the audio signal in real time by using a high-efficiency coding technique such as HE-AAC or the like. Subsequently, after multiplexing each of the encoded signals to an MPEG2-TS format, the first encoder 101 and the second encoder 103 transmit the same as compressed data streams to the first distribution section 105 and the second distribution section 107.

Here, the first encoder 101 and the second encoder 103 respectively encode the video signal of the video/ audio signal in such a manner that the positions of a video frame (normally, 30 frames per second) or a field (60 fields per second) of an original video signal to which reference compressed data corresponds are different from each other. Here, reference compressed video data is reference compressed video data that can be decoded without referring to reference compressed video data temporally preceding the reference compressed video data. The first encoder 101 and the second encoder 103 perform the encoding so that the reference compressed video data appear periodically so as to enable the encoding from the middle of the compressed data stream. Example of the reference compressed video data includes, for example, an instantaneous decoder refresh (IDR) picture in H.264/AVC or an Intra picture (I picture) in MPEG2 video.

For example, a case is assumed where a high definition video is encoded by H.264/AVC. At this time, the first encoder 101 and the second encoder 103 encode the video signal so that the encoded signal is configured from 30 MPEG pictures per second and an IDR picture appears once per second. By performing the encoding process, even if the bit rate of the video is maximum 7 megabits per second, the reproduced video is of a higher image quality than when encoding is performed so that the IDR picture appears twice per second. Incidentally, in this specification, according to the description of the Group of Picture (GOP) of the MPEG2 video, a group of multiple pictures including the IDR picture at the beginning will be expressed as GOP.

The first encoder 101 and the second encoder 103 respectively encode the video/audio signal in such a manner that the conditions of other than the timing of appearance of the reference compressed video data are the same. For example, the first encoder 101 and the second encoder 103 encode a same video signal by the same number of MPEG pictures and resolution. Further, an MPEG stream to be outputted from each of the encoders 101 and 103 are outputted in such a manner that it becomes maximum 8 megabits per second at the time of being multiplexed to MPEG2-TS. In this case, the IDR pictures in the two MPEG2-TSs appear every one second (that is, GOP length is 30 frames) where the first encoder 101 and the second encoder 103 are set so that the IDR pictures are generated shifting from each other by 0.5 seconds (that is, 15 pictures).

Incidentally, at the time of encoding the video/audio signal, the first encoder 101 and the second encoder 103 can respectively refer to various databases stored in the storage section 109 and the storage section 111 described later. Further, the first encoder 101 and the second encoder 103 may also respectively store the generated compressed data stream in the storage section 109 and the storage section 111.

The first distribution section 105 and the second distribution section 107 are configured from a CPU, a ROM, a RAM, a communication device, and the like, for example, and have the function of a so-called Real-time Transport Protocol (RTP) server. The first distribution section 105 and the second distribution section 107 respectively store the MPEG2-TS packets generated by the first encoder 101 and the second encoder 103 in IP multicast packets after storing them in the RTP packets and in the UDP packets, and transmit the same. These IP packets are distributed by the IP network via the switch 12 or the like, for example.

Further, the first distribution section 105 and the second distribution section 107 calculate scheduled distribution time points, which are when the reference compressed video data generated by the first encoder 101 and the second encoder 103 are to be distributed, and periodically generate reference compressed video data scheduled distribution time point information (hereinafter, abbreviated as "scheduled distribution time point information") in which the scheduled distribution time points are described. The calculation method for the scheduled distribution time point will be described again in detail in the following.

The first distribution section 105 and the second distribution section 107 periodically output the scheduled distribution time point information that each generated to the scheduled distribution time point information transmission server 30. Further, the first distribution section 105 and the second distribution section 107 may respectively store the generated scheduled distribution time point information in the storage section 109 and the storage section 111.

The storage section 109 is stored as appropriate various parameters which became necessary to be preserved at the time of the first processing section 11A according to present example embodiment performing a process, the progress of the process, or the like, or various databases or the like. The first encoder 101, the first distribution section 105, and the like, can freely read from or write in the storage section 109.

In the same manner, the storage section 111 is stored as appropriate various parameters which became necessary to be preserved at the time of the second processing section 11B according to present example embodiment performing a process, the progress of the process, or the like, or various databases or the like. The second encoder 103, the second distribution section 107, and the like, can freely read from or write in the storage section 111.

Incidentally, in the example shown in FIG. 2, a case is described where the content server 10 according to the present example embodiment is configured from two processing sections, namely, the first processing section 11A and the second processing section 11B. However, the content server 10 can be configured from 3 or more processing sections. The greater the number of the processing sections assigned to one channel (one video/audio signal, in other words), the faster the channel switching can be.

Further, the first processing section 11A and the second processing section 11B may be provided within the case of one content server. Further, a processing section including an encoder and a distribution section may be an independent device, and a plurality of the devices may be connected in parallel.

Heretofore, an example of the function of the content server 10 according to the present example embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present example embodiment.

<Configuration of Information Processing Apparatus>

Subsequently, referring to FIG. 3, a configuration of the information processing apparatus 20 according to the present example embodiment will be described in detail. FIG. 3 is a block diagram for describing a configuration of the information processing apparatus 20 according to the present example embodiment.

The information processing apparatus 20 according to the present example embodiment has its clock synchronizing with the reference clock server 40 existing in the content distribution system 1. The information processing apparatus 20 can synchronize the internal clock with the time of the reference clock server 40 by using the NTP, for example, at an arbitrary timing such as when the apparatus is started, when the user of the information processing apparatus 20 inputs a command for updating the internal clock, or the like.

As shown in FIG. 3, for example, the information processing apparatus 20 according to the present example embodiment mainly includes a channel selection section 201, a content acquisition section 203, an acquisition stream selection section 205, a content reproduction section 207, and a storage section 209.

The channel selection section 201 is configured from a CPU, a ROM, a RAM, and the like, for example. When the user selects a specific channel among multiple channels being distributed by operating an operation section, such as a channel selection switch, a channel selection button or the like provided on the information processing apparatus 20, or a remote control, or the like, the channel selection section 201 converts the input by the channel selection switch, the channel selection button or the like into a predetermined signal. Further, the channel selection section 201 outputs the predetermined signal acquired by converting the user input to the content acquisition section 203 described later.

The content acquisition section 203 is configured from a CPU, a ROM, a RAM, a communication device, and the like, for example, and acquires a content distributed by a channel corresponding to the signal transmitted from the channel selection section 201 among multiple channels being distributed. Since, in the content distribution system according to the present example embodiment, multiple compressed data streams are distributed for a content belonging to one channel, the content acquisition section 203 acquires a content based on a selection result notified from the acquisition stream selection section 205 described later.

Incidentally, at the time of acquiring the content, the content acquisition section 203 can execute the acquisition process for the content by referring to various databases or the like stored in the storage section 209 described later.

The acquisition stream selection section 205 is configured from a CPU, a ROM, a RAM, a communication device, and the like, for example, and executes the process as described in the following by referring to the current time of the internal clock synchronized with the reference clock server 40.

The acquisition stream selection section 205 periodically receives from the scheduled distribution time point information transmission server 30 the scheduled distribution time point information outputted from each of the content servers 10 and collected by the scheduled distribution time point information transmission server 30. The acquisition stream selection section 205 selects, by referring to the received scheduled distribution time point information, a compressed data stream to be acquired among the multiple compressed data streams distributed by the channel notified by the content acquisition section 203.

More particularly, the acquisition stream selection section 205 calculates, by using a required switching time required for acquiring and displaying the compressed data stream of the channel notified by the content acquisition section 203 and the time point when a selection process for the compressed data stream to be acquired was started, an estimated switching completion time point, which is when displaying of the acquired compressed data stream is completed. Here, the above-described required switching time is a time required until the content being distributed in a new channel is displayed at the time of switching from the channel currently being displayed to a different channel. The acquisition stream selection section 205 compares the calculated estimated switching completion time point and the scheduled distribution time point information acquired from the scheduled distribution time point information transmission server 30, and selects the compressed data stream having a nearest scheduled distribution time point after the estimated switching completion time point.

Further, when all of the scheduled distribution time points corresponding to the multiple compressed data streams being distributed by the channel notified by the content acquisition section 203 are ahead of the estimated switching completion time point, the acquisition stream selection section 205 does not select any of the compressed data streams. Instead, the acquisition stream selection section 205 executes again the selection process for the compressed data stream based on the scheduled distribution time point information newly transmitted from the scheduled distribution time point information transmission server 30.

Since the scheduled distribution time point information is transmitted from the scheduled distribution time point information transmission server 30 at an extremely short cycle of, for example, several tens of milliseconds, even if the acquisition stream selection section 205 determines "not to select" as described above, the compressed data stream can be selected at the next appropriate timing, and thus, the problem of usability for the user being impaired does not arise.

When the selection of the compressed data stream to be acquired is completed, the acquisition stream selection section 205 notifies the content acquisition section 203 of the selection result.

Incidentally, when performing these selection processes, the acquisition stream selection section 205 can perform the processes by referring to various databases or the like stored in the storage section 209 described later.

Further, when there is a time interval exceeding a predetermined threshold value between the scheduled distribution time point and the estimated switching completion time point for the selected compressed data stream, the acquisition stream selection section 205 does not have to notify the content acquisition section 203 of the selection result for the compressed data stream to be acquired. Instead, the acquisition stream selection section 205 executes again the selection process for the compressed data stream based on the scheduled distribution time point information newly transmitted from the scheduled distribution time point information transmission server 30. In other words, the acquisition stream selection section 205 notifies the content acquisition section 203 of the selection result for the compressed data stream when the time interval between the scheduled distribution time point and the estimated switching completion time point for the selected compressed data stream is equal to or below the predetermined threshold value.

When there is a time interval exceeding the predetermined threshold value between the estimated switching completion time point and the scheduled distribution time point, even if display switching is performed based on the selection result of the acquisition stream selection section 205, a display screen remains in a state of blackout where black color or the like is displayed on the screen. Accordingly, since the stream of the channel before switching is being successively acquired while waiting for the scheduled distribution time point information to be newly notified from the scheduled distribution time point information transmission server 30, by successively displaying the video on the screen, selection process for the compressed data stream can be executed again without impairing the usability for the user.

The above-described selection method for the acquisition streams will be described again in detail in the following.

The content reproduction section 207 is configured from a CPU, a ROM, a RAM, and the like, for example, and reproduces the content acquired by the content acquisition section 203 and displays the same on a display (not shown) provided in the information processing apparatus 20. Here, the reproduction of a content includes reproducing a decoded content after the compressed data stream transmitted from the content acquisition section 203 is decoded, and reproducing a content along with the decoding of the compressed data stream. The content reproduction section 207 can refer to the databases or the like stored in the storage section 209 described later at the time of decoding the content or reproducing the content.

The storage section 209 is stored as appropriate various parameters which became necessary to be preserved at the time of the information processing apparatus 20 according to present example embodiment performing a process, the progress of the process, or the like, or various databases or the like. The channel selection section 201, the content acquisition section 203, the acquisition stream selection section 205, the content reproduction section 207, and the like, can freely read from or write in the storage section 209.

Heretofore, an example of the function of the information processing apparatus 20 according to the present example embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present example embodiment.

<Content Distribution Method>

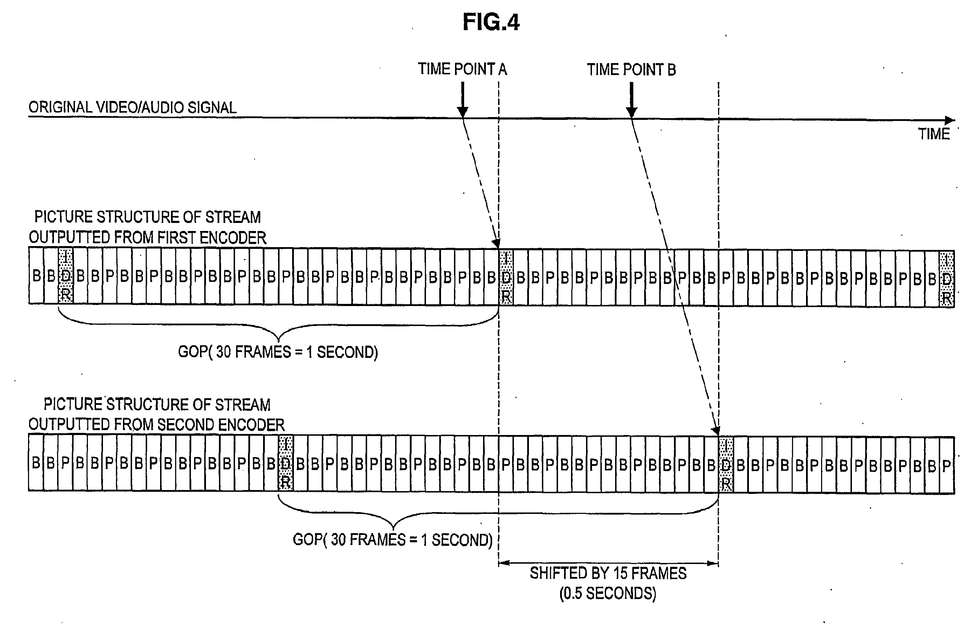

Subsequently, referring to FIGS. 4 to 9, a content distribution method to be executed by the content server 10 according to the present example embodiment will be described in detail.

(Positional Relationship of Reference Compressed Video Data)

FIG. 4 is an explanatory diagram for describing the positional relationship between the IDR pictures in MPEG2-TS streams that are outputted from the content server 10 according to the present example embodiment. In FIG. 4, an example is shown where the encoding is performed so that the IDR picture, which is the reference compressed video data, appears once per second. However, an encoding method that flexibly changes the generation timing of the IDR picture may also be adopted. In this case, the encoders operate in coordination so that the timings of appearance of the IDR pictures are shifted from each other.
In FIG. 4, encoding is executed so that the IDR picture, which is the reference compressed video data, appears one per second as described above. Further, the GOP is configured from 30 frames, and besides the IDR picture, a predictive picture (P-picture) and a bi-predictive picture (B-picture) exist in the GOP. As is apparent from FIG. 4, when comparing a stream outputted from the first encoder 101 and a stream outputted from the second encoder 103, it can be seen that the timings of appearance of the IDR pictures are shifted by 15 frames (about 0.5 seconds).
By performing the encoding in such a manner, and also, by the information processing apparatus 20, which is a terminal, receiving an MPEG2-TS stream that is optimum then at the time of channel switching, the waiting time from after switching until the IDR picture is received can be made minimum, and the video of the channel after switching can be swiftly displayed.
For example, when the switching to the channel is performed in the information processing apparatus 20, which is a terminal, at "time point A" shown in FIG. 4, the information processing apparatus 20 can shorten the waiting time from after the channel switching until the displaying of the video of the selected channel by receiving the stream outputted from the first encoder 101 (in other words, the stream outputted from the first processing section 11A). In the same manner, when the switching to the channel is performed in the information processing apparatus 20 at "time point B", the information processing apparatus 20 can shorten the waiting time from after the channel switching until the displaying of the video of the selected channel by receiving the stream outputted from the second encoder 103 (in other words, the stream outputted from the second processing section 11B).
The MPEG streams outputted from the respective encoders 101 and 103 are generated from a same video signal, and only have the temporal positions of the IDR pictures, from which the displaying of the video can be started based on the channel switching or the like, shifted from each other. The MPEG streams are encoded with other conditions, such as resolution and maximum, being the same. Accordingly, the user is hardly conscious of which of the streams transmitted from the encoders is being reproduced.
Further, there is no need that an H.264/264 encoder and an MPEG2 system clock for multiplexing are synchronized with each other for each of the encoders 101 and 103. If information necessary for shifting the relative positions of the IDR pictures is arranged beforehand, each of the encoders 101 and 103 can realize the encoding without performing a communication between the processing sections 11A and 11B. Here, the information necessary for shifting the relative positions of the IDR pictures may be information relating to a fixed GOP length, information relating to which frame of the video frame of the original video signal is to be encoded to the IDR picture, or the like. Further, in a case of adopting variable GOP length, the processing sections 11A and 11B can also communicate with each other and shift the appearance positions so that the frames in which the IDR pictures appear become optimal for the channel switching.

(Format of UDP Packet)

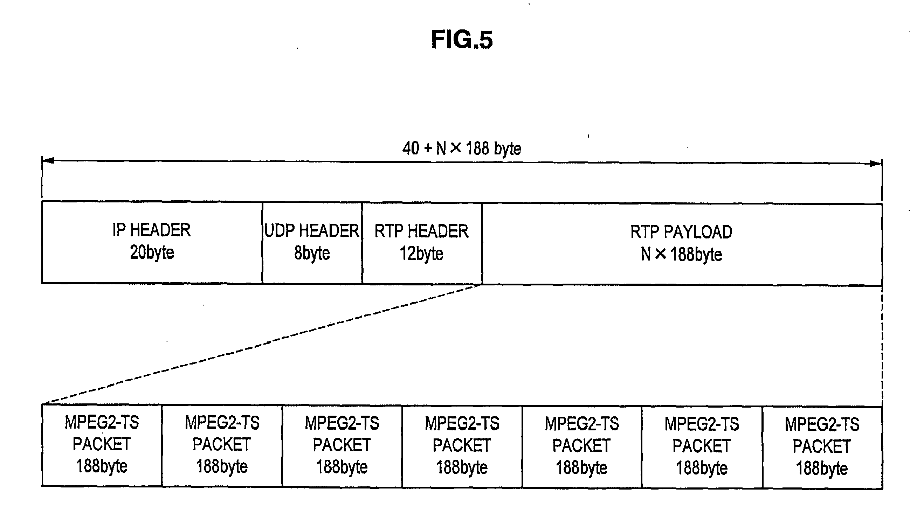

FIG. 5 is an explanatory diagram for describing a format of UDP packets to be transmitted from the distribution sections 105 and 107 according to the present example embodiment. The MPEG2-TS packet generated by each of the encoders 101 and 103 provided in the content server 10 is outputted to the distribution section provided in the processing section to which each of the encoders belongs and is transmitted as an IP packet. The IP packet has a format as shown in FIG. 5, for example.

As shown in FIG. 5, the UDP packet of the IP multicast is configured from an IP header, a UDP header, a RTP header and a RTP payload. The MPEG2-TS packet generated by each of the encoders 101 and 103 of the content server 10 is stored in the RTP payload. Normally, as shown in FIG. 5, seven MPEG2-TS packets are stored in the RTP payload.

Each of the distribution sections 105 and 107 of the content server 10 generates the UDP packet as shown in FIG. 5 and multicasts the same.

(Calculation of Scheduled Distribution Time Point)

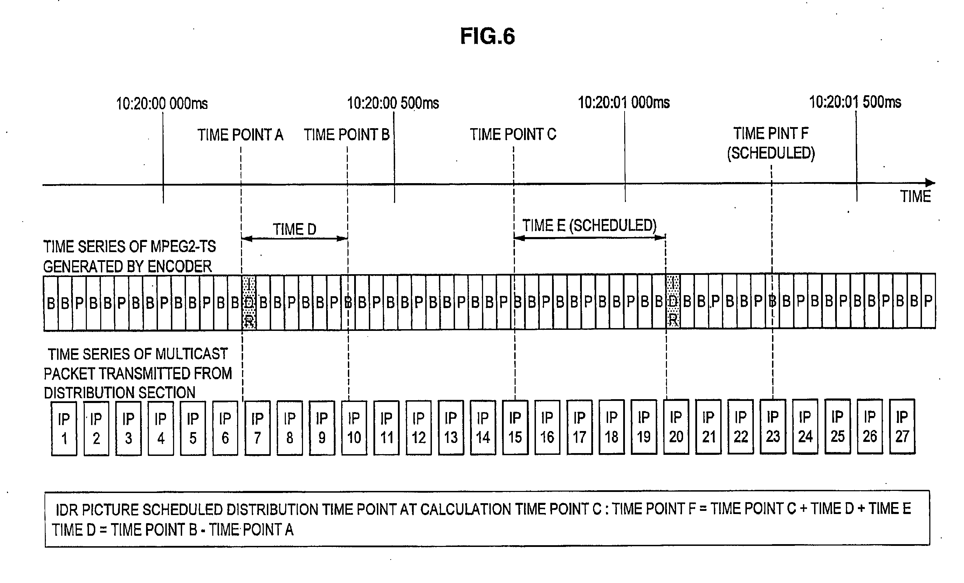

Next, referring to FIG. 6, a calculation method for the scheduled distribution time point to be carried out by each of the distribution sections provided in the content server 10 according to the present example embodiment will be described in detail. FIG. 6 is an explanatory diagram for describing the calculation method for the scheduled distribution time point to be carried out by the content server according to the present example embodiment.

Each of the distribution sections 105 and 107 provided in the content server 10 according to the present example embodiment performs the calculation of the scheduled distribution time point of the IDR picture. The calculation process is performed by using the following equation.

$$\text{IDR picture scheduled distribution time point at calculation time}$$

$$\text{point C : time point F = time point C + time D + time E} \quad \text{...(Equation 1)}$$

Here, in the above-described Equation 1, time D can be calculated by using time D = (time point B - time point A) as shown in FIG. 6. This time D can be taken as a delay time between the generation of the MPEG2-TS packet including data of the IDR picture generated by each of the encoder and the transmission of the MPEG2-TS packet in an IP multicast packet.

Time point B shown in FIG. 6 is a generation time of a first MPEG2-TS packet including the data of the IDR packet, and time point A is a time point of transmission of the MPEG2-TS packet from each of the distribution sections. This delay time D is, normally, almost constant, and thus, a value acquired by one measurement or a fixed value may be used. Or, it may be calculated for each transmission of the IDR picture.

The time E in FIG. 6 is a time taken from time point C until the generation of an MPEG2-TS packet including the first data of the next IDR picture. Time E is updated as time point C is passed, and inquiry should be made to each of the encoders at the time of every measurement of the IDR picture scheduled distribution time point. Normally, in a real-time encoding, to shorten the delay due to encoding, the IDR picture scheduled distribution time point is a time estimated by the encoder. For example, when each of the encoders is set to generate the IDR pictures at a fixed interval of one second, time E can be easily obtained. Even if that is not the case, it is fully possible to estimate time E based on encoder buffer management information that is generated by the encoder and stored in the storage section or the like. When an IDR packet that is not transmitted already exists at time point C, time E becomes a minus value.

Each of the distribution sections provided in the content server calculates the reference compressed video data scheduled distribution time point information by using the method as described above. The distribution section relates the scheduled distribution time point calculated in such a manner to a location information (for example, IP address number) assigned to the distribution section itself, and outputs the same as scheduled distribution time point information to the scheduled distribution time point information transmission server 30.

(Example of Scheduled Distribution Time Point Information)

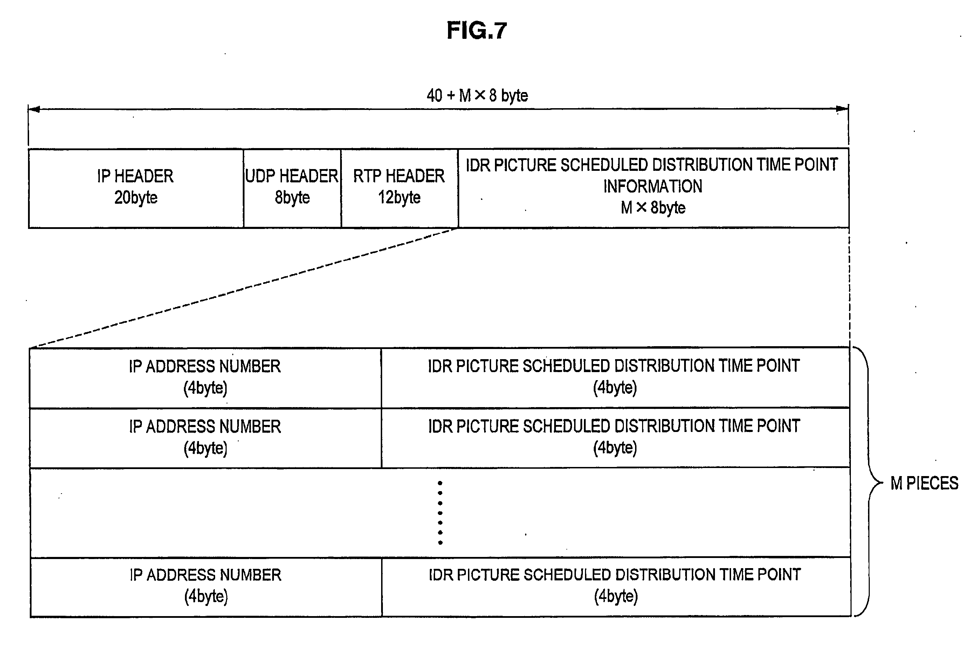

Subsequently, referring to FIG. 7, a concrete description example of the scheduled distribution time point information calculated by using the method as described above will be described in detail. FIG. 7 is an explanatory diagram for describing a concrete example of the reference compressed video data scheduled distribution time point information according to the present example embodiment.

As shown in FIG. 7, IDR picture scheduled distribution time point information, which is an example of the reference compressed video data scheduled distribution time point information, is configured from an IP header, a UDP header, a RTP header and a RTP payload, for example. As shown in FIG. 7, the IDR picture scheduled distribution time point information is stored in the RTP payload of the UDP packet, and is described M pieces of IDR picture scheduled transmission time point records along with a 12-byte header.

An identifier indicating that the UDP packet is in a packet format of the IDR picture scheduled distribution time point information, a version number and the like are specified in the header of the IDR picture scheduled distribution time point information. The IDR picture scheduled distribution time point information of an MPEG stream is expressed by 8 bytes including an IP multicast address (4 bytes) and the scheduled distribution time point (4 bytes), and the scheduled distribution time points for MPEG streams of about M=150 can be described in a UDP packet.

The IP multicast address of a record corresponds to an IP multicast address of each channel in Broadcast Discovery Record described in the following, and is stored a scheduled time when the IP packet including the IDR picture of the stream of the corresponding IP multicast is to be distributed next.

Although an accuracy of about 1/100 seconds, for example, is enough for the scheduled distribution time point, an accuracy of 1/1000 seconds, that is, 1 ms, is preferable. Measuring the scheduled distribution time point with the same clock for each of the processing sections 11 that transmits the IP multicast stream of at least the same channel is enough. However, the scheduled distribution time point may be measured with the same clock for all the processing sections.

Next, referring to FIG. 7, a mechanism of collecting the IDR picture scheduled distribution time point information measured by each content server 10 of the content distribution system 1 and transmitting the same to the information processing apparatus 20, which is a terminal, will be described.

As described above, the clocks of all the content servers 10 and the information processing apparatuses 20 are set to synchronize with the reference clock server 40 connected to the network by the Network Time Protocol (NTP), and each content server 10. synchronizes its clock with the reference clock by the NTP and calculates, by the synchronized clock, the scheduled time point when the next IDR picture is to be distributed. The distribution section provided in the processing section 11 of the content server 10 transmits the calculated time point to the IDR picture scheduled distribution time point information transmission server 30 as described above.

In this case, the distribution section of each processing section 11 transmits the UDP packet shown in FIG. 7 by IP unicast. The UDP packet is stored only a scheduled distribution time point record regarding the IP packet stream to be transmitted by the processing section 11 transmitting this UDP packet. In other words, M is 1 for the UDP packet of FIG. 7. The IDR picture scheduled distribution time point information transmission server 30 collects the IDR picture scheduled distribution time points transmitted from each content server 10 (each processing section 11, to be more precise) and generates the UDP packet as shown in FIG. 7.

As shown in FIGS. 1 and 2, where there are 300 channels (that is, 300 content servers 10) in the content distribution system 1 and two processing sections 11 for each channel, the UDP packet shown in FIG. 7 becomes information for 6oo IP multicast streams. Thus, M=150 for each UDP packet, and each UDP packet is transmitted being divided into four UDP packets. In a network environment where the UDP packet may be lost, a same packet is redundantly transmitted.

The IP multicast address of the UDP packet transmitted from the IDR picture scheduled distribution time point information transmission server 30 is an IP multicast address specified in the Channel Change Info in Broadcast Discovery Record described later. To receive the IDR picture scheduled distribution time point information, each information processing apparatus 20 specifies the IP multicast address and joins the multicast group by IGMP. The transmission of the IDR picture scheduled distribution time point information is performed at the frequency of about 100 times per second, that is, a 10-ms cycle, and the information processing apparatus 20 can receive the latest IDR picture scheduled distribution time point information about every 10 ms.

(Transmission of IP Packet)

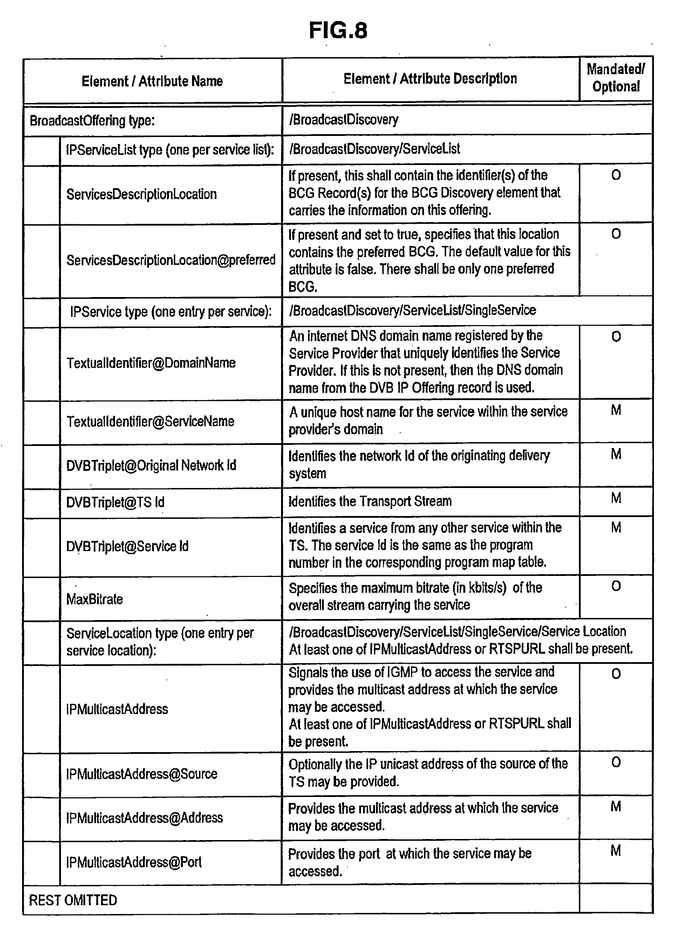

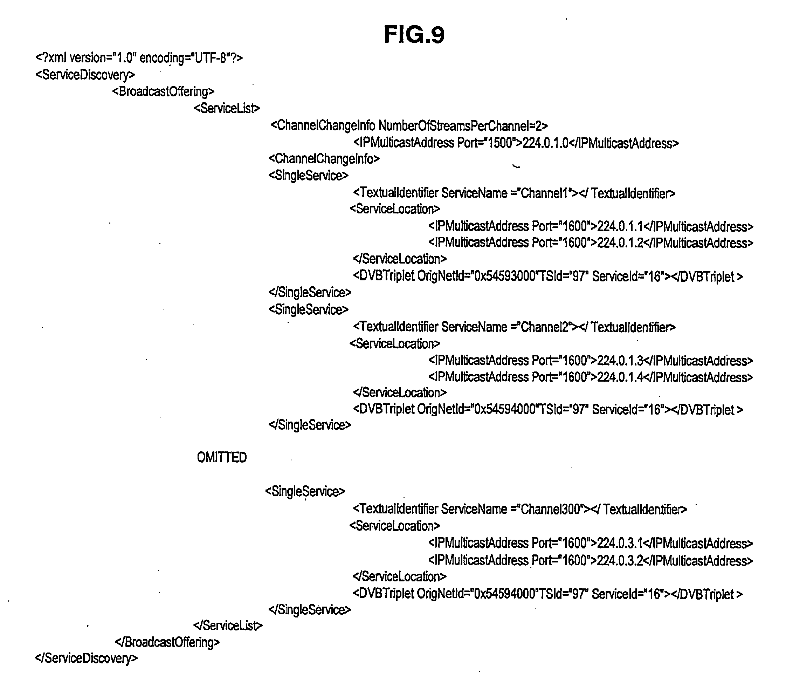

Next, referring to FIGS. 8 and 9, a mechanism of an IP packet according to the present example embodiment being transmitted to an information processing apparatus will be described in detail. Incidentally, in the following, an explanation will be made based on DVB-IP (ETSI TS102 034), which is a standard for the IPTV system.

To receive the MPEG stream for each channel, the information processing apparatus 20, which is a terminal, needs to know the IP multicast address to which data of the channel is to be distributed. According to DVB-IP, the information of the channel is described in SD&S Broadcast Discovery Record. The Broadcast Discovery Record is transmitted by multicast according to DVB SD&S Transport Protocol (DVB STP) according to DVB-IP standard from an IPTV application server such as an EPG server (not shown) to the information processing apparatus 20. Incidentally, the Broadcast Discovery Record is transferred, being assigned an IP multicast address different from that of the MPEG2-TS stream.

Thus, the content server 10 existing in the content distribution system 1 according to the present example embodiment needs to notify beforehand the IP multicast address assigned to each of the processing sections 11 of the content server 10 or various channel information to the IPTV application server.

FIG. 8 is an explanatory diagram for describing a data format of Broadcast Discovery Record according to DVB-IP. The information of all the channels provided by the IPTV service is described in the Broadcast Discovery Record. For example, when the IPTV service broadcasts 300 channels, the information processing apparatus 20, which is a terminal, receives a Broadcast Discovery Record in which information of 300 channels is described.

A channel name is described by a character string for TextualIdentifier@ServiceName as the channel information as shown in FIG. 8, for example, and the character string is used to display the channel name. Further, IPMulticastAddress@Address and IPMulticastAddress@Port are described an IP multicast address, to which the IP multicast packet of the channel is distributed, and a port number.

By the information processing apparatus 20, which is a terminal, joining the IP multicast address group described in the Broadcast Discovery Record by IGMP, distribution of the IP multicast packet of the desired channel is started, and the information processing apparatus 20 is enabled to receive the IP multicast packet.

Normally, an IP multicast distribution is assigned for every channel. However, the content distribution system according to the present example embodiment has multiple IP multicast distributions provided to each channel. Thus, multiple IP multicast addresses are described in the Broadcast Discovery Record.

FIG. 9 is an explanatory diagram for describing an example where the Broadcast Discovery Record is expressed in XML. In this example of the Broadcast Discovery Record, service information for 300 channels is described, and an XML element of each "<SingleService>" corresponds to information of one channel.

For example, channel information at the beginning is described "Channel 1", which is a channel name (ServiceName), and two multicast addresses (one for address 224.0.1.1, port number 1600, and another for address 224.0.1.2, port number 1600). These two addresses correspond to the multicast address of an IP packet to be distributed by the first processing section 11A and the multicast address of an IP packet to be distributed by the second processing section 11B respectively shown in FIG. 2. The channel information listed next is described "Channel 2", which is a channel name, and two multicast addresses. Although the description of the following channel information is omitted, information for 300 channels in total is to be listed and described. According to the Broadcast Discovery Record described above, the information processing apparatus 20 is enabled to know the two addresses of each channel.

Next, an acquisition method for the IDR picture scheduled distribution time point information of each MPEG2-TS stream that is assigned a multicast address and distributed is described. In the present example embodiment, the Broadcast Discovery Record according to DVB-IP standard is extended, and an XML element "<ChannelChangeInfo>" is described. The XML element "<ChannelChangeInfo>" has data indicating the maximum number of MPEG streams being multicast per channel specified in "@NumberOfStreamsPerChannel". Further, the multicast address of the scheduled distribution time point information transmission server 30 from which the IDR picture scheduled distribution time point information of all the MPEG streams distributed by the IPTV service can be acquired is specified in "<IPMulticastAddress>". The example shown in FIG. 9 indicates that maximum two MPEG streams are distributed per channel and the IDR picture scheduled distribution time point information can be acquired from address 224.0.1.0, port number 1500.

As described above, with the content distribution method according to the present example embodiment, multiple compressed data streams with different timings of appearance of reference compressed video data are distributed for one channel. Only the timings of appearance of reference compressed video data are different for the compressed data streams, and encoding conditions other than the timing of appearance are the same. Thus, by selecting an appropriate stream among the multiple compressed data streams, the information processing apparatus 20, which is a terminal, can minimize the waiting time until the reference compressed video data is received, and the video of the channel can be swiftly displayed.

<Information Processing Method>

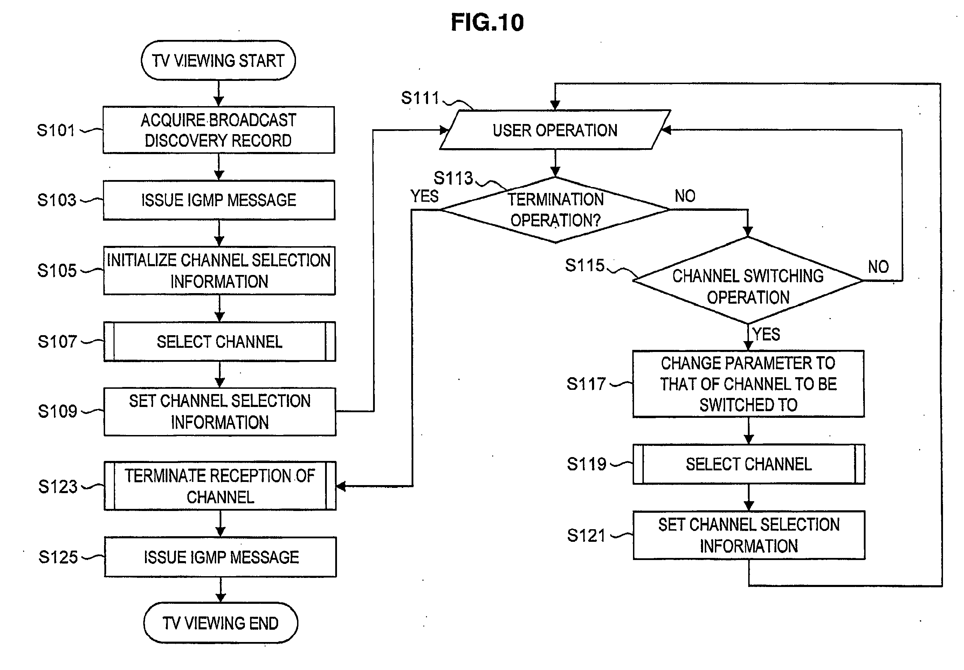

Subsequently, referring to FIGS. 10 to 17, an information processing method to be executed by the information processing apparatus 20 according to the present example embodiment will be described in detail. FIG. 10 is a flow chart for describing an information processing method to be carried out by the information processing apparatus 20 according to the present example embodiment.

When the power of the information processing apparatus 20 is turned on by a viewer (user) or when a TV service is selected from a service menu of the IPTV or the like, the information processing apparatus 20 according to the present example embodiment starts a TV viewing process.

First, the information processing apparatus 20 acquires a Broadcast Discovery Record from an IPTV application server such as an EPG server (not shown) by using a CPU, a ROM, a RAM, a communication device, and the like provided in the apparatus (step S101). The Broadcast Discovery Record is described based on protocol according to DVB-IP standard as shown in FIG. 9, and the information processing apparatus 20 can acquire the channel information corresponding to each channel. When the channel information is not changed frequently, the channel information that is already acquired from the IPTV service may also be used.

Next, the information processing apparatus 20 issues an IGMP message for requesting the distribution start of the IDR picture scheduled distribution time point information and starts receiving multicast packets relating to the scheduled distribution time point information by using a CPU, a ROM, a RAM, a communication device, and the like provided in the apparatus (step S103).

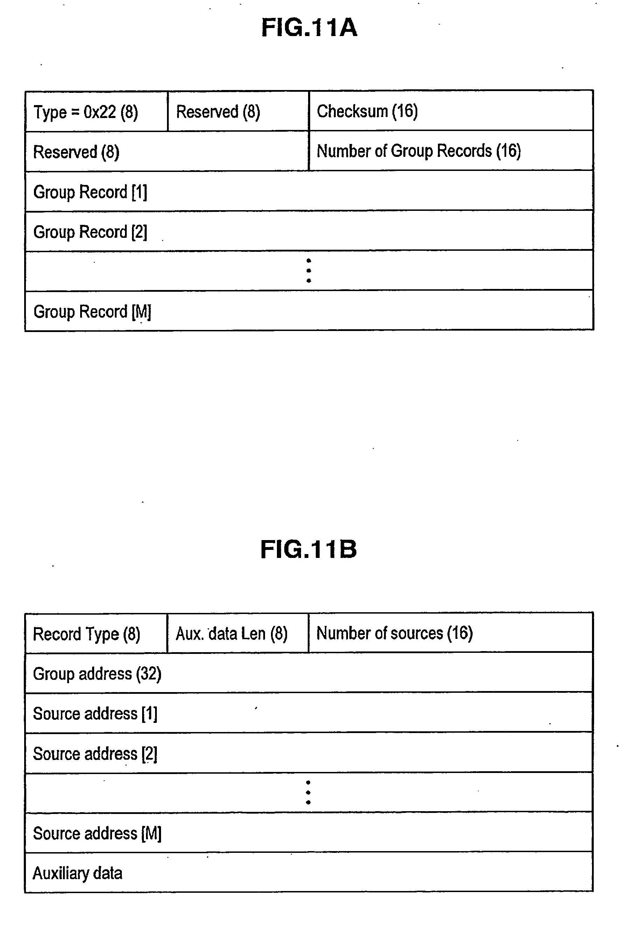

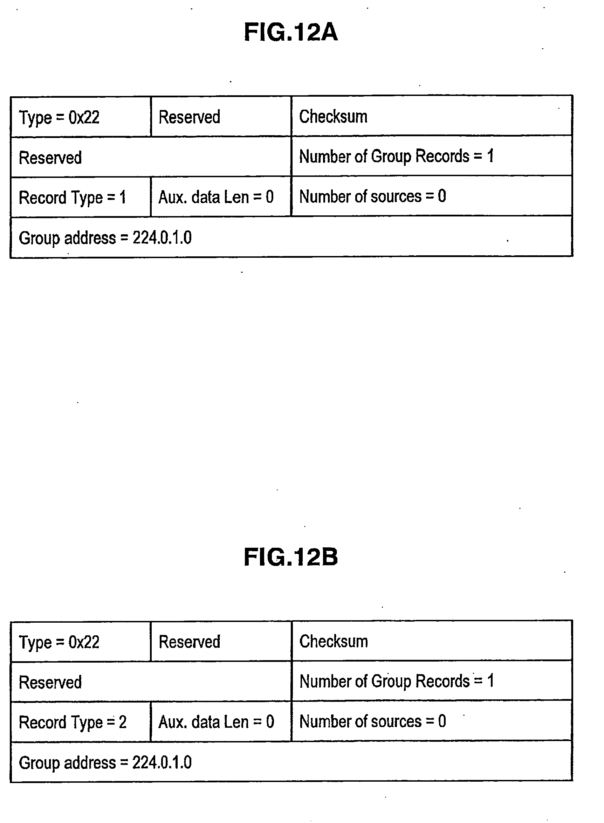

FIGS. 11A and 11B show formats of IGMP messages for the information processing apparatus 20 to perform a multicast data distribution control according to IGMP version 3 according to RFC 3376. Further, FIGS. 12A and 12B are explanatory diagrams for describing an example of the IGMP message according to the present example embodiment.

When joining or leaving a multicast group, the information processing apparatus 20 uses an IGMP message in a report format as shown in FIG. 11A. Additionally, there is also an IGMP message in a query format for checking that a multicast router is participating in the multicast group. A detailed explanation of the specification of these IGMPs will be omitted.

As shown in FIG. 11A, the IGMP message in a report format has the number of records included in the report stated in "Number of Group Records" column, and has "Group Record" for the number of the stated records subsequently described in the IGMP message. FIG. 11B shows a format of each group record. As shown in FIG. 11B, "Record Type" column exists in the format of the group record, and by inputting a predetermined value in the column, the joining in or leaving from the multicast group can be specified.

To instruct the distribution start of the multicast group distributing the IDR picture scheduled distribution time point information, the information processing apparatus 20 issues an IGMP message as shown in FIG. 12A. The value 1 specified in "Record Type" column indicates MODE IS INCLUDE, and indicates to the multicast group corresponding to the multicast address (224.0.1.0 in the example) acquired in the above-described step S101 that information processing apparatus 20 will join the multicast group. By joining the multicast group by the IGMP, the information processing apparatus 20 will be periodically (10-ms cycle, for example) distributed the IDR picture scheduled distribution time point information from the scheduled distribution time point information transmission server 30. The information processing apparatus 20 receives the IDR picture scheduled distribution time point information, and constantly holds the latest information in the storage section 209.

Subsequently, the channel selection section 201 of the information processing apparatus 20 initializes channel selection information (S 105). The pieces of channel selection information to be initialized are four parameters: "CurrentChan", "CurrentAddress", "SelectChan", and "SelectAddr".

Parameter "CurrentChan" is a parameter indicating the position of the channel currently selected by the information processing apparatus 20, and parameter "CurrentAddress" is a parameter indicating the multicast address to which the channel currently selected is distributed. In the initialization, these two parameters are both set to -1. This is a value that indicates that a channel selection is currently not performed. Further, parameter "SelectChan" is a parameter indicating the channel position of the channel to be selected, and parameter "SelectAddr" is a parameter indicating the multicast address to which the MPEG2-TS stream of the selected channel is to be distributed. In the initialization, "SelectChan" is set to 1. If the channel information of a previously selected channel is held in the terminal, the channel position thereof is specified. "SelectAddress" is set to -1 in the initialization.

Subsequently, the channel selection section 201 notifies the content acquisition section 203 of the channel indicated by parameter "SelectChan", and the content acquisition section 203 performs a selection process for the channel (step S107). The selection process for the channel will be described again in detail in the following. By this process, the video of the channel is displayed on the screen of a display (not shown) of the information processing apparatus 20 and the sound is reproduced from speakers.

When the selection process is completed, the channel selection section 201 updates the channel information relating to the currently selected channel (step S109). That is, the value of parameter "SelectChan" is set in parameter "CurrentChan", and the value of parameter "SelectAddr" is set in parameter "CurrentAddr".

Subsequently, the channel selection section 201 of the information processing apparatus 20 waits for an input of a user operation (step S111).

Here, when a termination process such as pressing the power-off button of a remote control, for example, is input by a user (step S113), the channel selection section 201 generates a signal corresponding to the input operation and proceeds to the channel reception termination process of step S123. Further, when an operation for switching a channel is input by the user (step S 115), the channel selection section 201 proceeds to step S117 described later. In other cases, the channel selection section 201 returns to step S111, and waits for a user operation. In reality, besides these controls, there are also user operations such as volume control or the like. However, the description thereof in FIG. 10 will be omitted.

When a channel switching operation is performed by the user, for example, when a channel up button of a remote control is operated by the user, the channel selection section 201 increases the value of parameter "SelectChan" by 1, and when a channel down button is operated by the user, the channel selection section 201 decreases the value of parameter "SelectChan" by 1 (step S117). Here, the channel selection section 201 performs the control in such a way that the value of parameter "SelectChan" does not become a minus value or a value exceeding the total number of channels. Further, when the remote control or the like includes buttons or the like with which a channel number or the like can be directly selected, the channel selection section 201 sets a channel position corresponding to the selected channel in parameter "SelectChan". Then, the channel selection section 201 notifies the content acquisition section 203 of information relating to the newly set parameter.

The content acquisition section 201 executes, based on the value of parameter "SelectChan" notified from the channel selection section 201, the selection of the channel specified by the parameter (step S119). As a result, the newly selected channel is reproduced on the screen and from the speakers of the information processing apparatus 20. The details of the channel selection process described in step S107 will be again described in the following.

Then, as in step S109, the channel selection section 201 updates the channel information relating to the currently selected channel (step S121).

Subsequently, the channel selection section 201 of the information processing apparatus 20 waits for the input of a user operation, and the TV viewing continues.

On the other hand, when the user operation is a termination operation, the content acquisition section 203 executes the channel reception termination process (step S123). The channel reception termination process will be described again in detail in the following.

Then, the information processing apparatus 20 makes the distribution of the IDR picture scheduled distribution time point information started in step S103 stop and terminates the reception of the multicast packet of the scheduled distribution time point information by using a CPU, a ROM, a RAM, a communication device, and the like provided in the apparatus (step S125). The information processing apparatus 20 can stop the distribution by transmitting an IGMP message as shown in FIG. 12B. Here, "RecordType=2" in FIG. 12B indicates that MODE IS EXCLUDE, and means leaving the multicast group of 224.0.1.0.

Subsequently, the information processing apparatus 20 terminates the TV viewing, and returns to the IPTV service menu or moves on to other functions of the terminal.

(Channel Selection Process)

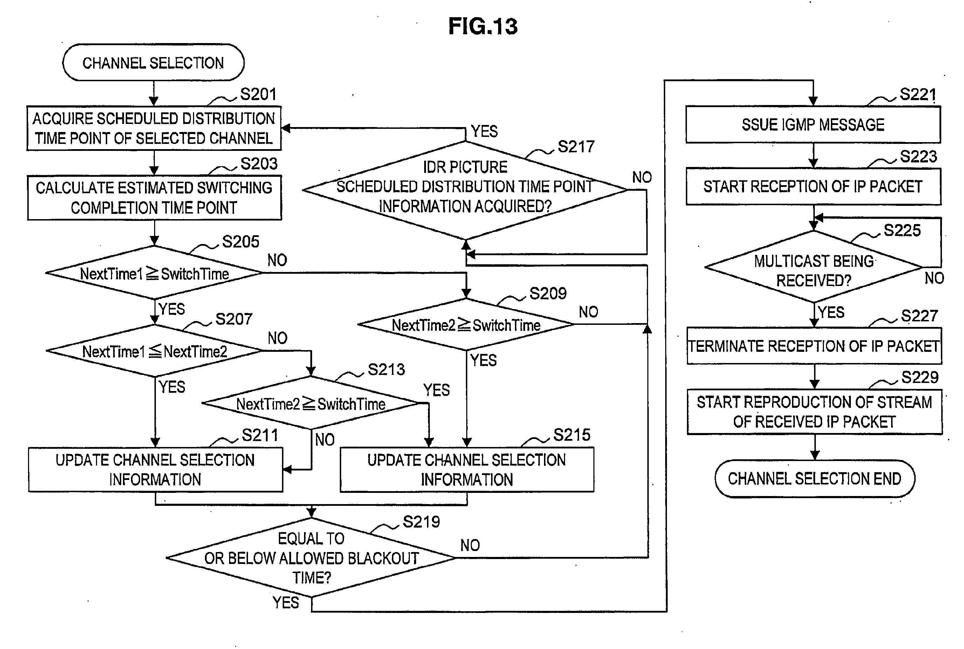

Subsequently, referring to FIG. 13, the channel selection process to be executed by the information processing apparatus 20 according to the present embodiment will be described in detail. FIG. 13 is a flow chart for describing the channel selection process of the information processing method according to the present example embodiment.

The acquisition stream selection section 205 that received a request from the content acquisition section 203 acquires channel information corresponding to parameter "SelectChan" from the latest IDR picture scheduled distribution time point information stored in the storage section 209 or the like (step S201).

More particularly, the acquisition stream selection section 205 first acquires the multicast address of a channel from the Broadcast Discovery Record. In the example shown in FIG. 9, when 1 is set in parameter "SelectChan", "<SingleService>" at the beginning is the corresponding channel information. As shown in FIG. 9, two multicast addresses are described in "<ServiceLocation>" of the channel information. In the example shown in FIG. 9, 224.0.1.1 is set in parameter "Address 1", and 224.0.1.2 is set in parameter "Address2".

Next, the acquisition stream selection section 205 searches for the scheduled distribution time point information of each multicast address in the latest IDR picture scheduled distribution time point information, and sets the IDR picture scheduled distribution time points to "NextTimel" and "NextTime2", respectively. Note that the distribution time point of an IDR picture is a time point of transmission from each distribution section of the content server 10, and, by nature, there is a delay until the MPEG2-TS packet at the beginning including the IDR picture reaches the information processing apparatus 20. Accordingly, when the delay time is large and cannot be ignored, in addition to the conditions of the network from the content server 10 to the information processing apparatus 20, the delay time should be added to "NextTimel" and "NextTime2" as appropriate.

Next, the acquisition stream selection section 205 calculates the estimated switching completion time point for the multicast distribution (step S203). The estimated switching completion time point is an estimated time until the first packet arrives from a multicast group that the information processing apparatus 20 newly joined in a case where the information processing apparatus 20 immediately issued an IGMP message to perform the start or switching of a distribution. The estimated switching completion time point "SwitchTime" can be obtained by adding the required switching time to the current time point. Here, the required switching time is the sum of the times indicated below.

(1) Time required by the information processing apparatus 20 to issue an IGMP message
(2) Required time until the IGMP message reaches an edge switch (for example, DSLAM) executing the function of an IGMP proxy.
(3) Required time until the edge switch stops the distribution of the packet of the multicast group being distributed to the access network to which the terminal is currently connected and starts the distribution of the packet of the multicast group to which the terminal newly joined.
(4) Required time until the first packet, the distribution of which is started by the edge switch, arrives at the information processing apparatus 20.
(5) Time required by the information processing apparatus 20 to receive and preserve the first packet.

The values of the above-described (1) to (5) depend on the capabilities of the network of the IPTV service and the information processing apparatus 20, and it is assumed that the maximum value of the required switching time compatible with the conditions of the information processing apparatus 20 or the network is set in the information processing apparatus 20 in advance. For example, the maximum value of the required switching time can be set to about 20 ms.

Further, when a plurality of information processing apparatuses 20 are connected to the subscriber's premise, the above-described (3) includes a time required for checking, at the time of stopping the packet distribution, whether other information processing apparatuses 20 participate in the same multicast group. Normally, as specified in RFC-3376, this checking is performed by periodical IGMP query messages. Further, when the plurality of information processing apparatuses 20 participate in separate multicast groups, that is, when different channels are being viewed on the plurality of information processing apparatuses 20, the access network needs a data bandwidth sufficient for transmitting the multicasts for the multiple channels. To guarantee network bandwidth, a Quality of Service (QoS) control, such as IP Multimedia Subsystem (IMS), for example, can be used.

Hereunder, from step S205 to step S221, the determination on which multicast address of the channel to be selected is to be selected and the determination of the timing of issuing an IGMP message for the start or switching of the distribution are made. The acquisition stream selection section 205 according to the present example embodiment performs the address selection and the timing determination based on the four conditions described below.

(A) When an IP packet including IDR picture cannot be received by estimated switching completion time point "SwitchTime", the multicast address of the IP packet is not selected.
(B) A multicast address from which an IP packet including IDR picture can be received earliest is selected. This condition enables a high-speed channel switching.
(C) When, as results of (A) and (B), selection is not performed, upon reception of the packet of the next IDR picture scheduled distribution time point information
(D) When selection is performed as results of (A) and (B), but the difference between the arrival time point of an IP packet including IDR picture and the estimated switching completion time point "SwitchTime" is great, the start or switching of the distribution is not performed, and process is carried out from step S201 upon reception of the next packet of the IDR picture scheduled distribution time point information.

The condition of the above-described (D) is set for the following reason. That is, even if the start or switching of a display is immediately performed, the content reproduction section 207 of the information processing apparatus 20 cannot extend a video until the reception of a packet is started and an IDR picture arrives. Accordingly, there occurs a period where there is no screen display (hereinafter, referred to as "blackout period"). The condition of (D) enables to shorten the blackout period. The blackout period is preferably made as short as possible for a seamless start or switching of video, but should be longer than the transmission cycle of the packet at the IDR picture scheduled distribution time point. Accordingly, the maximum value of the blackout period (hereinafter, referred to as "allowed blackout time") is preferably set to, for example, 40 ms.

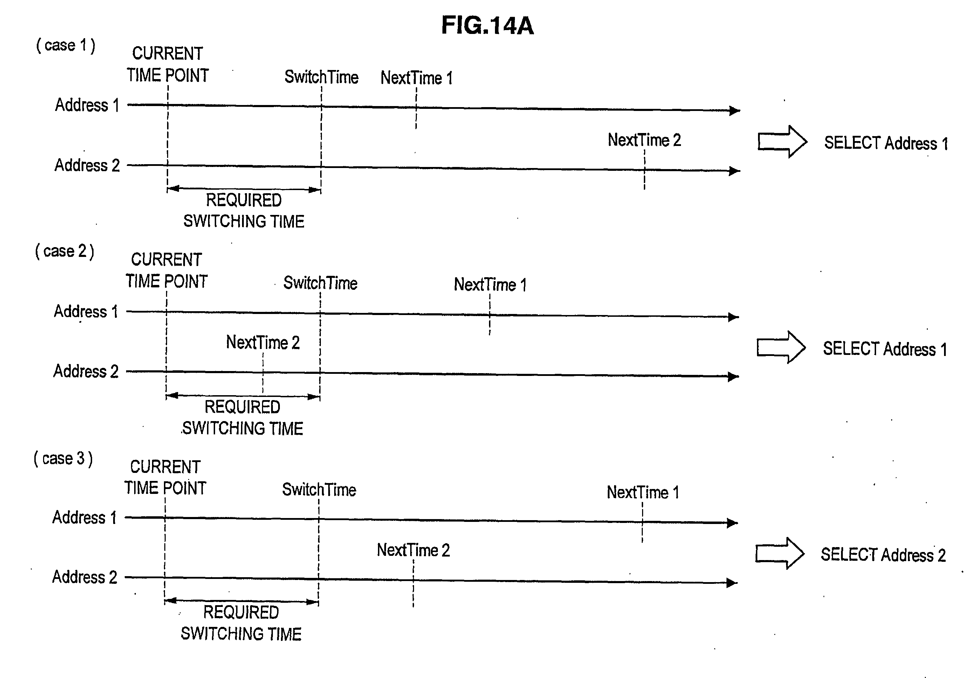

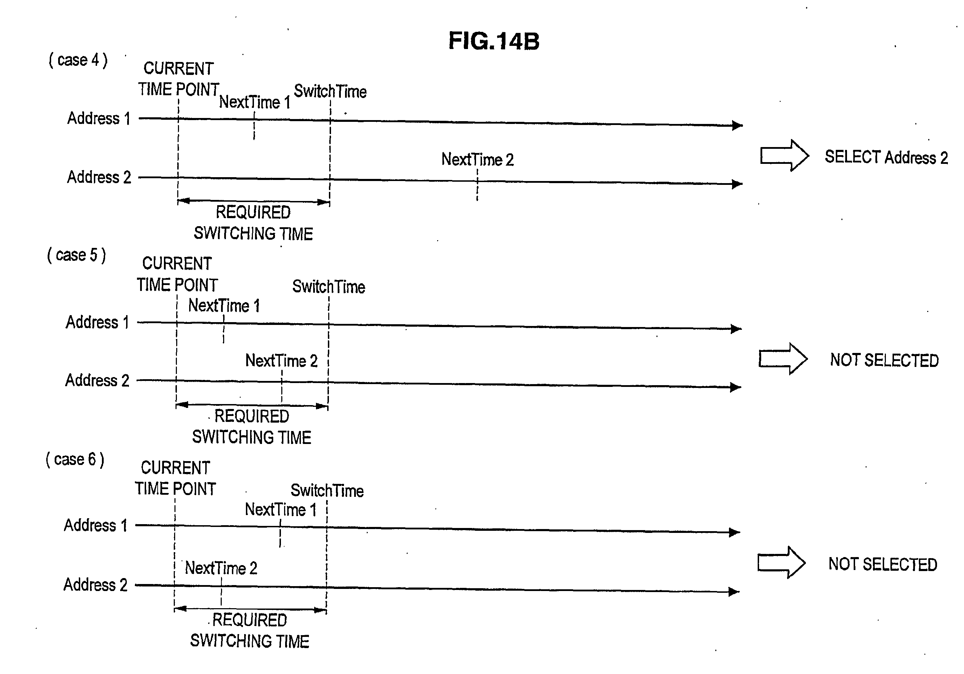

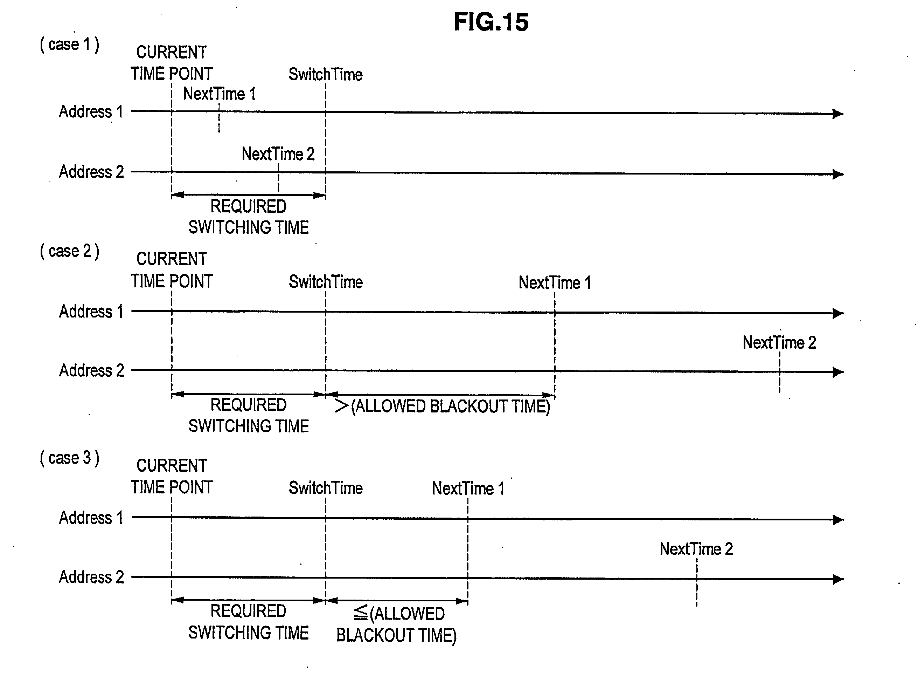

Hereunder, the conditions of the above-described (A) to (D) will be described with concrete examples. FIGS. 14A and 14B are explanatory diagrams for describing different cases for selection of the multicast address, and FIG. 15 is an explanatory diagram for describing different cases for start or switching timing.

First, referring to FIGS. 14A and 14B, the explanation is made on how the conditions of the above-described (A) to (C) are applied to the six concrete cases shown in the drawings.

Due to condition (A), in (case 2) shown in FIG. 14A, "Address1" is selected, and in (case 4), "Address2" is selected. Further, due to condition (A), in (case 5) and (case 6) shown in FIG. 14B, the switching of multicast address is not performed. Accordingly, due to condition (C), process is carried out from step S201 upon reception of the next packet of the IDR picture scheduled distribution time point information.

Further, due to condition (B), in (case 1) shown in FIG. 14A, "Address1" is selected, and in (case 3), "Address2" is selected.

The determinations to be made based on the above-described conditions (A) to (C) correspond to step S205 to step 5217 in FIG. 13.

Here, when "Address1" is selected due to conditions (A) and (B), the following value is set as the channel selection information. That is, "Address1" is set in parameter "SelectAddr" indicating the selected multicast address, and "NextTime1" is set in parameter "NextTime" indicating the IDR picture scheduled distribution time point (step S211).

In the same manner, when "Address2" is selected due to conditions (A) and (B), the following value is set as the channel selection information. That is, "Address2" is set in parameter "SelectAddr" indicating the selected multicast address, and "NextTime2" is set in parameter "NextTime" indicating the IDR picture scheduled distribution time point (step S215).

Subsequently, referring to FIG. 15, the condition of the above-described (D) will be described with a concrete example. The decision based on the condition corresponds to step S219 shown in FIG. 13.

In (case 1) shown in FIG. 15, since neither of the multicast addresses is selected due to conditions (A) and (B), the switching of multicast address is not performed due to condition (C). Further, (case 2) shown in FIG. 15 is a case where the blackout time after the switching is greater than the allowed value (40 ms, for example), and the switching of multicast address is not performed due to condition (D). Further, in (case 3) shown in FIG. 15, since condition (D) is not met, the switching to the selected multicast address is performed.

When selection of the multicast address of the selected channel and determination of the timing are performed by the acquisition stream selection section 205 based on the decision based on the condition as described above, the channel selection result is transmitted from the acquisition stream selection section 205 to the content acquisition section 203. The content acquisition section 203 issues an IGMP message based on the channel section result, and performs distribution switching of a multicast packet to be distributed to the access network to which the information processing apparatus 20 is connected (step S221). The issuance of IGMP message is performed in the report format according to IGMP version 3 specified in RFC 3376 shown in FIGS. 11A and 11B.

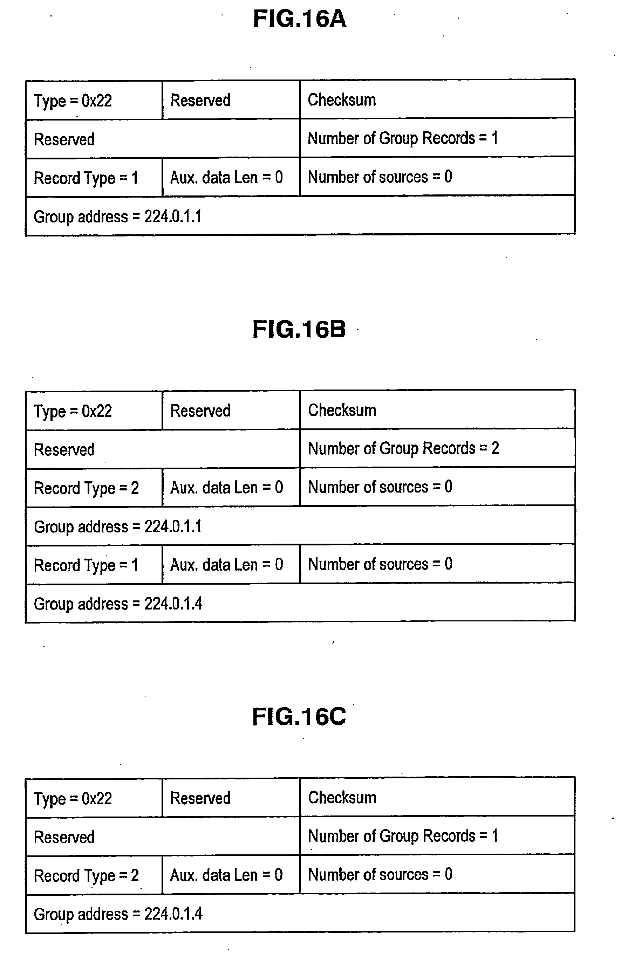

Examples of the IGMP packets are shown in FIGS. 16A to 16C. FIG. 16A shows a case where parameter "CurrentChan" is -1, that is, a case where there is no data corresponding to the multicast address that is already being distributed. FIG. 16A indicates that RecordType 1 (MODE IS INCLUDE) is specified to the multicast group of multicast address "SelectAddress" (224.0.1.1 in the example) of parameter "SelectChan" (1 in the example) to join the multicast address to start the multicast data distribution. FIG. 16B shows a case where parameter "CurrentChan" is other than -1, that is, a case where there is data corresponding to the multicast address that is already distributed. For example, RecordType=2 (MODE IS EXCLUDE) is specified to the multicast group of "CurrentAddress" (224.0.1.0 in the example) of "CurrentChan" in the example) to instruct the stop of distribution, and RecordType=1 (MODE IS INCLUDE) is specified to the multicast group of multicast address "SelectAddress" (224.0.1.4 in the example) of "SelectChannel" (2 in the example) to instruct the start of multicast.

According to IMGP version 3, as shown in FIG. 16B, instructions can be collectively performed by one IGMP packet, and thus, there is the merit that implementation where multicast addresses are not redundantly distributed to the access network at the time of switching is possible.

Thereby, the content acquisition section 203 starts the reception of the multicast packet of a "SelectAddress" (step S223).

Until the switching of distribution is completed, the content acquisition section 203 needs to be on standby during the maximum required switching time, and thus, when a multicast packet is not being received, the content acquisition section 203 will be on standby (step S225). When there is a possibility of an IGMP packet being lost in the network, multiple packets may be transmitted in step S221, or a process of retransmitting the IGMP packet may be performed by providing a timeout or the like in step S225.

As a result of the standby in step S225, the distribution switching of multicast is already completed after the standby, and thus, when a channel that was previously selected exists, the content acquisition section 203 terminates the reception of the multicast packet of the corresponding "CurrentAddress" (step S227).

Then, the content acquisition section 203 transmits the received multicast packet to the content reproduction section 207, and the content reproduction section 207 starts the reproduction of the MPEG2-TS stored in the multicast packet of a channel that is newly being received (S229). In reality, a video is displayed on the display (not shown) of the information processing apparatus 20 after the MPEG2-TS packet including IDR picture is received. In this manner, the selection process for a channel is completed, and the viewing of the IPTV television continues.

(Channel Reception Termination Process)

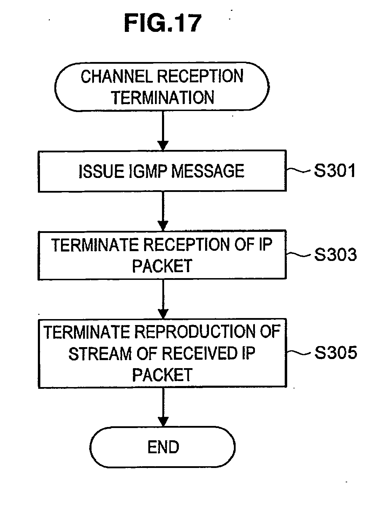

Subsequently, referring to FIG. 17, a process of channel reception termination to be executed by the information processing apparatus 20 will be described in detail.

First, the content acquisition section 203 stops the reception of a multicast packet currently being received. The reception of a multicast packet can be stopped by transmitting the IGMP report message as shown in FIG. 16C (step S301). As shown in FIG. 16C, by specifying RecordType=2 (MODE_IS_EXCLUDE) to the multicast group of parameter "CurrentAddress" (224.0.1.4 in the example) and by transmitting the IGMP message, the content acquisition section 203 can stop the multicast packet distribution.

Next, the content acquisition section 203 terminates the reception of the multicast (step S303). Then, the content reproduction section 207 terminates the reproduction of the MPEG2-TS stream (step S305). By performing the processes, the process of channel reception termination is completed.

Heretofore, a high-speed channel switching in the IPTV system according to the present example embodiment has been described. According to the present example embodiment, an embodiment other than the above-described example embodiment can easily be conceived. For example, other example embodiments as described below can be conceived.

According to the example embodiment according to the present invention, to stop the channel switching or to change a selected channel based on an interruption by a user operation during the channel switching process, a discontinuation process can be easily implemented during the selection process shown in FIG. 13.

Further, the example embodiment according to the present invention has been describing a case of H.264/AVC. However, even if MPEG2 video compression is used, by assuming that the IDR picture is an I picture, the present invention can be easily applied to the IPTV system using MPEG2 video compression.

Further, according to the example embodiment according to the present invention, compressed video data and audio data are multiplexed by MPEG2-TS. However, also in a case where compressed video and audio data are distributed in separate IP packets, by applying the present invention, an IPTV system realizing a high-speed channel switching by switching the IP packet distributions can be easily realized.

Further, according to the example embodiment according to the present invention, compressed video data and audio data of only one video/audio signal are multiplexed by MPEG2-TS and stored in an IP packet, and the switching of distribution is performed. However, by multiplexing the compressed video data and audio data of multiple video/audio signals with MPEG2-TS and distributing the same, and by filtering and acquiring only the compressed video/audio packets corresponding to the selected video/audio signal in a network path to the information processing apparatus 20 and by transmitting the same, an IPTV system realizing a high-speed channel switching similar to that of the present example embodiment can be easily realized.

Further, according to the example embodiment according to the present invention, the IDR picture scheduled distribution time point information is transmitted to the information processing apparatus 20, which is a terminal, for only the IDR picture that is to be transmitted next. Here, it is self-evident that, if scheduled distribution time points for multiple IDR pictures are specified in the IDR picture scheduled distribution time point record to be transmitted, the information processing apparatus 20 can perform the selection of multicast address more precisely at the time of channel selection.

Further, by using the function of IMGP version 3 and switching the distribution of multicast groups by one IGMP packet, the example embodiment according to the present invention prevents the redundant distribution of packets to the access network during switching and limits the data bandwidth to be used by the IPTV system in the access network. However, even when IGMP version 2 is used, also by performing the process of leaving the multicast group and joining, after the distribution is stopped, a multicast group to be switched to, the data bandwidth to be used by the IPTV system can be limited.

Further, according to the example embodiment according to the present invention, the content server 10 encodes the multiple MPEG2-TS streams of each channel and distributes the same via the core network. Here, in an environment where there is a limit on the bandwidth of the core network, the following can also be performed. That is, the content server 10 distributes through the core network one encoded packet for each channel, and arranges another content server, such as an edge server or an edge router, in the middle of the distribution network such an the access network. The another content server generates, for the received MPEG2-TS stream, an MPEG2-TS stream with different IDR picture distribution timing based on the video/audio signal, and distributes the same. In such a manner, the bandwidth of the core network can be limited, and, at the same time, a high-speed channel switching similar to that of the IPVE system described by the present example embodiment can be realized.

Further, according to the example embodiment according to the present invention, the IDR picture scheduled distribution time point information is transmitted to the information processing apparatus 20, which is a terminal, and the information processing apparatus 20 selects the multicast address of a channel and determines the timing of switching of the multicast packet to be transmitted. Here, the IDR picture scheduled distribution time point information is made to be transmitted to an edge switch or an edge router that performs IGMP snooping and that actually carries out the distribution switching, and the information processing apparatus 20 immediately performs a multicast distribution switching instruction when the channel selection process is started. The edge switch or the edge router that received the instruction may control, by using the IDR picture scheduled distribution time point information, the selection of multicast address and the distribution switching timing by making a determination in a similar manner to the channel selection process by the information processing apparatus as shown in FIG. 13.

In this case, a network device such as the edge switch or the edge router has a processing section (for example, the content acquisition section and the acquisition stream selection section) having a function similar to that of each processing section provided in the information processing apparatus 20 as shown in FIG. 3, and, preferably, further includes a distribution control section that distributes an acquired compressed data stream to the information processing apparatus 20 via a predetermined network. A network device having such a processing section can function as an edge server.

<Hardware Configuration>

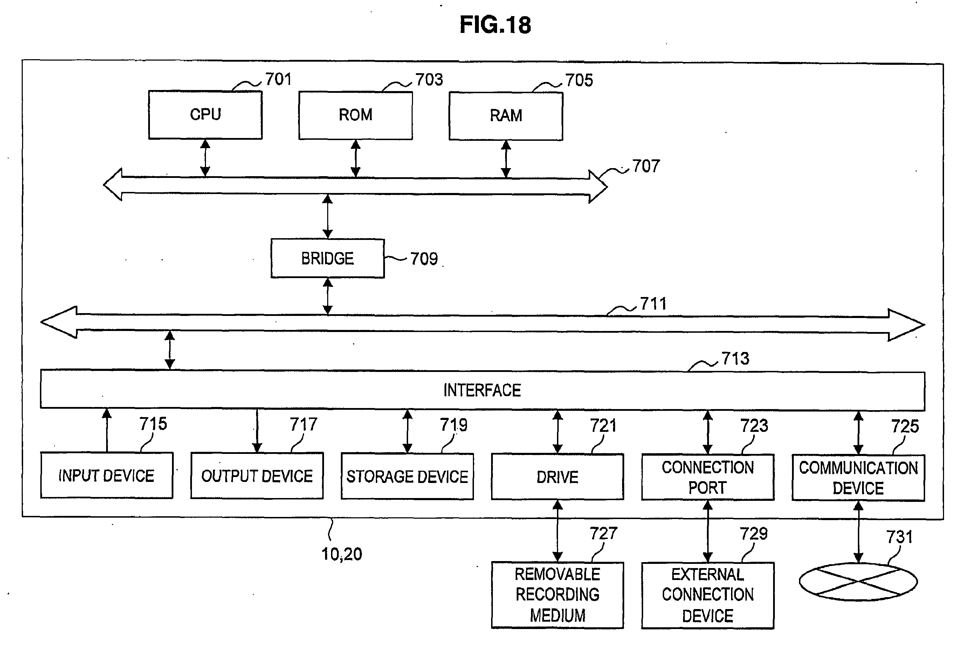

Next, referring to FIG. 18, a hardware configuration of the content server 10 and the information processing apparatus 20 according to the present example embodiment will be described in detail. FIG. 18 is a block diagram for describing the hardware configuration of the content server 10 and the information processing apparatus 20 according to the present example embodiment.

The content server 10 and the information processing apparatus 20 mainly include a CPU 701, a ROM 703, a RAM 705, a host bus 707, a bridge 709, an external bus 711, an interface 713, an input device 715, an output device 717, a storage device 719, a drive 721, a connection port 723, and a communication device 725.

The CPU 701 functions as an arithmetic operation processing unit and control unit, and controls the entire operations of the content server 10 and the information processing apparatus 20 or part thereof according to various programs stored in the ROM 703, RAM 705, storage device 719 or removable recording medium 727. The ROM 703 stores a program or arithmetic operation parameters to be used by the CPU 701. The RAM 705 temporarily stores a program to be used by the CPU 701 in its execution, parameters that change appropriately in the execution of the program, or the like. These are interconnected through the host bus 707 configured from an internal bus such as a CPU bus.

The host bus 707 is connected to the external bus 711 such as a peripheral component interconnect/interface (PCI) bus through the bridge 709.

The input device 715 is an operation unit to be operated by a user, such as a mouse, a keyboard, a touch panel, a button, a switch, a lever, or the like. Further, the input device 715 may be, for example, a remote control unit (so-called remote control) using infrared ray or other electric wave or an external connection device 729 such as a mobile phone or a PDA compatible with the operations of the content server 10 and the information processing apparatus 20. Further, the input device 715 is configured from an input control circuit or the like that generates an input signal based on information inputted by user using the above-described operation unit, for example, and outputs the outputs the input signal to the CPU 701. The user of the content server 10 or the information processing apparatus 20 can input various types of data to the content server 10 or the information processing apparatus 20 or issue an instruction for a processing operation by operating this input device 715.

The output device 717 is configured from, for example, a display device, such as a CRT display device, a liquid crystal display device, a plasma display device, an EL display device, a lamp or the like, an audio output device, such as speakers, a head phone or the like, or a device capable of notifying the user visually or aurally the acquired information, such as a printer device, a mobile phone, a facsimile or the like. The output device 717 outputs a result obtained by various processings performed by the content server 10 and the information processing apparatus 20. More specifically, the display device displays the result obtained by various processings performed by the content server 10 and the information processing apparatus 20 in the form of text or image. On the other hand, the audio output device converts audio signals composed of reproduced audio data, acoustic data or the like to analog signals and outputs the same.

The storage device 719 is a data storage device configured as an example of the storage section of the content server 10 and the information processing apparatus 20, and is configured from, for example, a magnetic memory device, such as a hard disk drive (HDD) or the like, a semiconductor storage device, an optical storage device, a magneto-optical storage device, or the like. The storage device 719 stores programs to be executed by the CPU 701 and various data, acoustic signal data and image signal data acquired from outside, and the like.

The drive 721 is a reader/writer for recording medium, and is built in or externally attached to the content server 10 and the information processing apparatus 20. The drive 721 reads out information stored in an attached removable recording medium 727 such as a magnetic disk, an optical disk, a magneto-optical disk, a semiconductor memory or the like and outputs the information to the RAM 705. Further, the drive 721 can write a record into the attached removable recording medium 727 such as the magnetic disk, the optical disk, the magneto-optical disk, the semiconductor memory or the like. The removable recording medium 727 is, for example, a DVD medium, an HD-DVD medium, a Blu-ray medium, a compact flash™ (CF), a memory stick, a secure digital memory card (SD memory card) or the like. Further, the removable recording medium 727 may be, for example, an integrated circuit card (IC card) loaded with a non- contact IC chip, an electronic device or the like.

The connection port 723 is a port for directly connecting a device to the content server 10 and the information processing apparatus 20, such as a universal serial bus (USB) port, an IEEE 1394 port such as i.Link, a small computer system interface (SCSI) port, a RS-232C port, an optical audio terminal, a high-definition multimedia interface (HDMI), or the like. By connecting the external connection device 729 to the connection port 723, the content server 10 and the information processing apparatus 20 acquire acoustic signal data or image signal data directly from the external connection device 729 or provide acoustic signal data or image signal data to the external connection device 729.

The communication device 725 is a communication interface configured from a communication device or the like for connecting to a communication network 731. The communication device 725 is, for example, a communication card for a wired or wireless local area network (LAN), a Bluetooth or a wireless USB (WUSB), a router for optical communication, a router for asymmetric digital subscriber line (ADSL), various communication modems, or the like. This communication device 725 can transmit/receive signal and the like to/from the Internet and other communication devices according to a predetermined protocol, such as TCP/IP, for example. Further the communication network 731 connected to the communication device 725 is configured from a network or the like connected in a wired or wireless manner, and, for example, the Internet, a home LAN, an infrared ray communication, a radio wave communication, a satellite communication or the like may be adopted.

Heretofore, an example of the hardware configuration, which can realize the functions of the content server 10 and the information processing apparatus 20 according to each example embodiment of the present invention has been described. Each of the above-described components may be configured by using a general-purpose member, or by specialized hardware for the function of each component. It is thereby possible to change the hardware configuration to be used as necessary according to the technique level when carrying out the present example embodiment.

Incidentally, the content server 10 according to the present example embodiment can also be provided as a program having functions as described below. This program is a program for causing a computer to execute the steps of encoding a video/audio content and generating multiple compressed data streams from the video/audio content, where the video/audio content is inputted in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and of distributing simultaneously each of the multiple compressed data streams that are generated.

The computer program is stored in a storage section included in a computer, and when a CPU included in the computer reads and executes the program, the program causes the computer to function as the above-described content server 10. Further, a recording medium that stores the computer program and that ca be read by the computer can also be provided. The recording medium is, for example, a magnetic disk, an optical disk, a magneto-optical disk, a flash memory, or the like. Further, the above-described computer program can be distributed via a network, for example, without using a recording medium.

Incidentally, the information processing apparatus 20 according to the present example embodiment can also be provided as a program having functions as described below. This program is a program for causing a computer to execute the steps of selecting a compressed data stream to be acquired among the distributed multiple compressed data streams generated from a video/audio content encoded in such a manner that the positions of video frames corresponding to reference compressed video data and the time points of distribution of the reference compressed video data are different for the respective multiple compressed data streams,, the reference compressed video data being data, in time series data generated by compressing a video signal, for which encoding of a subsequent video signal can be started without depending on previous data, and of acquiring the selected compressed data stream.

The computer program is stored in a storage section included in a computer, and when a CPU included in the computer reads and executes the program, the program causes the computer to function as the above-described information processing apparatus 20. Further, a recording medium that stores the computer program and that ca be read by the computer can also be provided. The recording medium is, for example, a magnetic disk, an optical disk, a magneto-optical disk, a flash memory, or the like. Further, the above-described computer program can be distributed via a network, for example, without using a recording medium.

As described above, according to at least preferred embodiments, even in an environment where there is a limit on the data bandwidth of the access network to an IPTV subscriber's premise, an IPTV system that is capable of providing a high quality video and that enables a high-speed channel switching can be realized without installing an expensive network device or a special content server in the vicinity of the access network.

Further, according to at least preferred embodiments, at the time of channel switching, a blackout period where no video is displayed or a time during which video of a channel before switching is displayed in a paused state can be minimized, and a seamless channel switching can be provided to the viewer.

Further, according to at least preferred embodiments, since a channel can be viewed regardless of which of the multicast streams assigned to respective channels is received, an IPTV system in which a terminal (an existing terminal) that does not select a multicast address coexists can be established.

<Content Distribution System>

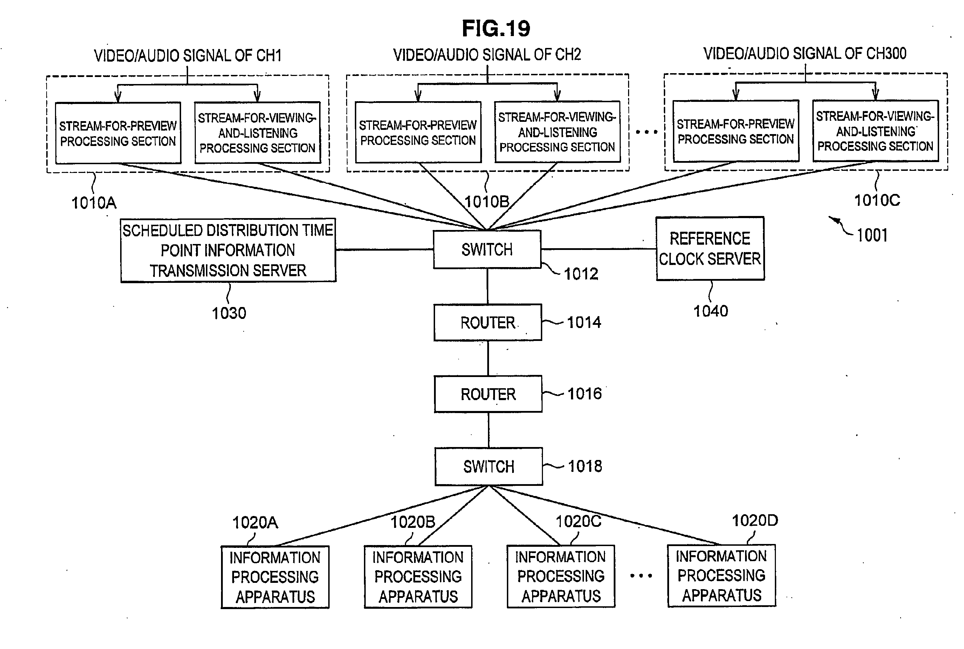

First, referring to FIG. 19, a content distribution system according to an example embodiment of the present invention will be described in detail. FIG. 19 is an explanatory diagram for describing the content distribution system according to an example embodiment of the present invention. Incidentally, in the following explanation, an explanation will be made with an IPTV system as an example of the content distribution system.

As shown in FIG. 19, for example, a content distribution system 1001 according to the present example embodiment mainly includes a plurality of content servers 1010A, 1010B and 1010C corresponding to respective channels, switches 1012 and 1018, routers 1014 and 1016, a plurality of information processing apparatuses 1020A, 1020B, 1020C and 1020D to be used by viewers, a scheduled distribution time point information transmission server 1030, and a reference clock server 1040.

The content server 1010 corresponds to the broadcasting station of each channel in the IPTV system, and encodes a video/audio content (video/audio signal) according to a predetermined method to make it a compressed data stream and multicast the same to an IP network by using a predetermined transmission protocol. In FIG. 19, only three content servers are shown. However, the content server 1010 exists as many as the number of channels in the IPTV system, for example, and where there are 300 channels in total, there are 300 content servers 1010 in the content distribution system 1001.

The switch 1012 is a communication device having a changing function (switching function) for a packet flowing through the core network. The switch 1018 is a communication device having a changing function for a packet flowing through the access network and is particularly called an edge switch because it exists in the vicinity of the core network. These switches 1012 and 1018 are set so as to determine the destination of a packet and relay the communication only to a specific third party.

The routers 1014 and 1016 are devices for relaying data such as a packet flowing through the network. These routers analyze a partial protocol, that is, the network layer or the transport layer of the so-called OSI reference model, and transfer the data. Further, the routers 1014 and 1016 have a path selection function of analyzing the address described in the network layer and determining through which path the data is to be transferred.

The information processing apparatus 1020 is a terminal to be used by the viewer of the content distribution system 1001, and acquires a content desired to be viewed and listened to among multiple video/audio contents distributed by respective content servers 1010 and reproduces the acquired content.

Incidentally, the content server 1010 and the information processing apparatus 1020 described above will be described again in detail in the following.

The scheduled distribution time point information transmission server 1030 receives each of reference compressed video data scheduled distribution time point information outputted from each content server 1010, and collects the reference compressed video data scheduled distribution time point information of all the content servers 10 existing in the content distribution system 1001. Further, the scheduled distribution time point information transmission server 1030 transmits the collected reference compressed video data scheduled distribution time point information to the information processing apparatus 1020 connected to the system at a predetermined time interval (for example, a cycle of 10 to 20 ms). Incidentally, the reference compressed video data scheduled distribution time point information described above will be described in detail in the following.

The reference clock server 1040 is a server having, for example, time point information source with accuracy of 1/10000 seconds, and synchronizes the internal clock of the content server 1010, the information processing apparatus 1020 or the like connected to the content distribution system 1001 with the time point information source of the reference clock server 1040 by using, for example, Network Time Protocol (NTP).

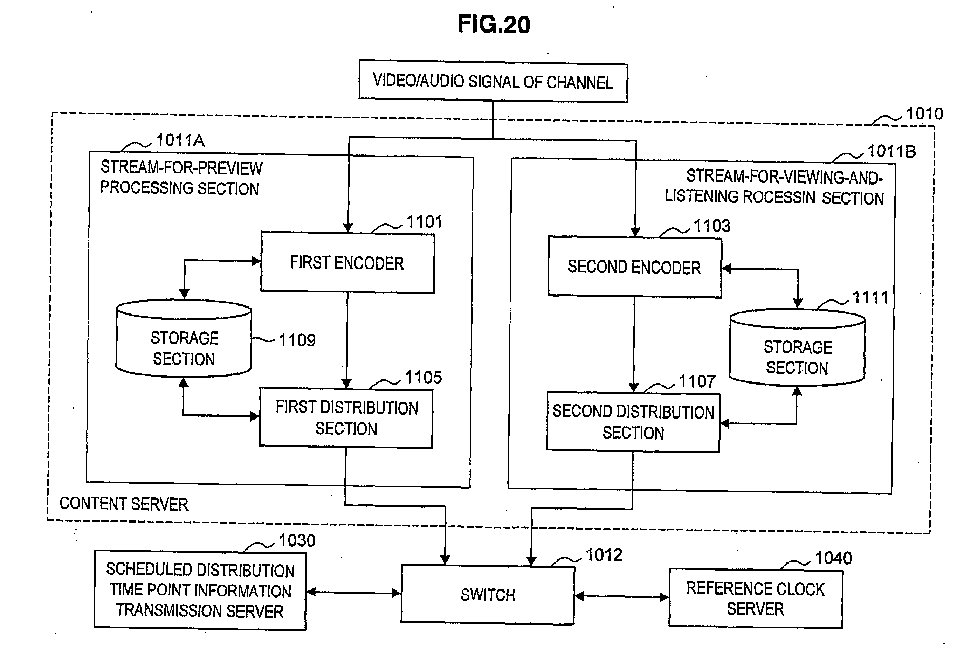

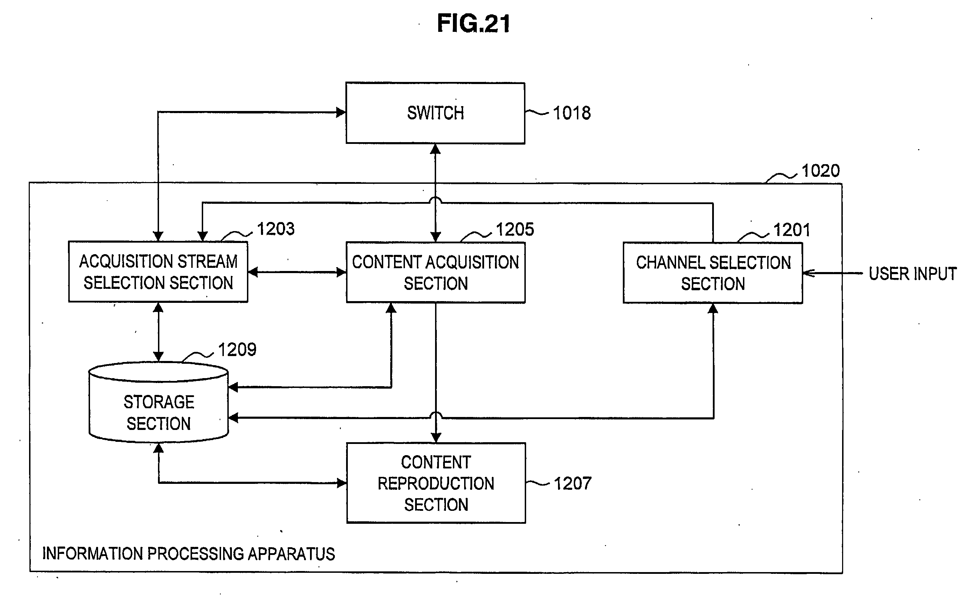

Heretofore, the content distribution system 1001 according to the present example embodiment has been described. Next, referring to FIGS. 20 and 21, the content server 1010 and the information processing apparatus 1020 according to the present example embodiment will be described in detail.

<Configuration of Content Server>

Next, referring to FIG. 20, the configuration of the content server 1010 according to the present example embodiment will be described in detail. FIG. 20 is a block diagram for describing the configuration of the content server 1010 according to the present example embodiment.

The content server 1010 according to the present example embodiment has its clock synchronizing with the reference clock server 1040 existing in the content distribution system 1001. The content server 1010 can synchronize the internal clock with the time of the reference clock server 1040 by using the NTP, for example, at an arbitrary timing such as when the server is started, when the administrator of the content server 1010 inputs a command for updating the internal clock, or the like.

Each of the processing sections of the content server 1010 according to the present example embodiment executes a predetermined process by referring to the current time of the internal clock synchronized with the reference clock server 1040.

As shown in FIG. 20, for example, the content server 1010 according to the present example embodiment includes a stream-for-preview processing section 1011A and a stream-for-viewing-and-listening processing section 1011B. A video/audio signal of a same channel is input to the stream-for-preview processing section 1011A and the stream-for-viewing-and-listening processing section 1011B, respectively.

As shown in FIG. 20, the stream-for-preview processing section 1011A mainly includes a first encoder 1101, a first distribution section 1105 and a storage section 1109, for example. Further, as shown in FIG. 2, the stream-for-viewing-and-listening processing section 1011B mainly includes a second encoder 1103, a second distribution section 1107 and a storage section 1111, for example.

As shown in FIG. 20, the stream-for-preview processing section 1011A and the stream-for-viewing-and-listening processing section 1011B are processing sections including at least one set of an encoder and a distribution section where each of the encoders and each of the distribution sections function independent of each other.

The first encoder 1101 and the second encoder 1103 are configured from a central processing unit (CPU), a read only memory (ROM) and a random access memory, for example. Of the inputted video/audio signal, the first encoder 1101 and the second encoder 1103 encode the video signal in real time by using, for example, H.264/AVC, and also, encode the audio signal in real time by using a high-efficiency coding technique such as HE-AAC or the like. Subsequently, after multiplexing each of the encoded signals to an MPEG2-TS format, the first encoder 1101 transmits the same as a first compressed data stream. Further, after multiplexing each of the encoded signals to an MPEG2-TS format, the second encoder 1103 transmits the same as a second compressed data stream.

Here, the first encoder 1101 encodes the video/audio signal of a channel and generates a compressed video data stream in such a manner that the frequency of appearance of reference compressed video data is made as often as possible in a data bandwidth range per channel reserved for transmitting data by decreasing the picture number per second. At this time, the compressed video data stream generated by the first encoder 1101 is configured only from the reference compressed video data. The first compressed data stream including the compressed video data stream generated in such a manner is used as a data stream for high-speed preview.

Further, the second encoder 1103 encodes the video/audio signal of the channel and generates a compressed video data stream in such a manner that the picture number corresponds to the frame rate of the inputted video/audio signal (for example, where the interlace is set to 60Hz, the picture number is 30 per second) and that the video image quality is as high as possible in the data bandwidth range reserved in a distribution network. At this time, the compressed video data stream generated by the second encoder 1103 is configured from the reference compressed data and compressed video data generated by using the reference compressed video data. The second compressed data stream including the compressed video data stream generated in such a manner is used as a data stream for channel viewing.

Here, the reference compressed video data is compressed video data that can be decoded to video data without referring to compressed video data temporally before the video data. Example of the reference compressed video data includes, for example, an instantaneous decoder refresh (IDR) picture in H.264/AVC or an Intra picture (I picture) in MPEG2 video.

Further, the compressed video data generated by using the reference compressed video data is compressed video data that is encoded by using a motion compensated interframe prediction and that is configured from data indicating only the difference from the reference compressed video data. Examples of the compressed video data generated by using the reference compressed video data includes a predictive picture (P-picture) and a bi-predictive picture (B-picture).

Incidentally, at the time of encoding the video/audio signal, the first encoder 1101 and the second encoder 1103 can respectively refer to various data bases stored in the storage section 1109 and the storage section 1111 described later. Further, the first encoder 1101 and the second encoder 1103 may also respectively store the generated compressed data stream in the storage section 1109 and the storage section 1111.

The first distribution section 1105 and the second distribution section 1107 are configured from a CPU, a ROM, a RAM, a communication device, and the like, for example, and have the function of a so-called Real-time Transport Protocol (RTP) server. The first distribution section 1105 and the second distribution section 1107 respectively store the MPEG2-TS packets generated by the first encoder 1101 and the second encoder 1103 in IP multicast packets after storing them in the RTP packets and in the UDP packets, and transmit the same. These IP packets are distributed by the IP network via the switch 1012 or the like, for example.

Further, the first distribution section 1105 and the second distribution section 1107 calculate scheduled distribution time points, which are when the reference compressed video data generated by the first encoder 1101 and the second encoder 1103 are to be distributed, and periodically generate reference compressed video data scheduled distribution time point information (hereinafter, abbreviated as "scheduled distribution time point information") in which the scheduled distribution time points are described. The calculation method for the scheduled distribution time point will be described again in detail in the following.

The first distribution section 1105 and the second distribution section 1107 periodically output the scheduled distribution time point information that each generated to the scheduled distribution time point information transmission server 1030. Further, the first distribution section 1105 and the second distribution section 1107 may respectively store the generated scheduled distribution time point information in the storage section 1109 and the storage section 1111.

The storage section 1109 is stored as appropriate various parameters which became necessary to be preserved at the time of the stream-for-preview processing section 1011A according to present embodiment performing a process, the progress of the process, or the like, or various databases or the like. The first encoder 1101, the first distribution section 1105, and the like, can freely read from or write in the storage section 1109.

In the same manner, the storage section 1111 is stored as appropriate various parameters which became necessary to be preserved at the time of the stream-for-viewing-and-listening processing section 1011B according to present example embodiment performing a process, the progress of the process, or the like, or various databases or the like. The second encoder 1103, the second distribution section 1107, and the like, can freely read from or write in the storage section 1111.

Further, the stream-for-preview processing section 1011A and the stream-for-viewing-and-listening processing section 1011B may be provided within the case of one content server. Further, the stream-for-preview processing section 1011A and the stream-for-viewing-and-listening processing section 1011B may be independent devices, and these devices may be connected in parallel.

Heretofore, an example of the function of the content server 1010 according to the present example embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present example embodiment.

<Configuration of Information Processing Apparatus>

Subsequently, referring to FIG. 21, a configuration of the information processing apparatus 1020 according to the present example embodiment will be described in detail. FIG. 21 is a block diagram for describing a configuration of the information processing apparatus 1020 according to the present example embodiment.

The information processing apparatus 1020 according to the present example embodiment has its clock synchronizing with the reference clock server 1040 existing in the content distribution system 1001. The information processing apparatus 1020 can synchronize the internal clock with the time of the reference clock server 1040 by using the NTP, for example, at an arbitrary timing such as when the apparatus is started, when the user of the information processing apparatus 1020 inputs a command for updating the internal clock, or the like.

As shown in FIG. 21, for example, the information processing apparatus 1020 according to the present example embodiment mainly includes a channel selection section 1201, an acquisition stream selection section 1203, a content acquisition section 1205, a content reproduction section 1207, and a storage section 1209.

The channel selection section 1201 is configured from a CPU, a ROM, a RAM, and the like, for example. When the user selects a specific channel among multiple channels being distributed by operating an operation section, such as a channel selection switch, a channel selection button or the like provided on the information processing apparatus 1020, or a remote control, or the like, the channel selection section 1201 converts the input by the channel selection switch, the channel selection button or the like into a predetermined signal. Further, the channel selection section 1201 outputs the predetermined signal acquired by converting the user input to the acquisition stream selection section 1203 described later.

The acquisition stream selection section 1203 is configured from a CPU, a ROM, a RAM, a communication device, and the like, for example, and executes the process as described in the following by referring to the current time of the internal clock synchronized with the reference clock server 1040.

When the acquisition stream selection section 1203 is specified a channel by the channel selection section 1201, the acquisition stream selection section 1203 notifies the content acquisition section 1205 described later to acquire the compressed data stream for viewing and listening distributed by the specified channel. Further, when the viewer starts channel zapping at a certain timing and a different channel is specified by the channel selection section 1201, the content acquisition section 1205 described later is notified to acquire the compressed data stream for preview distributed by the corresponding channel. Then, when the viewer ends the channel zapping and a channel to be viewed is designated, the acquisition stream selection section 1203 notifies the content acquisition section 1205 described later to acquire the compressed data stream for viewing and listening distributed by the designated channel.

The acquisition stream selection section 1203 periodically receives from the scheduled distribution time point information transmission server 1030 the scheduled distribution time point information outputted from each of the content servers 1010 and collected by the scheduled distribution time point information transmission server 1030. The acquisition stream selection section 1203 determines, at the time of high-speed channel switching, by referring to the received scheduled distribution time point information, switching timing from the compressed data stream for preview to another compressed data stream for preview and timing of switching the compressed data stream for preview to the compressed data stream for viewing and listening.

More particularly, the acquisition stream selection section 1203 calculates, by using a required switching time required for acquiring the compressed data stream of the channel notified by the content selection section 1201 and for switching to the acquired compressed data stream and the time point when a selection process for the compressed data stream to be acquired was started, an estimated switching completion time point, which is when switching to the acquired compressed data stream is completed. Here, the above-described required switching time is a time required until the content being distributed in a new channel is displayed at the time of switching from the channel currently being displayed to a different channel. The acquisition stream selection section 1203 compares the calculated estimated switching completion time point and the scheduled distribution time point information acquired from the scheduled distribution time point information transmission server 1030, and notifies the content acquisition section 1205 of the switching to the data stream to be acquired so that the compressed data stream having a nearest scheduled distribution time point after the estimated switching completion time point can be received.

Incidentally, when performing these selection processes, the acquisition stream selection section 1203 can perform the processes by referring to various databases or the like stored in the storage section 1209 described later.

Further, when the time interval between the scheduled distribution time point and the estimated switching completion time point for the compressed data stream is equal to or below a predetermined threshold value, the acquisition stream selection section 1203 notifies the selection result to the content acquisition section 1205. Further, when the time interval exceeds the predetermined threshold value, the acquisition stream selection section 1203 executes again the selection process for the compressed data stream based on the scheduled distribution time point information newly transmitted from the scheduled distribution time point information transmission server 1030, and notifies the selection result to the content acquisition section 1205.

When there is a time interval exceeding the predetermined threshold value between the estimated switching completion time point and the scheduled distribution time point, even if display switching is performed based on the selection result of the acquisition stream selection section 1203, a display screen remains in a state of blackout where black color or the like is displayed on the screen. Accordingly, since the stream of the channel before switching is being successively acquired while waiting for the scheduled distribution time point information to be newly notified from the scheduled distribution time point information transmission server 1030, by successively displaying the video on the screen, selection process for the compressed data stream can be executed again without impairing the usability for the user.

The above-described selection method for the acquisition streams will be described again in detail in the following.

The content acquisition section 1205 is configured from a CPU, a ROM, a RAM, a communication device, and the like, for example, and acquires a content distributed by a channel corresponding to the selection result transmitted from the acquisition stream selection section 1203 among multiple channels being distributed. Since, in the content distribution system according to the present example embodiment, the compressed data stream for preview and the compressed data stream for viewing and listening are distributed for a content belonging to one channel, the content acquisition section 1205 acquires a compressed data stream based on the selection result notified from the acquisition stream selection section 1203.

Incidentally, at the time of acquiring the content, the content acquisition section 1205 can execute the acquisition process for the content by referring to various databases or the like stored in the storage section 209 described later.

The content reproduction section 1207 is configured from a CPU, a ROM, a RAM, and the like, for example, and reproduces the content acquired by the content acquisition section 1205 and displays the same on a display (not shown) provided in the information processing apparatus 1020. Here, the reproduction of a content includes reproducing a decoded content after the compressed data stream transmitted from the content acquisition section 1205 is decoded, and reproducing a content along with the decoding of the compressed data stream. The content reproduction section 1207 can refer to the databases or the like stored in the storage section 1209 described later at the time of decoding the content or reproducing the content.

The storage section 1209 is stored as appropriate various parameters which became necessary to be preserved at the time of the information processing apparatus 1020 according to present example embodiment performing a process, the progress of the process, or the like, or various databases or the like. The channel selection section 1201, the acquisition stream selection section 1203, the content acquisition section 1205, the content reproduction section 1207, and the like, can freely read from or write in the storage section 1209.

Heretofore, an example of the function of the information processing apparatus 1020 according to the present example embodiment has been shown. Each of the above-described components may be configured by using a general-purpose member or circuit, or may be configured by using specialized hardware for the function of each component. Further, a CPU or the like may perform all of the functions of the components. It is thereby possible to change the hardware configuration to be used as necessary according to the technique level when carrying out the present example embodiment.

<Content Distribution Method>

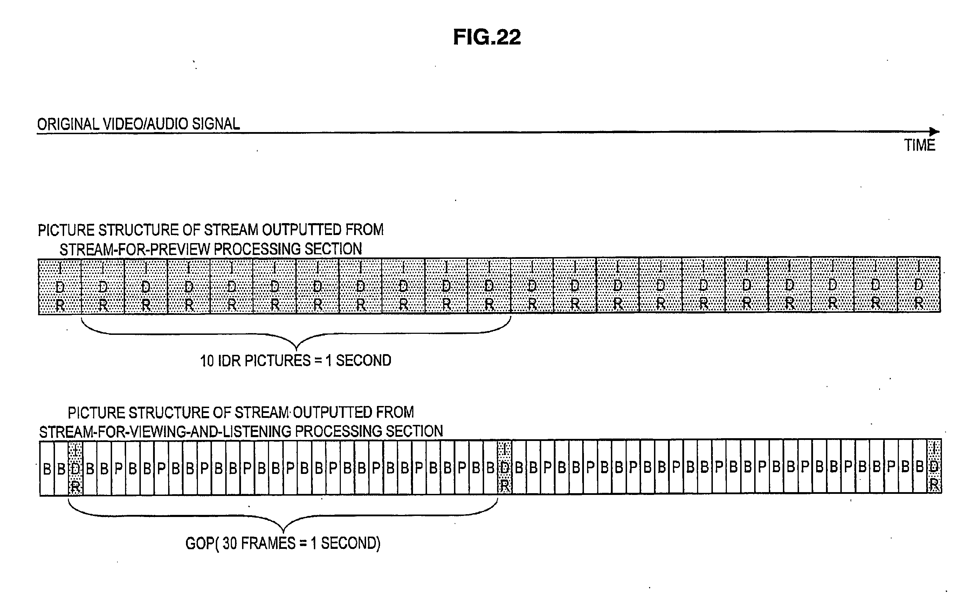

Subsequently, referring to FIGS. 22 to 30, a content distribution method to be executed by the content server 1010 according to the present example embodiment will be described in detail.

(Picture Structure of Compressed Video Data Stream)

FIG. 22 is an explanatory diagram for describing picture structures of the compressed video data streams outputted from the stream-for-preview processing section 1011A and the stream-for-viewing-and-listening processing section 1011B. In the following, an explanation will be made with an IPTV system as an example, the IPTV system reserving a bandwidth of 8 megabits per second in the access network and distributing the original signal at a high definition resolution (1920x1024) where 60 frames are interlaced per second.

In this system, a bandwidth of about 7 megabits is allocated to an MPEG video stream per second, for example. When encoding by H.264/AVC, 30 MPEG pictures are encoded per second as shown by the picture structure of the data stream for content viewing of FIG. 22. Incidentally, in this specification, according to the description of the Group of Picture (GOP) of the MPEG2 video, a group of multiple pictures including the IDR picture at the beginning will be expressed as GOP.

Although the appearance patterns of the IDR pictures, P-pictures and B-pictures can be flexibly changed, for the second encoder 1103 according to the present embodiment, the GOP is set to be 30 pictures per second and the P-pictures and B-pictures are also encoded at a fixed pattern. Here, the proportion of the data amount to be allocated is different for the IDR pictures, P-pictures and B-pictures, and the data amount is set to be 3:2:1. However, in FIG. 22, for the sake of convenience, the size of each picture is not proportional to the data amount and the pictures are shown with a fixed size.

On the other hand, as shown in FIG. 22, the compressed data stream for channel preview outputted from the stream-for-preview processing section 1011A according to the present example embodiment is configured only from the IDR pictures. The IDR picture configuring the compressed data stream for preview is encoded by the first encoder 1101 so as to have the same resolution and equal quality as those of a data stream outputted from the stream-for-viewing-and-listening processing section 1011B. The compressed data stream generated in this manner is configured from 10 IDR pictures per second as shown in FIG. 22, for example. Here, the first encoder 1101 performs the encoding so that the data amount of the IDR pictures is fixed. At the time of the first distributing section 1105 storing the MPEG2-TS packet in the RTP and UDP packets, the UDP packets are shaped so that the interval between the UDP packets are almost equal as described later, and then, the UDP packets are distributed in the network. Thus, in a case where the information processing apparatus 1020 receives the compressed data stream for preview, a timing for starting the reception of the IDR pictures can be realized about every 100 ms.

(UDP Packet Format)

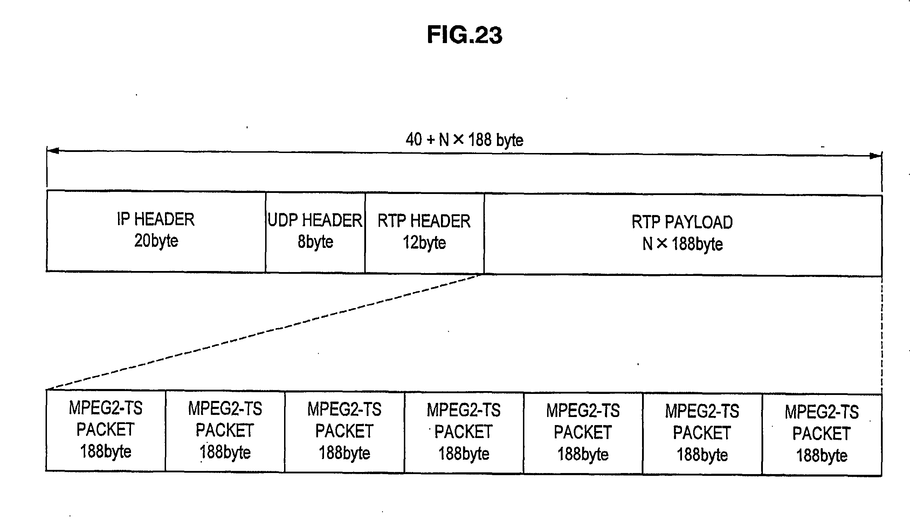

FIG. 23 is an explanatory diagram for describing a format of the UDP packets to be transmitted from the distribution sections 1105 and 1107 to the present example embodiment. The MPEG2-TS packet generated by each of the encoders 1101 and 1103 provided in the content server 1010 is outputted to the distribution section provided in the processing section to which each of the encoders belong, and the MPEG2-TS packet is transmitted as an IP packet. The IP packet has a format as shown in FIG. 23, for example.

As shown in FIG. 23, the UDP packet of the IP multicast is configured from an IP header, a UDP header, a RTP header and a RTP payload. The MPEG2-TS packet generated by each of the encoders 1101 and 13 of the content server 1010 is stored in the RTP payload. Normally, as shown in FIG. 23, seven MPEG2-TS packets are stored in the RTP payload.

Each of the distribution sections 1105 and 1107 of the content server 1010 generates the UDP packet as shown in FIG. 23 and multicasts the same.

Here, when seven MPEG2-TS packets are stored as shown in FIG. 23, one UDP packet is about 1356 bytes. Here, when transmitting a stream by using the maximum bandwidth, that is, 8 megabits per second, in the access network, about 737 UDP packets are transmitted per second, and an IDR picture is divided into about 74 UDP packets. Since the UDP packets are transmitted after a shaping process described later is performed, the UDP packets are transmitted at an interval of average 1.3 ms.

(Distribution of Compressed Data Stream for Preview)

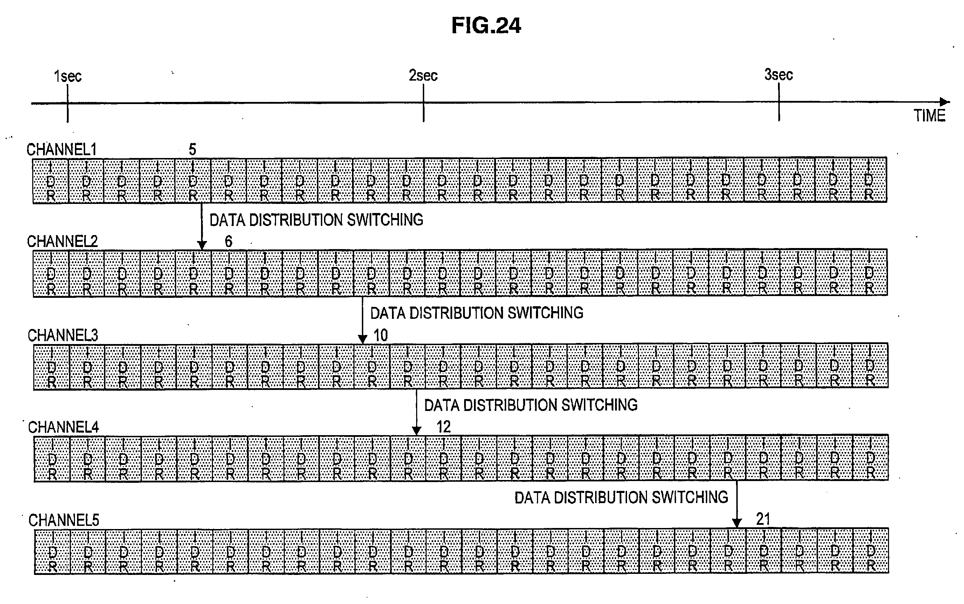

Subsequently, referring to FIG. 24, a method for previewing multiple channels at high speed by using a stream for preview of each channel will be described. FIG. 24 is an explanatory diagram for describing the compressed data stream for preview according to the present example embodiment.

For example, when a channel preview operation is started by the operation of a viewer, it is fully possible for the viewer to recognize the title or the genre (for example, news, drama, appearing cast, or the like) of a program being broadcast in the channel, the degree of excitement in the program (for example, the degree of excitement in a sports program), or the like, by viewing, for example, about 1 to 3 video frames (channel video of about 0.1 to 0.3 seconds in time) for each channel. Thus, the viewer usually performs the switching of channels being previewed by keep pressing a preview button of a remote control or the like. At the time of the channel switching, the information processing apparatus 1020 preferably receives the UDP packets of both of the streams of the channels before switching and after switching without missing any UDP packets.

Here, a case is assumed where ten IDR pictures are distributed per second in the compressed data stream for preview distributed from each channel as shown in FIG.24. The information processing apparatus 1020 preferably receives a UDP packet in a manner described below to provide seamless video switching to the viewer. That is, at the time of switching the distribution from the stream of channel 1 to the stream of channel 2, for example, the information processing apparatus 1020 receives all the UDP packets storing the fifth IDR picture of channel 1 and receives all the UDP packets storing the sixth IDR picture of channel 2. Receiving the UDP packets in such a manner allows the information processing apparatus 1020 to switch videos seamlessly. To achieve this, the switching of the streams between channel 1 and channel 2 distributed to the information processing apparatus 1020 via the network should be performed within about 1.3 ms.

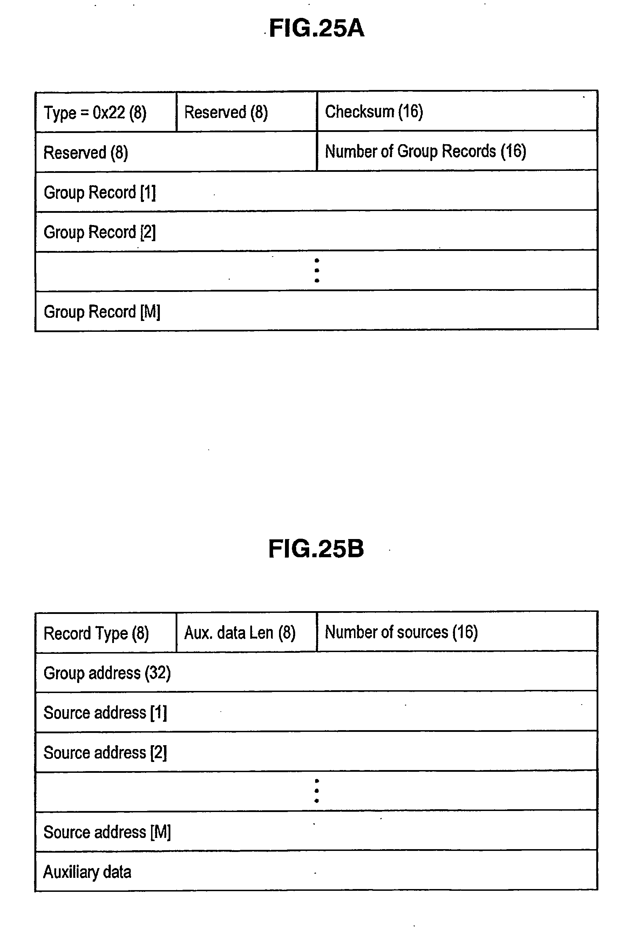

Such a stream switching is performed by the information processing apparatus 1020, which is a terminal, issuing an IGMP message. FIGS. 25A and 25B are explanatory diagrams for describing a format of an IGMP message. FIGS. 25A and 25B show formats of IGMP messages, according to IGMP version 3 specified in RFC 3376, for the information processing apparatus 1020 to perform a multicast data distribution control.

When joining or leaving a multicast group, the information processing apparatus 1020 uses an IGMP message in a report format as shown in FIG. 25A. Additionally, there is also an IGMP message in a query format for checking that a multicast router is participating in the multicast group. A detailed explanation of the specification of these IGMPs will be omitted.

As shown in FIG. 25A, the IGMP message in a report format has the number of records included in the report stated in "Number of Group Records" column, and has "Group Record" for the number of the stated records subsequently described in the IGMP message. FIG. 25B shows a format of each group record. As shown in FIG. 25B, "Record Type" column exists in the format of the group record, and by inputting a predetermined value in the column, the joining in or leaving from the multicast group can be specified.

However, switching of multicast distribution by the IGMP normally takes about 50 to 100 ms, for example. Even when adopting a method that uses the function of IGMP version 3 as described above and performs the joining to or leaving from the multicast group by one IGMP report message, and the distribution switching process by an edge switch (for example, DSLAM) performing IGMP snooping is speeded up, the switching of distribution takes about several tens of milliseconds. Thus, it is technically difficult to perform the switching of multicast distribution in less than 1.3 ms as described above.

(Packet Shaping Process)

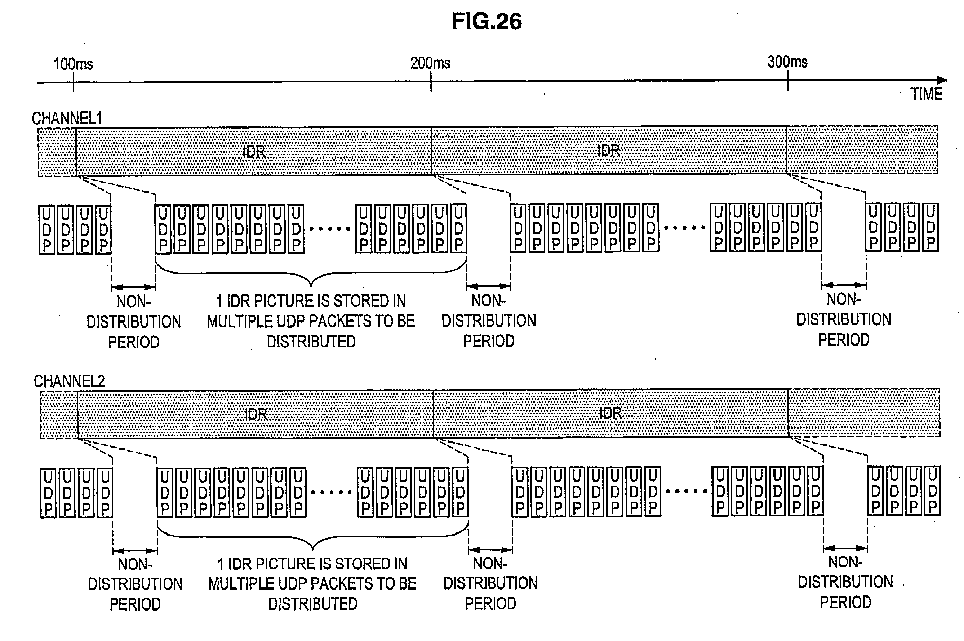

To solve the problem, each of the distribution sections of the content server 1010 according to the present example embodiment performs the shaping as shown in FIG. 26 at the time of distributing an MPEG stream. FIG. 26 is an explanatory diagram for describing the shaping process for a packet to be carried out by the content server according to the present example embodiment.

The first distribution section 1105 according to the present example embodiment collects the UDP packets storing MPEG2-TS packets including each IDR picture of a stream into a chunk, and shapes the stream so that the UDP packets are arranged at almost equal intervals within the chunk. Further, a non-distribution period where no UDP packet is distributed to the access network is provided between the chunks. That is, the compressed data stream generated by the first distribution section 1105 according to the present embodiment is configured from a period where the UDP packet is distributed (data distribution period) and a period where the UDP packet is not distributed (data non-distribution period), and data packets are distributed intermittently.

Further, to have the data non-distribution period that appears cyclically to appear at the same time point and for the same period as the data non-distribution period of a data stream for preview of another channel, the encoder of each content server 1010 encodes the video/audio content so that the temporal position where the IDR picture of each video/audio content appears is the same as with another content server 1010. This is made possible by setting the encoding so that ten IDR pictures per second appear at a fixed temporal position and the encoder adjusting the time point where the IDR pictures appear based on a reference clock, for example. Incidentally, this does not require an H. 264/264 encoder and an MPEG2 system clock for multiplexing to be synchronized with each other.

The time points where the IDR pictures of the compressed data streams for preview of respective content servers 1010 exist can be adjusted by the above-described method to be in accord with each other, and thus, by setting a data non-distribution period of a same length to each distribution section, a shaping can be realized in such a manner that the data non-distribution period for a packet to be distributed by each content server to occur at the same time point and within the same chunk.

Further, by performing the shaping on each compressed data stream for viewing and listening in the same manner, smooth switching to the stream for viewing and listening can be performed. In this case, the shaping is performed so that there is a data non-distribution period immediately before each IDR picture of the stream for viewing and listening and the data non-distribution period appears at the same time point and in the same period as with any of the data non-distribution periods of the compressed data for preview. If the encoding is set so that the compressed data stream for viewing and listening appears, for example, once per second in a fixed GOP, a shaping can be performed where the data non-distribution period of the data stream for viewing and listening appears at the same time as every tenth data non-distribution period of the compressed data stream for preview.

The data non-distribution period is used as a distribution switching time at the time of the information processing apparatus 1020, which is a terminal, performing the channel switching.

In the present example embodiment, the data of the IDR picture can be transmitted every 100 ms by making the data non-distribution period 20 ms, for example, and transmitting the UDP packets in the remaining 80 ms (that is, the data distribution period is made 80 ms). An MPEG2-TS packet including an IDR picture is configured from about 74 UDP packets, and thus, in this case, the UDP packets are transmitted at an interval of about 1 ms. At this time, since the total number of the UDP packets to be transmitted is the same as that of the past, the data bandwidth to be distributed to the access network remains the same. However, where a local shaping affects other traffics performing transmission to the same access network, the quality or the like of image/audio of a stream for preview may be reduced to be encoded. This can reduce the bit rate of an MPEG stream by about 6.1 megabits per second and make the number of UDP packets storing an MPEG2-TS packet including an IDR picture about 57, and a UDP packet interval same as that in a case where shaping is performed in a usual manner can be realized. As for video displayed during switching, such as the video for preview, the degradation of quality will cause no serious problem with regard to human senses.

(Calculation of Scheduled Distribution Time Point)

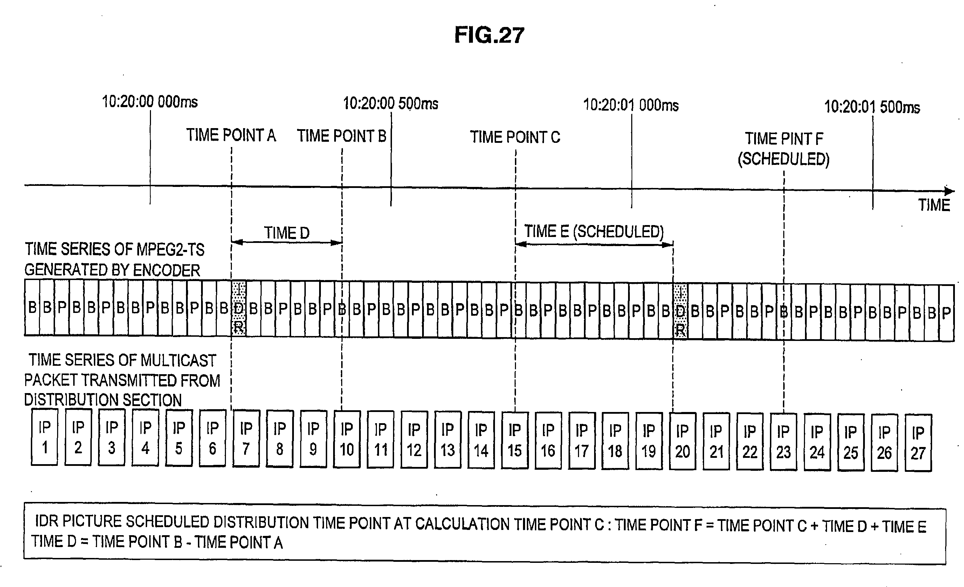

Next, referring to FIG. 27, a calculation method for the scheduled distribution time point to be carried out by each of the distribution sections provided in the content server 1010 according to the present example embodiment will be described in detail. The content server according to the present example embodiment calculates as the scheduled distribution time point, for each of the UDP packets transmitted from the stream-for-preview processing section 1011A and the stream-for-viewing-and-listening processing section 1011B, the scheduled time point where the UDP packet storing an MPEG2-TS packet at the beginning including an IDR picture is to be distributed. In the following, an explanation will be made in detail with the calculation method of the stream-for-viewing-and-listening processing section 1011B for the scheduled distribution time point as an example. FIG. 27 is an explanatory diagram for describing the calculation method for the scheduled distribution time point to be carried out by the content server according to the present example embodiment.

The second distribution section 1107 provided in the stream-for-viewing-and-listening processing section 1011B according to the present example embodiment performs the calculation of the scheduled distribution time point of the IDR picture. The calculation process is performed by using the following equation.

$$\text{IDR picture scheduled distribution time point at calculation time}$$

$$\text{point C : time point F = time point C + time D + time E}$$

$$...(\text{Equation } 1001)$$

Here, in the above-described Equation 1001, time D can be calculated by using time D = (time point B - time point A) as shown in FIG. 27. This time D can be taken as a delay time between the generation of the MPEG2-TS packet including data of the IDR picture generated by the second encoder 1103 and the transmission of the MPEG2-TS packet in an IP multicast packet.

Time point B shown in FIG. 27 is a generation time of a first MPEG2-TS packet including the data of the IDR packet, and time point A is a time point of transmission of the MPEG2-TS packet from the second distribution section 1107. This delay time D is, normally, almost constant, and thus, a value acquired by one measurement or a fixed value may be used. Or, it may be calculated for each transmission of the IDR picture.

The time E in FIG. 27 is a time taken from time point C until the generation of an MPEG2-TS packet including the first data of the next IDR picture. Time E is updated as time point C is passed, and inquiry should be made to the second encoder 1103 at the time of every measurement of the IDR picture scheduled distribution time point. Normally, in a real-time encoding, to shorten the delay due to encoding, the IDR picture scheduled distribution time point is a time estimated by the second encoder 1103. For example, when the second encoder 1103 is set to generate the IDR pictures at a fixed interval of one second, time E can be easily obtained. Even if that is not the case, it is fully possible to estimate time E based on encoder buffer management information that is generated by the encoder and stored in the storage section or the like. When an IDR packet that is not transmitted already exists at time point C, time E becomes a minus value.

Each of the distribution sections provided in the content server calculates the reference compressed video data scheduled distribution time point information by using the method as described above. The distribution section relates the scheduled distribution time point calculated in such a manner to a location information (for example, IP address number) assigned to the distribution section itself, and outputs the same as scheduled distribution time point information to the scheduled distribution time point information transmission server 1030.

(Example of Scheduled Distribution Time Point Information)

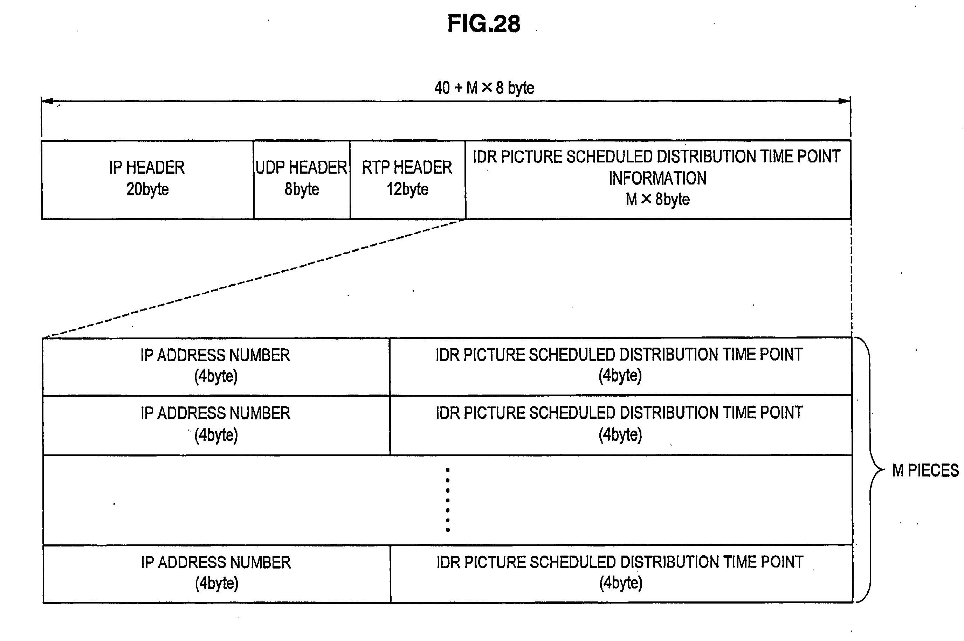

Subsequently, referring to FIG. 28, a concrete description example of the scheduled distribution time point information calculated by using the method as described above will be described in detail. FIG. 28 is an explanatory diagram for describing a concrete example of the reference compressed video data scheduled distribution time point information according to the present example embodiment.

As shown in FIG. 28, IDR picture scheduled distribution time point information, which is an example of the reference compressed video data scheduled distribution time point information, is configured from an IP header, a UDP header, a RTP header and a RTP payload, for example. As shown in FIG. 28, the IDR picture scheduled distribution time point information is stored in the RTP payload of the UDP packet, and is described M pieces of IDR picture scheduled transmission time point records along with a 12-byte header.

An identifier indicating that the UDP packet is in a packet format of the IDR picture scheduled distribution time point information, a version number and the like are specified in the header of the IDR picture scheduled distribution time point information. The IDR picture scheduled distribution time point information of an MPEG stream is expressed by 8 bytes including an IP multicast address (4 bytes) and the scheduled distribution time point (4 bytes), and the scheduled distribution time points for MPEG streams of about M=150 can be described in a UDP packet.

The IP multicast address of a record corresponds to an IP multicast address of each channel in Broadcast Discovery Record described in the following, and is stored a scheduled time when the IP packet including the IDR picture of the stream of the corresponding IP multicast is to be distributed next.

Although an accuracy of about 1/1000 seconds, for example, is enough for the scheduled distribution time point, an accuracy of 1/10000 seconds, that is, 0.1 ms, is preferable. Measuring the scheduled distribution time point with the same clock for each of the processing sections 1011 that transmits the IP multicast stream of at least the same channel is enough. However, the scheduled distribution time point may be measured with the same clock for all the processing sections.

Next, referring to FIG. 28, a mechanism of collecting the IDR picture scheduled distribution time point information measured by each content server 1010 of the content distribution system 1001 and transmitting the same to the information processing apparatus 1020, which is a terminal, will be described.

As described above, the clocks of all the content servers 1010 and the information processing apparatuses 1020 are set to synchronize with the reference clock server 1040 connected to the network by the Network Time Protocol (NTP), and each content server 1010 synchronizes its clock with the reference clock by the NTP and calculates, by the synchronized clock, the scheduled time point when the next IDR picture is to be distributed. The distribution section provided in the processing section 1011 of the content server 1010 transmits the calculated time point to the IDR picture scheduled distribution time point information transmission server 1030 as described above.

In this case, the distribution section of each processing section 1011 transmits the UDP packet shown in FIG. 28 by IP unicast. The UDP packet is stored only a scheduled distribution time point record regarding the IP packet stream to be transmitted by the processing section 1011 transmitting this UDP packet. In other words, M is 1 for the UDP packet of FIG. 28. The IDR picture scheduled distribution time point information transmission server 1030 collects the IDR picture scheduled distribution time points transmitted from each content server 1010 (each processing section 1011, to be more precise) and generates the UDP packet as shown in FIG. 28.

As shown in FIGS. 19 and 20, where there are 300 channels (that is, 300 content servers 1010) in the content distribution system 1001 and two processing sections 1011 for each channel, the UDP packet shown in FIG. 28 becomes information for 600 IP multicast streams. Thus, M=150 for each UDP packet, and each UDP packet is transmitted being divided into four UDP packets. In a network environment where the UDP packet may be lost, a same packet is redundantly transmitted.

The IP multicast address of the UDP packet transmitted from the IDR picture scheduled distribution time point information transmission server 1030 is an IP multicast address specified in the ChannelChangeInfo in Broadcast Discovery Record described later. To receive the IDR picture scheduled distribution time point information, each information processing apparatus 1020 specifies the IP multicast address and joins the multicast group by IGMP. The transmission of the IDR picture scheduled distribution time point information is performed at the frequency of about 100 times per second, that is, a 10-ms cycle, and the information processing apparatus 1020 can receive the latest IDR picture scheduled distribution time point information about every 10 ms.

Incidentally, according to the present example embodiment, the IDR pictures of the streams for preview to be distributed from respective content servers 1010 are normally distributed at the same time point, and thus, the scheduled distribution time point information is the same and does not have to be notified by the respective content servers 1010. However, distribution time point information transmission server 1030 according to the present example embodiment collects the information to be outputted from each stream-for-preview processing section 1011A as well.

The scheduled distribution time point outputted from the stream-for-viewing-and-listening processing section 1011B is used, at the time of the information processing apparatus 1020 switching the multicast distribution from channel zapping to viewing of a channel, to optimize the waiting time until the IDR picture of a data stream for viewing and listening is received by the information processing apparatus 1020 and to seamlessly switch the stream.

(Transmission of IP Packet)

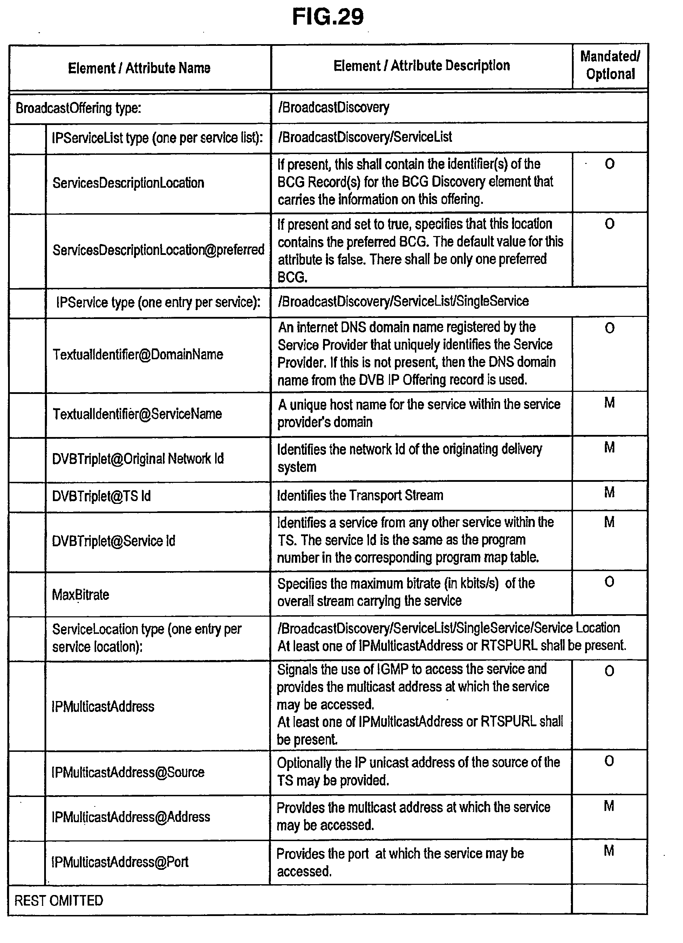

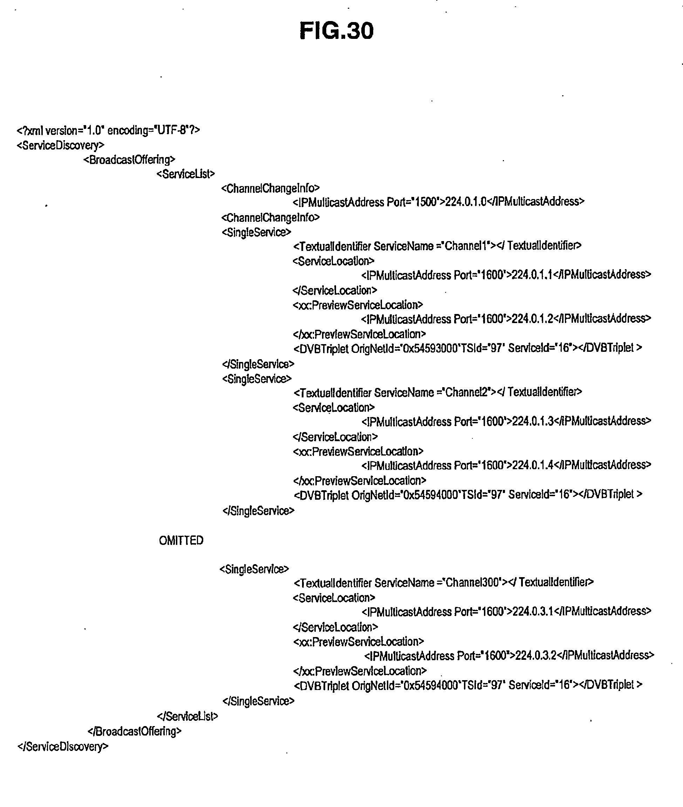

Next, referring to FIGS. 29 and 30, a mechanism of an IP packet according to the present example embodiment being transmitted to an information processing apparatus will be described in detail. Incidentally, in the following, an explanation will be made based on DVB-IP (ETSI TS102 034), which is a standard for the IPTV system.

The information processing apparatus 1020, which is a terminal, needs to know the IP multicast address to which data of a channel is to be distributed to receive the MPEG stream for each channel. According to DVB-IP, the information of the channel is described in SD&S Broadcast Discovery Record. The Broadcast Discovery Record is transmitted by multicast according to DVB SD&S Transport Protocol (DVB STP) according to DVB-IP standard from an IPTV application server such as an EPG server (not shown) to the information processing apparatus 1020. Incidentally, the Broadcast Discovery Record is transferred, being assigned an IP multicast address different from that of the MPEG2-TS stream.

Thus, the content server 1010 existing in the content distribution system 1001 according to the present example embodiment needs to notify beforehand the IP multicast address assigned to each of the processing sections 1011 of the content server 1010 or various channel information to the IPTV application server.

FIG. 29 is an explanatory diagram for describing a data format of Broadcast Discovery Record according to DVB-IP. The information of all the channels provided by the IPTV service is described in the Broadcast Discovery Record. For example, when the IPTV service broadcasts 300 channels, the information processing apparatus 1020, which is a terminal, receives a Broadcast Discovery Record in which information of 300 channels is described.

A channel name is described by a character string for TextualIdentifier@ServiceName as the channel information as shown in FIG. 29, for example, and the character string is used to display the channel name. Further, IPMulticastAddress@Address and IPMulticastAddress@Port are described an IP multicast address and a port number of the IP multicast packet distributed from the stream-for-viewing-and-listening processing section 1011B.

By the information processing apparatus 1020, which is a terminal, joining the IP multicast address group described in the Broadcast Discovery Record by IGMP, distribution of the IP multicast packet of the desired channel is started, and the information processing apparatus 1020 is enabled to receive the IP multicast packet.

Further, with the Broadcast Discovery Record according to the present example embodiment, the Broadcast Discovery Record according to DVB-IP standard is extended and an XML element <xx:PreviewServiceLocation> is provided. The Broadcast Discovery Record according to the present example embodiment has the IP multicast address and the port number of an IP multicast packet to be outputted from the stream-for-preview processing section 1011A described in the XML element.

FIG. 30 is an explanatory diagram for describing an example where the Broadcast Discovery Record is expressed in XML. In this example of the Broadcast Discovery Record, service information for 300 channels is described, and an XML element of each "<SingleService>" corresponds to information of one channel.

For example, channel information at the beginning is described "Channel 1", which is a channel name (ServiceName). Further, the multicast address (address 224.0.1.1, port number 1600) of an IP packet to be outputted from the stream-for-viewing-and-listening processing section 1011B and the multicast address (address 224.0.1.1, port number 1600) of an IP packet to be outputted from the stream-for-preview processing section 1011A are described. The channel information listed next is described "Channel 2", which is a channel name, and two multicast addresses respectively for the viewing and the preview. Although the description of the following channel information is omitted, information for 300 channels in total is to be listed and described. According to the Broadcast Discovery Record described above, the information processing apparatus 1020 is enabled to know the two addresses of each channel, respectively for the viewing and the preview.

Next, an acquisition method for the IDR picture scheduled distribution time point information of each MPEG2-TS stream that is assigned a multicast address and distributed is described. In the present example embodiment, the Broadcast Discovery Record according to DVB-IP standard is extended and an XML element "<ChannelChangeInfo>" is described. The XML element "<ChannelChangeInfo>" has, specified in "<IPMulticastAddress>", the multicast address of the scheduled distribution time point information transmission server 30 from which the IDR picture scheduled distribution time point information of all the MPEG streams distributed by the IPTV service can be acquired. The example shown in FIG. 30 indicates that the IDR picture scheduled distribution time point information can be acquired from address 224.0.1.0, port number 1500.

As described above, according to the content distribution method according to the present example embodiment, two types of compressed data streams, that is, a compressed data stream encoded for preview and a compressed data stream encoded for viewing and listening, are distributed for one channel. The compressed data stream encoded for preview is configured only from reference compressed video data such as the IDR picture, and a packet storing the data stream is shaped in a manner that is suitable for high-speed channel zapping. As a result, according to the content distribution method according to the present example embodiment, the information processing apparatus, which is a terminal, acquires the compressed data stream for preview and reproduces the same for multiple channels in a repeated manner, thereby enabling a high-speed channel zapping.

<Information Processing Method>

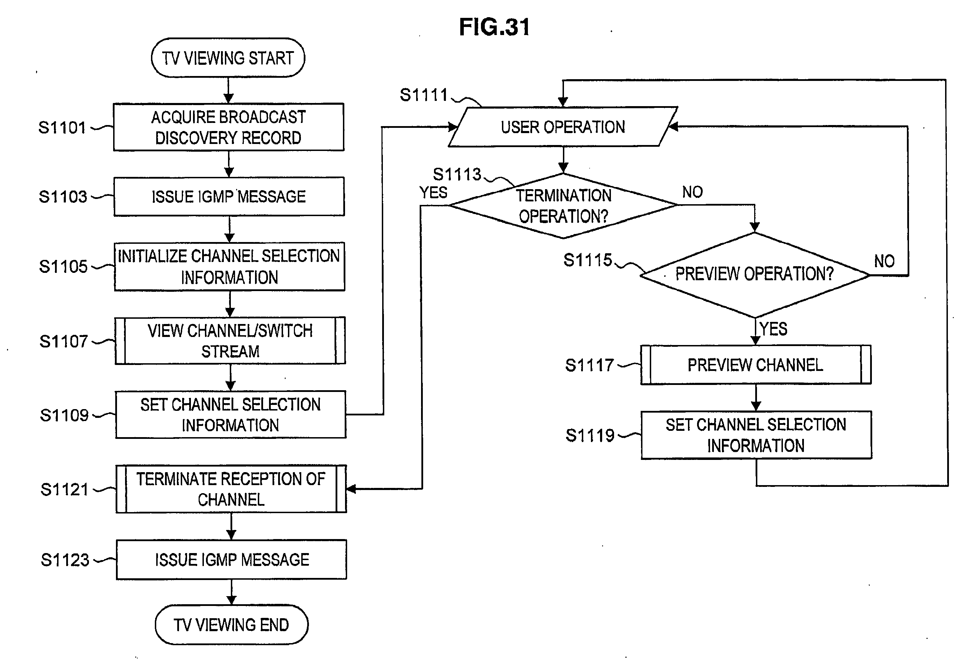

Subsequently, referring to FIGS. 31 to 38, an information processing method to be executed by the information processing apparatus 1020 according to the present example embodiment will be described in detail. FIG. 31 is a flow chart for describing an information processing method to be carried out by the information processing apparatus 1020 according to the present example embodiment.

When the power of the information processing apparatus 1020 is turned on by a viewer (user) or when a TV service is selected from a service menu of the IPTV or the like, the information processing apparatus 1020 according to the present embodiment starts a TV viewing process.

First, the information processing apparatus 1020 acquires a Broadcast Discovery Record from an IPTV application server such as an EPG server (not shown) by using a CPU, a ROM, a RAM, a communication device, and the like provided in the apparatus (step S1101). The Broadcast Discovery Record is described based on protocol according to DVB-IP standard as shown in FIG. 30, and the information processing apparatus 1020 can acquire the channel information corresponding to each channel. When the channel information is not changed frequently, the channel information that is already acquired from the IPTV service may also be used.

Next, the information processing apparatus 1020 issues an IGMP message for requesting the distribution start of the IDR picture scheduled distribution time point information and starts receiving multicast packets relating to the scheduled distribution time point information by using a CPU, a ROM, a RAM, a communication device, and the like provided in the apparatus (step S1103).

When joining or leaving a multicast group, the information processing apparatus 1020 uses an IGMP message in a report format as shown in FIG. 25A.

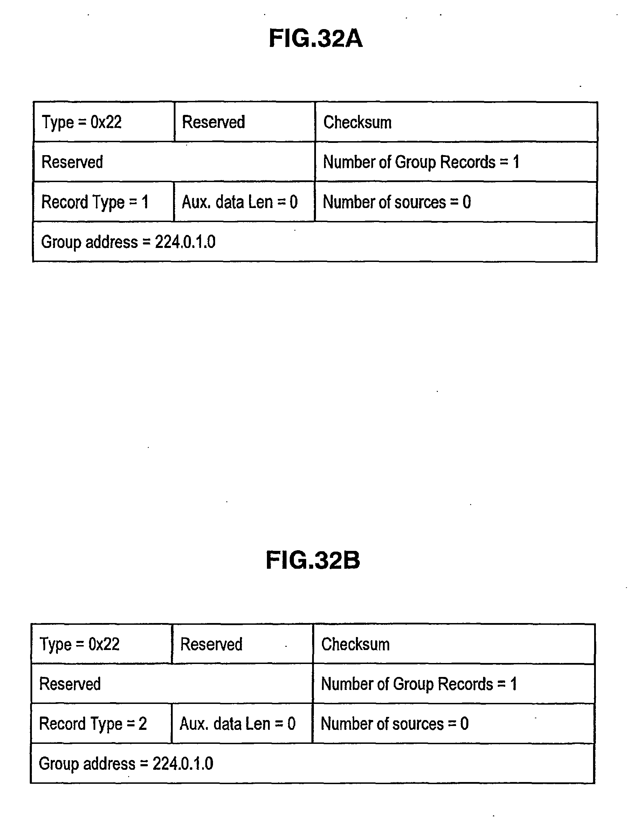

More particularly, to instruct the distribution start of the multicast group distributing the IDR picture scheduled distribution time point information, the information processing apparatus 1020 issues an IGMP message as shown in FIG. 32A. The value 1 specified in "Record Type" column indicates MODE_IS_INCLUDE, and indicates to the multicast group corresponding to the multicast address (224.0.1.0 in the example) acquired in the above-described step S1101 that information processing apparatus 1020 will join the multicast group. By joining the multicast group by the IGMP, the information processing apparatus 1020 will be periodically (10-ms cycle, for example) distributed the IDR picture scheduled distribution time point information from the scheduled distribution time point information transmission server 1030. The information processing apparatus 1020 receives the IDR picture scheduled distribution time point information, and constantly holds the latest information in the storage section 1209.

Subsequently, the channel selection section 1201 of the information processing apparatus 1020 initializes channel selection information (S1105). The pieces of channel selection information to be initialized are four parameters: "CurrentChan", "CurrentAddress", "SelectChan", and "SelectAddr".

Parameter "CurrentChan" is a parameter indicating the position of the channel currently selected by the information processing apparatus 1020, and parameter "CurrentAddress" is a parameter indicating the multicast address to which the channel currently selected is distributed. In the initialization, these two parameters are both set to -1. This is a value that indicates that a channel selection is currently not performed. Further, parameter "SelectChan" is a parameter indicating the channel position of the channel to be selected, and parameter "SelectAddr" is a parameter indicating the multicast address to which the MPEG2-TS stream of the selected channel is to be distributed. In the initialization, "SelectChan" is set to 1. If the channel information of a previously selected channel is held in the terminal, the channel position thereof is specified. "SelectAddress" is set to -1 in the initialization.

Subsequently, the channel selection section 1201 notifies the acquisition stream selection section 1203 of the channel indicated by parameter "SelectChan". The acquisition stream selection section 1203 notifies the content acquisition section 1205 to acquire the compressed data stream for viewing and listening of the channel set in parameter "SelectChan", and the content acquisition section 1205 performs a switching process to a stream for viewing and listening (step S1107). The switching process to the stream for viewing and listening will be described again in detail in the following. By this process, the video of the channel is displayed on the screen of a display (not shown) of the information processing apparatus 1020 and the sound is reproduced from speakers.

When the switching process to the stream for viewing and listening is completed, the channel selection section 1201 updates the channel information relating to the currently selected channel (step S1109). That is, the value of parameter "SelectChan" is set in parameter "CurrentChan", and the value of parameter "SelectAddr" is set in parameter "CurrentAddr".

Subsequently, the channel selection section 1201 of the information processing apparatus 1020 waits for an input of a user operation (step S 1111).

Here, when a termination process such as pressing the power-off button of a remote control, for example, is input by a user (step S1113), the channel selection section 1201 generates a signal corresponding to the input operation and proceeds to the channel reception termination process of step S1123. Further, when an operation for switching a channel is input by the user (step S1115), the channel selection section 1201 proceeds to step S1117 described later. In other cases, the channel selection section 1201 returns to step S1111, and waits for a user operation. In reality, besides these controls, there are also user operations such as volume control or the like. However, the description thereof in FIG. 31 will be omitted.

When a channel switching operation is performed by the user, that is, when a channel up button or a channel down button of a remote control is operated by the user, for example, the information processing apparatus 1020 performs a channel preview process (step S1117). The channel preview process will be described again in the following in detail.

Then, as in step S1109, the channel selection section 1201 updates the channel information relating to the currently selected channel (step S 1119).

Subsequently, the channel selection section 1201 of the information processing apparatus 1020 waits for the input of a user operation, and the TV viewing continues.

On the other hand, when the user operation is a termination operation, the content acquisition section 1205 executes the channel reception termination process (step S1121). The channel reception termination process will be described again in detail in the following.

Then, the information processing apparatus 1020 makes the distribution of the IDR picture scheduled distribution time point information started in step S 1103 stop and terminates the reception of the multicast packet of the scheduled distribution time point information by using a CPU, a ROM, a RAM, a communication device, and the like provided in the apparatus (step S 1123). The information processing apparatus 1020 can stop the distribution by transmitting an IGMP message as shown in FIG. 32B. Here, "RecordType=2" in FIG. 32B indicates that MODE_IS_EXCLUDE, and means leaving the multicast group of 224.0.1.0.

Subsequently, the information processing apparatus 1020 terminates the TV viewing, and returns to the IPTV service menu or moves on to other functions of the terminal.

(Channel Preview Process)

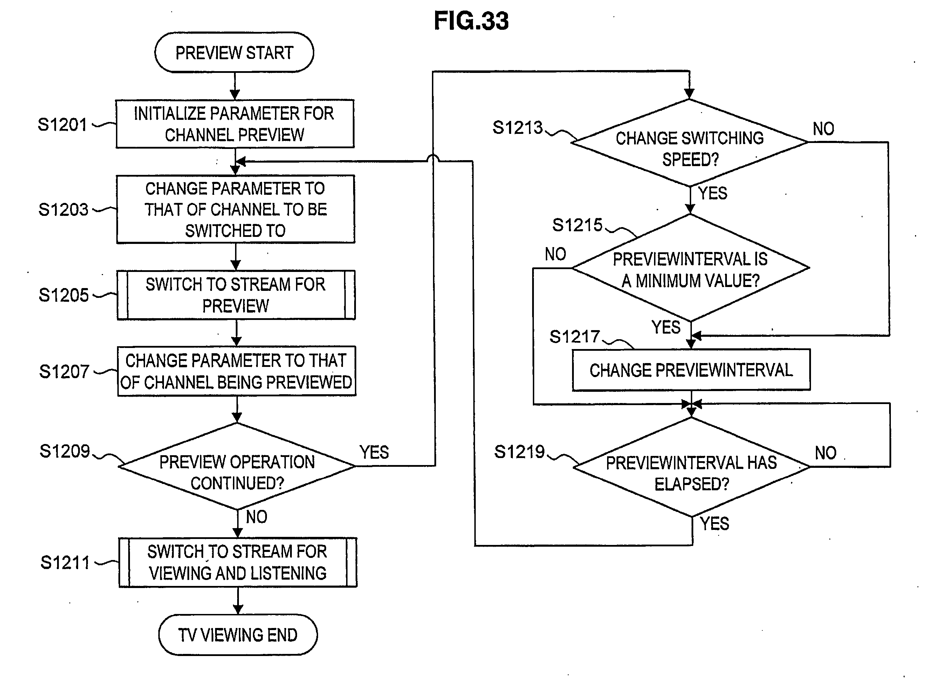

Subsequently, referring to FIG. 33, the channel preview process to be carried out by the information processing apparatus 1020 according to the present example embodiment will be described in detail. FIG. 33 is a flow chart for describing a channel preview process of the information processing method according to the present example embodiment.

According to the channel preview process, videos of the compressed data streams for preview corresponding to respective channels are successively switched and reproduced. At this time, it may be set that, at first, the channel switching is performed with an interval of 0.8 seconds, for example, and when the viewer keeps continuing the channel preview operation (for example, when the viewer keeps pressing a channel switch button or the like), the switching of channels speeds up. The minimum value of the time interval of the channel switching (in other words, channel switching speed) can be arbitrary set. For example, the switching of video can be performed at an interval of 0.1 seconds, for example. In this process, a switching speed change time used for deciding the timing of changing the channel switching speed is defined. The switching speed change time can be set to about 2 seconds, for example.

First, the channel selection section 1201 initializes two parameters relating to channel preview, namely parameter "PreviewInterval" and parameter "PreviewTimer" (step S1201). Here, parameter "PreviewInterval" is used as a standard for timing of switching a channel, and in the present step, is set to 800 ms (0.8 seconds), for example. Accordingly, when the viewer continues the channel preview operation, the channel switching is performed at an interval of 0.8 seconds. Further, parameter "PreviewTimer" is used as a timer for measuring the timing of switching a channel, and in the present step, since channel preview is already started, current time point is set as the initial value.

Subsequently, the channel selection section 1201 performs a setup of a channel to be switched to next in the channel preview (step S1203). For example, when an operation for performing preview by increasing the channel number is performed, such as when a NEXT button of a remote control is pressed, the channel selection section 1201 sets parameter "SelectChan" to a value obtained by increasing the value of parameter "CurrentChan" by 1. Further, when an operation for performing preview by decreasing the channel number is performed, the channel selection section 1201 sets parameter "SelectChan" to a value obtained by decreasing the value of parameter "CurrentChan" by 1. Further, the channel selection section 1201 sets parameter "PreviewSwitchTime". This parameter is a parameter that is used at the time of determining the execution of a switching operation to the next channel, and in the present step, current time point is set therein.

Next, the information processing apparatus 1020 performs the switching to the compressed data stream for preview of a channel set in parameter "SelectChan" (step S1205). The switching process to the stream for preview will be described in detail in the following.

After switching to the compressed data stream for preview, the channel selection section 1201 updates the channel information relating to the channel currently being previewed (step S1207). That is, the value of parameter "SelectChan" is set in parameter "CurrentChan", and the value of parameter "SelectAddr" is set in parameter "CurrentAddr".

Subsequently, the channel selection section 1201 checks whether the viewer is continuing the preview operation (channel zapping operation) (step S1209). More particularly, the checking can be performed based on, for example, whether an input signal relating to the change of channel is inputted to the channel selection section 1201. When the viewer decides to view the channel corresponding to the compressed data stream for preview after switching and the channel is determined, step S1211 described later is carried out. Further, when the viewer is continuing the preview operation, step S1213 described later is carried out.

When the channel to be viewed is determined, the information processing apparatus 1020 performs the switching process to the compressed data stream for viewing and listening (step S1211). The switching process to the compressed data stream for viewing and listening will be described in detail in the following.

In this manner, the channel preview process is terminated, and the viewing of the IPTV television continues.

On the other hand, when the preview operation is continuing, the acquisition stream selection section 1203 of the information processing apparatus 1020 decides whether or not to change the channel switching speed (step S1213). More particularly, the acquisition stream selection section 1203 makes the decision based on whether or not the time obtained by subtracting current time point from parameter "PreviewTimer" is greater than the switching speed change time. When the time obtained by the subtraction is greater than the switching speed change time, step S1215 described later is carried out. Further, when the time obtained by the subtraction is equal to or less than the switching speed change time, step S1217 described later is carried out.

When the time obtained by the subtraction is greater than the switching speed change time, the acquisition stream selection section 1203 decides whether or not the value of parameter "PreviewInterval" is a minimum value (step S1215). When the value of parameter "PreviewInterval" is equal to or less than the minimum value, the channel switching speed is not changed, and step S1219 described later is carried out. Further, when the value of parameter "PreviewInterval" is exceeding the minimum value, step S1217 described later is carried out.

When the channel switching speed is greater than the minimum value, the acquisition stream selection section 1203 changes the channel switching speed (step S1217). For example, the acquisition stream selection section 1203 can set the value half that of the currently set switching speed as the new switching speed. In the present embodiment, parameter "PreviewInterval" is initially set to 800 ms, and while the preview operation is continuing, the switching speed is changed at every switching speed change time, for example. Then, with the change of the switching speed, the value of parameter "PreviewInterval" is changed between four stages, namely, 800 ms, 400 ms, 200 ms, and 100 ms. Incidentally, the above-described method of changing the switching speed is only an example, and various methods of changing the switching speed may be applied according to the screen structure for channel preview, operation of a button of a remote control, preferences of a viewer, or the like.

Subsequently, the acquisition stream selection section 1203 decides whether or not the time set in parameter "PreviewInterval" has elapsed since the previous channel switching (step S1219). More particularly, the acquisition stream selection section 1203 decides whether the time point obtained by adding the value of parameter "PreviewInterval" to the value of parameter "PreviewSwitchTimer" has passed the current time point. When the current time point is not passed, the acquisition stream selection section 1203 waits at this step. Further, when the current time point has passed, the acquisition stream selection section 1203 returns to step S1203 described above, and switches to the compressed data stream for preview of the next channel.

(Switching Process to Compressed Data Stream for Preview)

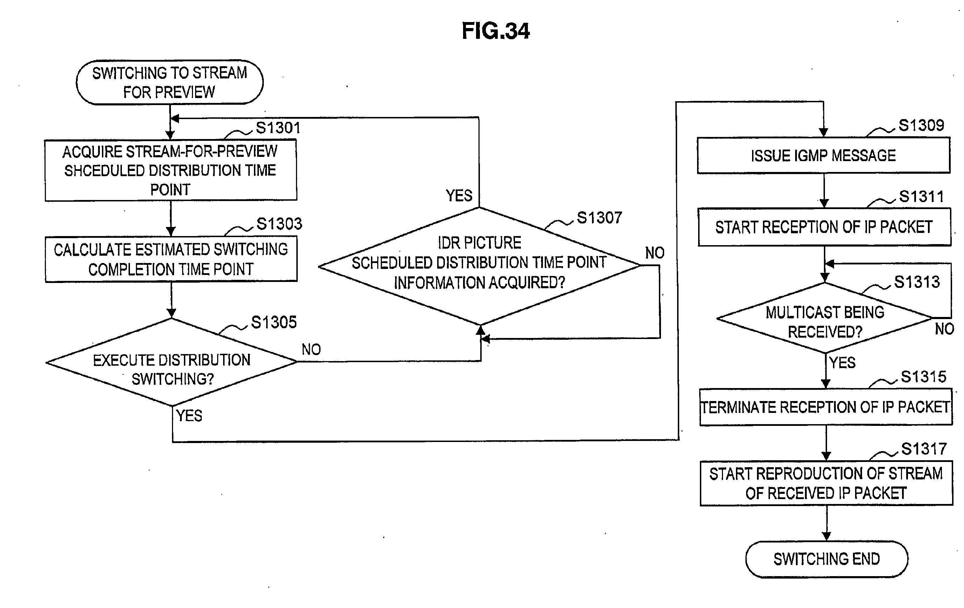

Subsequently, referring to FIG. 34, the switching process to a compressed data stream for preview to be carried out by the information processing apparatus 1020 according to the present example embodiment will be described in detail. FIG. 34 is a flow chart for describing the switching process to a compressed data stream for preview of the information processing method according to the present example embodiment.

First, the acquisition stream selection section 1203 acquires channel information corresponding to parameter "SelectChan" from the latest IDR picture scheduled distribution time point information stored in the storage section 1209 or the like (step S1301).

More particularly, the acquisition stream selection section 1203 first acquires the multicast address of a channel from the Broadcast Discovery Record. In the example shown in FIG. 30, when 1 is set in parameter "SelectChan", "<SingleService>" at the beginning is the corresponding channel information. As shown in FIG. 30, two types of multicast addresses, for the compressed data stream for preview and the compressed data stream for viewing and listening, respectively, are described in "<SingleService>" in the channel information. In the example of FIG. 30, 224.0.1.2 is set according to the value of <IPMulticastAddress> described in parameter "xx.PreviewServiceLocation".

Next, the acquisition stream selection section 1203 searches for the scheduled distribution time point record of each multicast address in the latest IDR picture scheduled distribution time point information, and sets the IDR picture scheduled distribution time point to "NextTime". Note that the distribution time point of an IDR picture is a time point of transmission from each distribution section of the content server 10, and, by nature, there is a delay until the MPEG2-TS packet at the beginning including the IDR picture reaches the information processing apparatus 1020. Accordingly, when the delay time is large and cannot be ignored, in addition to the conditions of the network from the content server 1010 to the information processing apparatus 1020, the delay time should be added to "NextTime" as appropriate.

Next, the acquisition stream selection section 1203 calculates the estimated switching completion time point for the multicast distribution (step S1303). The estimated switching completion time point is an estimated time until the first packet arrives from a multicast group that the information processing apparatus 1020 newly joined in a case where the information processing apparatus 1020 immediately issued an IGMP message to perform the start or switching of a distribution. The estimated switching completion time point "SwitchTime" can be obtained by adding the required switching time to the current time point. Here, the required switching time is the sum of the times indicated below.

(1) Time required by the information processing apparatus 1020 to issue an IGMP message
(2) Required time until the IGMP message reaches an edge switch (for example, DSLAM) executing the function of an IGMP proxy.
(3) Required time until the edge switch stops the distribution of the packet of the multicast group being distributed to the access network to which the terminal is currently connected and starts the distribution of the packet of the multicast group to which the terminal newly joined.
(4) Required time until the first packet, the distribution of which is started by the edge switch, arrives at the information processing apparatus 1020.
(5) Time required by the information processing apparatus 1020 to receive and preserve the first packet.

The values of the above-described (1) to (5) depend on the capabilities of the network of the IPTV service and the information processing apparatus 1020, and it is assumed that the maximum value of the required switching time compatible with the conditions of the information processing apparatus 1020 or the network is set in the information processing apparatus 1020 in advance. For example, the maximum value of the required switching time can be set to about 8 ms.

Further, when a plurality of information processing apparatuses 1020 are connected to the subscriber's premise, the above-described (3) includes a time required for checking, at the time of stopping the packet distribution, whether other information processing apparatuses 1020 participate in the same multicast group. Normally, as specified in RFC-3376, this checking is performed by periodical IGMP query messages. Further, when the plurality of information processing apparatuses 1020 participate in separate multicast groups, that is, when different channels are being viewed on the plurality of information processing apparatuses 1020, the access network needs a data bandwidth sufficient for transmitting the multicasts for the multiple channels. To guarantee network bandwidth, a Quality of Service (QoS) control, such as IP Multimedia Subsystem (IMS), for example, can be used.

Subsequently, the acquisition stream selection section 1203 decides whether or not to execute the switching of distribution (step S1305). More particularly, the acquisition stream selection section 1203 compares with a predetermined threshold value the difference between the arrival time point of the IP packet including the IDR picture of the stream for preview and the calculated scheduled switching completion time point SwitchTime. When the calculated difference is greater than the predetermined threshold value, the switching of distribution is not performed, and the process is carried out from step S1301 upon reception of the packet of the next IDR picture scheduled distribution time point information (step S1307).

The decision relating to the execution of switching is made for the following reason. That is, even if the switching of a display is carried out immediately, the content reproduction section 1207 of the information processing apparatus 1020 cannot extend a video until the reception of a packet is started and an IDR picture arrives. Accordingly, there occurs a period where the image freezes (hereinafter, referred to as "freeze period"). The decision enables to shorten the freeze period. The freeze period is preferably made as short as possible for a seamless switching of video, but should be longer than the transmission cycle of the packet at the IDR picture scheduled distribution time point. Accordingly, the maximum value of the freeze period (hereinafter, referred to as "allowed freeze period") is preferably set to, for example. 10 ms.

When determination of the timing is performed by the acquisition stream selection section 1203 based on the decision based on the condition as described above, the channel selection result is transmitted from the acquisition stream selection section 1203 to the content acquisition section 1205. The content acquisition section 1205 issues an IGMP message based on the channel section result, and performs distribution switching of a multicast packet to be distributed to the access network to which the information processing apparatus 1020 is connected (step S1309). The issuance of IGMP message is performed in the report format according to IGMP version 3 specified in RFC 3376 shown in FIGS. 25A and 25B.

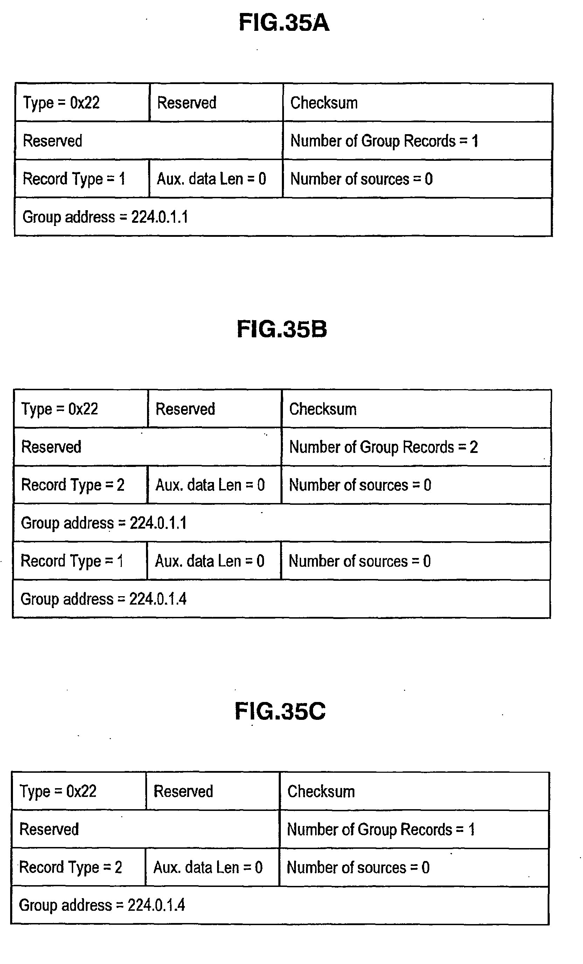

Examples of the IGMP packets are shown in FIGS. 35A to 35C. FIG. 35A shows a case where parameter "CurrentChan" is -1, that is, a case where there is no data corresponding to the multicast address that is already being distributed. FIG. 35A indicates that RecordType 1 (MODE_IS_INCLUDE) is specified to the multicast group of multicast address "SelectAddress" (224.0.1.1 in the example) of parameter "SelectChan" (1 in the example) to join the multicast address to start the multicast data distribution. FIG. 35B shows a case where parameter "CurrentChan" is other than -1, that is, a case where there is no data corresponding to the multicast address that is already being distributed. For example, RecordType=2 (MODE_IS_EXCLUDE) is specified to the multicast group of "CurrentAddress" (224.0.1.0 in the example) of "CurrentChan" (1 in the example) to instruct the stop of distribution, and RecordType=1 (MODE_IS_INCLUDE) is specified to the multicast group of multicast address "SelectAddress" (224.0.1.4 in the example) of "SelectChannel" (2 in the example) to instruct the start of multicast.

According to IMGP version 3, as shown in FIG. 35B, instructions can be collectively performed by one IGMP packet, and thus, there is the merit that implementation where multicast addresses are not redundantly distributed to the access network at the time of switching is possible.

Thereby, the content acquisition section 1205 starts the reception of the multicast packet of a "SelectAddress" (step S1311).

Until the switching of distribution is completed, the content acquisition section 1205 needs to be on standby during the maximum required switching time, and thus, when a multicast packet is not being received, the content acquisition section 1205 will be on standby (step S1313). When there is a possibility of an IGMP packet being lost in the network, multiple packets may be transmitted in step S1309, or a process of retransmitting the IGMP packet may be performed by providing a timeout or the like in step S 1313.

As a result of the standby in step S1313, the distribution switching of multicast is already completed after the standby, and thus, when a channel that was previously selected exists, the content acquisition section 1205 terminates the reception of the multicast packet of the corresponding "CurrentAddress" (step S1315).

Then, the content acquisition section 1205 transmits the received multicast packet to the content reproduction section 1207, and the content reproduction section 1207 starts the reproduction of the MPEG2-TS stored in the multicast packet of a channel that is newly being received (S1317). In reality, a video is displayed on the display (not shown) of the information processing apparatus 1020 after the MPEG2-TS packet including IDR picture is received. In this manner, the switching process for a compressed data stream for preview is completed, and the channel preview continues.

(Switching Process to Compressed Data Stream for Viewing and Listening)

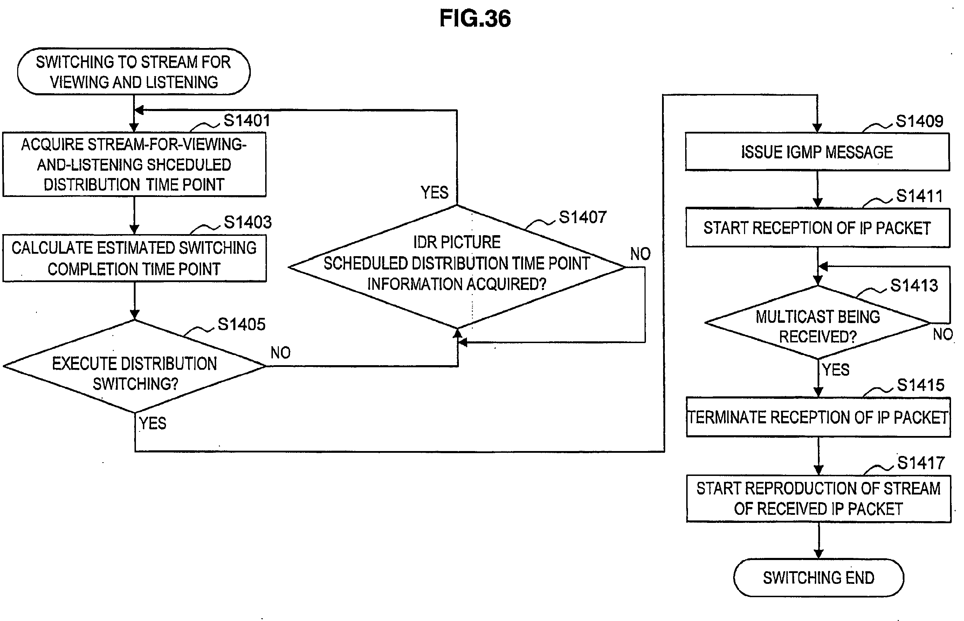

Subsequently, referring to FIG. 36, a switching process to a compressed data stream for viewing and listening to be carried out by the information processing apparatus 1020 according to the present example embodiment will be described in detail. FIG. 36 is a flow chart for describing a switching process to a compressed data stream for viewing and listening of the information processing method according to the present example embodiment.

As shown in FIG. 36, the switching process to a compressed data stream for viewing and listening of the information processing method according to the present example embodiment is carried out in a similar flow as that of the switching process to a compressed data stream for preview as shown in FIG. 34. The switching process to a compressed data stream for viewing and listening according to the present example embodiment can be carried out by adopting parameters relating to a compressed data stream for viewing and listening instead of the parameters relating to a compressed data stream for preview in FIG. 34.

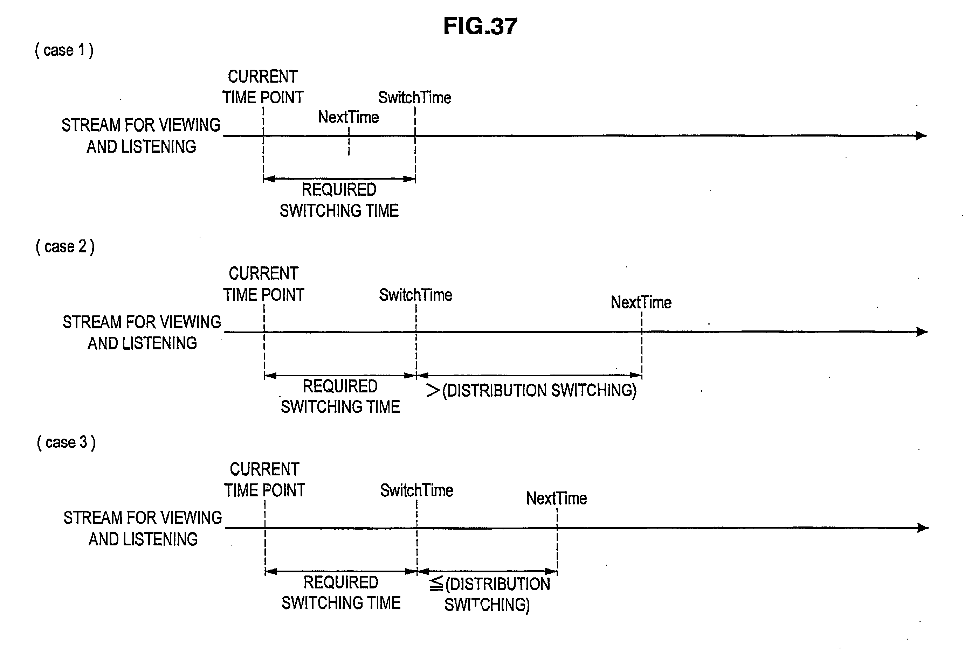

Here, when making a decision regarding the execution of distribution switching as shown in FIG. 36 (step S1405), the decision is made in consideration of the following perspective. That is, also at the time of switching from a stream for preview to a stream for viewing and listening, the acquisition stream selection section 1203 performs the processing in such a way that a smooth switching is realized and a blackout, freezing of a screen or the like is not caused. Thus, the acquisition stream selection section 1203 determines the switching timing for different cases as shown in FIG. 37. In this case, as described above, the stream for viewing and listening is shaped to include a data non-distribution period and is distributed, where the data non-distribution period exists at the same time as the data non-distribution period of the stream for preview, and thus, a soother switching is enabled.

FIG. 37 is an explanatory diagram for describing different cases for switching timings of data streams of the information processing method according to the present example embodiment. In (case 1) shown in FIG. 37, since the switching of a stream is not performed in time for the arrival of an IDR picture, the switching to a stream for viewing and listening is performed upon reception of the next IDR picture. Further, in (case 2) shown in FIG. 37, even if the switching of a stream is performed, a delay is caused until the next IDR picture in the stream for viewing and listening is received. Thus, a stream for preview continues to be received while waiting for the reception of the next IDR picture in a stream for viewing and listening. Further, in (case 3) shown in FIG. 37, the switching from a stream for preview to a stream for viewing and listening is actually performed.

(Channel Reception Termination Process)

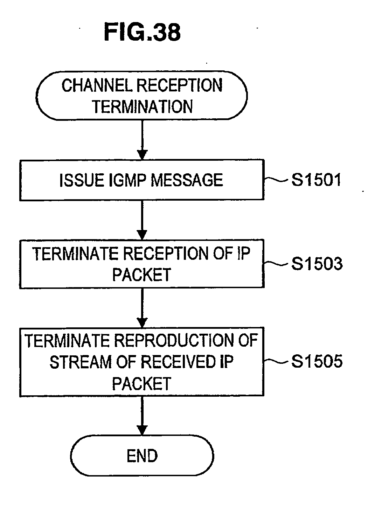

Subsequently, referring to FIG. 38, a process of channel reception termination to be executed by the information processing apparatus 1020 will be described in detail.

First, the content acquisition section 1205 stops the reception of a multicast packet currently being received. The reception of a multicast packet can be stopped by transmitting the IGMP report message as shown in FIG. 35C (step S1501). As shown in FIG. 35C, by specifying RecordType=2 (MODE_IS_EXCLUDE) to the multicast group of parameter "CurrentAddress" (224.0.1.4 in the example) and by transmitting the IGMP message, the content acquisition section 1205 can stop the multicast packet distribution.

Next, the content acquisition section 1205 terminates the reception of the multicast (step S 1503). Then, the content reproduction section 1207 terminates the reproduction of the MPEG2-TS stream (step S1505). By performing the processes, the process of channel reception termination is completed.

Heretofore, a high-speed channel switching in the IPTV system according to the present example embodiment has been described. According to the present example embodiment, an example embodiment other than the above-described example embodiment can easily be conceived. For example, other example embodiments as described below can be conceived.

The example embodiment according to the present invention has been describing a case of H.264/AVC. However, even if MPEG2 video compression is used, by assuming that the IDR picture is an I picture, example embodiments of the present invention can be easily applied to the IPTV system using MPEG2 video compression.

Further, according to the example embodiment according to the present invention, compressed video data and audio data are multiplexed by MPEG2-TS. However, also in a case where compressed video and audio data are distributed in separate IP packets, by applying the example embodiments of present invention, an IPTV system realizing a high-speed channel switching by switching the IP packet distributions can be easily realized.

Further, according to the example embodiment according to the present invention, compressed video data and audio data of only one video/audio signal are multiplexed by MPEG2-TS and stored in an IP packet, and the switching of distribution is performed. However, by multiplexing the compressed video data and audio data of multiple video/audio signals with MPEG2-TS and distributing the same, and by filtering and acquiring only the compressed video/audio packets corresponding to the selected video/audio signal in a network path to the information processing apparatus 1020 and by transmitting the same, an IPTV system realizing a high-speed channel switching similar to that of the present example embodiment can be easily realized.

Further, according to the example embodiment according to the present invention, the IDR picture scheduled distribution time point information is transmitted to the information processing apparatus 1020, which is a terminal, for only the IDR picture that is to be transmitted next. Here, it is self-evident that, if scheduled distribution time points for multiple IDR pictures are specified in the IDR picture scheduled distribution time point record to be transmitted, the information processing apparatus 1020 can perform the selection of multicast address more precisely at the time of channel selection.

Further, according to the example embodiment according to the present invention, the compressed data stream is encoded in such a way that the MPEG2-TS packet of the IDR picture alone is arranged therein. Here, besides IDR pictures, several P-pictures or B-pictures may be arranged in the chunk within the data non-distribution period. This enables a smooth reproduction of preview video. However, in this case, image resolution or number of pictures per second should be reduced for the compressed data stream for preview so that the limit of data bandwidth reserved in the access network is not exceeded.

Further, by using the function of IMGP version 3 and switching the distribution of multicast groups by one IGMP packet, the example embodiment according to the present invention prevents the redundant distribution of packets to the access network during switching and limits the data bandwidth to be used by the IPTV system in the access network. However, even when IGMP version 2 is used, also by performing the process of leaving the multicast group and joining, after the distribution is stopped, a multicast group to be switched to, the data bandwidth to be used by the IPTV system can be limited.

Further, according to the example embodiment according to the present invention, the content server 1010 encodes the multiple MPEG2-TS streams of each channel and distributes the same via the core network. Here, in an environment where there is a limit on the bandwidth of the core network, the following can also be performed. That is, the content server 1010 distributes through the core network one encoded packet for each channel, and arranges another content server, such as an edge server or an edge router, in the middle of the distribution network such an the access network. The another content server generates, for the received MPEG2-TS stream, an MPEG2-TS stream with different IDR picture distribution timing based on the video/audio signal, and distributes the same. In such a manner, the bandwidth of the core network can be limited, and, at the same time, a high-speed channel switching similar to that of the IPVE system described by the present embodiment can be realized.

Further, according to the example embodiment according to the present invention, the IDR picture scheduled distribution time point information is transmitted to the information processing apparatus 1020, which is a terminal, and the information processing apparatus 1020 selects the multicast address of a channel and determines the timing of switching of the multicast packet to be transmitted. Here, the IDR picture scheduled distribution time point information is made to be transmitted to an edge switch or an edge router that performs IGMP snooping and that actually carries out the distribution switching, and the information processing apparatus 1020 immediately performs a multicast distribution switching instruction when the channel selection process is started. The edge switch or the edge router that received the instruction may control, by using the IDR picture scheduled distribution time point information, the selection of multicast address and the distribution switching timing by making a determination in a similar manner to the channel selection process by the information processing apparatus as shown in FIG. 31.

In this case, a network device such as the edge switch or the edge router has a processing section (for example, the content acquisition section and the acquisition stream selection section) having a function similar to that of each processing section provided in the information processing apparatus 1020 as shown in FIG. 21, and, preferably, further includes a distribution control section that distributes an acquired compressed data stream to the information processing apparatus 1020 via a predetermined network. A network device having such a processing section can function as an edge server.

<Example of Preview Screen>

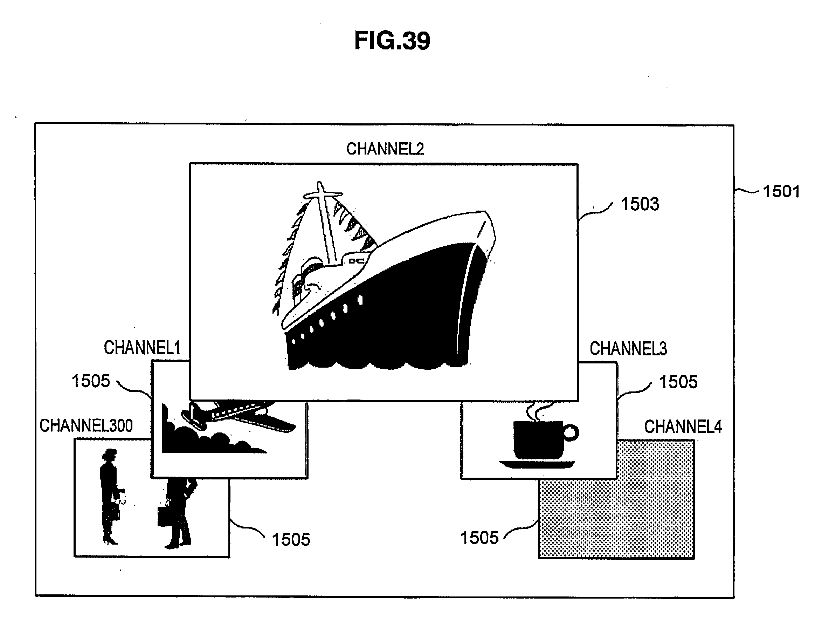

Subsequently, referring to FIG. 39, an example of a preview screen of an IPTV using the information processing method according to the present example embodiment is shown. FIG. 39 is an explanatory diagram for describing an example of a preview screen of an IPTV using the information processing method according to the present example embodiment.

The information processing method according to the present example embodiment is capable of displaying only one preview screen on the entire display screen of a display (not shown) and switching the channel preview at high speed. However, it is also possible to display multiple preview windows on a display screen 1501 of the display to realize a channel preview.

Here, the information processing method according to the present example embodiment is capable of displaying a moving picture of a channel currently being previewed on a moving picture display window 1503, and at the same time, capturing a still image of a channel already previewed in the storage section 1209 to display the same on a still image display window 1505. Realizing such a user interface enables a viewer to view the videos of previous and subsequent channels.

Incidentally, at least preferred embodiments of the present invention (including each of the embodiments described above), only one type of compressed data stream for preview is distributed. However, with the user interface as shown in FIG. 39, the image resolution can be lower for the stream for preview than for the stream for viewing and listening, and thus, the bit rate can be reduced. Thereby, multiple streams for preview can be distributed simultaneously to the access network. For example, if the screen for viewing is high definition (1920x1024 pixels), four to five streams with standard resolution (720x480 pixels) can be distributed in the same data bandwidth. By simultaneously receiving five streams for preview and applying the switching method according to at least preferred embodiments of the present invention to the distribution switching for one of the streams at the time of preview switching, data of the IDR picture can be prevented from being missed at the time of the switching. As a result, preview screens can be smoothly switched, and all the images shown in FIG. 39 can be made moving pictures.

<Hardware Configuration>

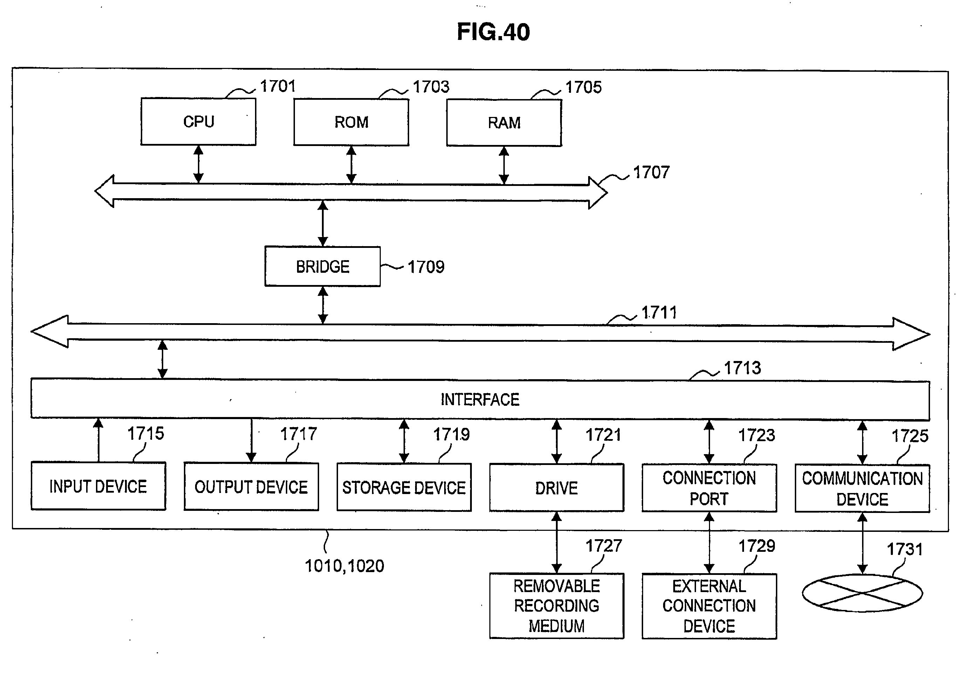

Next, referring to FIG. 40, a hardware configuration of the content server 1010 and the information processing apparatus 1020 according to the present example embodiment will be described in detail. FIG. 40 is a block diagram for describing the hardware configuration of the content server 1010 and the information processing apparatus 1020 according to the present example embodiment.

The content server 1010 and the information processing apparatus 1020 mainly include a CPU 1701, a ROM 1703, a RAM 1705, a host bus 1707, a bridge 1709, an external bus 1711, an interface 1713, an input device 1715, an output device 1717, a storage device 1719, a drive 1721, a connection port 1723, and a communication device 1725.

The CPU 1701 functions as an arithmetic operation processing unit and control unit, and controls the entire operations of the content server 1010 and the information processing apparatus 1020 or part thereof according to various programs stored in the ROM 1703, RAM 1705, storage device 1719 or removable recording medium 1727. The ROM 1703 stores a program or arithmetic operation parameters to be used by the CPU 1701. The RAM 1705 temporarily stores a program to be used by the CPU 1701 in its execution, parameters that change appropriately in the execution of the program, or the like. These are interconnected through the host bus 1707 configured from an internal bus such as a CPU bus.

The host bus 1707 is connected to the external bus 1711 such as a peripheral component interconnect/interface (PCI) bus through the bridge 1709.

The input device 1715 is an operation unit to be operated by a user, such as a mouse, a keyboard, a touch panel, a button, a switch, a lever, or the like. Further, the input device 1715 may be, for example, a remote control unit (so-called remote control) using infrared ray or other electric wave or an external connection device 1729 such as a mobile phone or a PDA compatible with the operations of the content server 1010 and the information processing apparatus 1020. Further, the input device 1715 is configured from an input control circuit or the like that generates an input signal based on information inputted by user using the above-described operation unit, for example, and outputs the outputs the input signal to the CPU 1701. The user of the content server 1010 or the information processing apparatus 1020 can input various types of data to the content server 1010 or the information processing apparatus 1020 or issue an instruction for a processing operation by operating this input device 1715.

The output device 1717 is configured from, for example, a display device, such as a CRT display device, a liquid crystal display device, a plasma display device, an EL display device, a lamp or the like, an audio output device, such as speakers, a head phone or the like, or a device capable of notifying the user visually or aurally the acquired information, such as a printer device, a mobile phone, a facsimile or the like. The output device 1717 outputs a result obtained by various processings performed by the content server 1010 and the information processing apparatus 1020. More specifically, the display device displays the result obtained by various processings performed by the content server 1010 and the information processing apparatus 1020 in the form of text or image. On the other hand, the audio output device converts audio signals composed of reproduced audio data, acoustic data or the like to analog signals and outputs the same.

The storage device 1719 is a data storage device configured as an example of the storage section of the content server 1010 and the information processing apparatus 1020, and is configured from, for example, a magnetic memory device, such as a hard disk drive (HDD) or the like, a semiconductor storage device, an optical storage device, a magneto-optical storage device, or the like. The storage device 1719 stores programs to be executed by the CPU 1701 and various data, acoustic signal data and image signal data acquired from outside, and the like.

The drive 1721 is a reader/writer for recording medium, and is built in or externally attached to the content server 1010 and the information processing apparatus 1020. The drive 1721 reads out information stored in an attached removable recording medium 1727 such as a magnetic disk, an optical disk, a magneto-optical disk, a semiconductor memory or the like and outputs the information to the RAM 1705. Further, the drive 1721 can write a record into the attached removable recording medium 1727 such as the magnetic disk, the optical disk, the magneto-optical disk, the semiconductor memory or the like. The removable recording medium 727 is, for example, a DVD medium, an HD-DVD medium, a Blu-ray medium, a compact flash™ (CF), a memory stick, a secure digital memory card (SD memory card) or the like. Further, the removable recording medium 1727 may be, for example, an integrated circuit card (IC card) loaded with a non-contact IC chip, an electronic device or the like.

The connection port 1723 is a port for directly connecting a device to the content server 1010 and the information processing apparatus 1020, such as a universal serial bus (USB) port, an IEEE 1394 port such as i.Link, a small computer system interface (SCSI) port, a RS-232C port, an optical audio terminal, a high-definition multimedia interface (HDMI), or the like. By connecting the external connection device 1729 to the connection port 1723, the content server 1010 and the information processing apparatus 1020 acquire acoustic signal data or image signal data directly from the external connection device 1729 or provide acoustic signal data or image signal data to the external connection device 1729.

The communication device 1725 is a communication interface configured from a communication device or the like for connecting to a communication network 1731. The communication device 1725 is, for example, a communication card for a wired or wireless local area network (LAN), a Bluetooth or a wireless USB (WUSB), a router for optical communication, a router for asymmetric digital subscriber line (ADSL), various communication modems, or the like. This communication device 1725 can transmit/receive signal and the like to/from the Internet and other communication devices according to a predetermined protocol, such as TCP/IP, for example. Further the communication network 1731 connected to the communication device 1725 is configured from a network or the like connected in a wired or wireless manner, and, for example, the Internet, a home LAN, an infrared ray communication, a radio wave communication, a satellite communication or the like may be adopted.

Heretofore, an example of the hardware configuration, which can realize the functions of the content server 1010 and the information processing apparatus 1020 according to each example embodiment of the present invention has been described. Each of the above-described components may be configured by using a general-purpose member, or by specialized hardware for the function of each component. It is thereby possible to change the hardware configuration to be used as necessary according to the technique level when carrying out the present example embodiment.

Incidentally, the content server 1010 according to the present example embodiment can also be provided as a program having functions as described below. This program is a program for causing a computer to realize a first encoding function of encoding a video/audio content and generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoding function of encoding the video/audio content and generating a second compressed data stream having a compressed video data stream and a compressed audio data stream, the compressed video data stream including the reference compressed video data and compressed video data generated by using the reference compressed video data, a first distribution function of acquiring the first compressed data stream, dividing the first compressed data stream into a data distribution period and a data non-distribution period, and intermittently distributing the first compressed data stream so that the data non-distribution period acquired by the dividing and a data non-distribution period of a first compressed data stream distributed by another content server correspond to each other, and a second distribution function of acquiring the second compressed data stream and distributing the acquired second compressed data stream.

The computer program is stored in a storage section included in a computer, and when a CPU included in the computer reads and executes the program, the program causes the computer to function as the above-described content server 1010. Further, a recording medium that stores the computer program and that ca be read by the computer can also be provided. The recording medium is, for example, a magnetic disk, an optical disk, a magneto-optical disk, a flash memory, or the like. Further, the above-described computer program can be distributed via a network, for example, without using a recording medium.

Incidentally, the information processing apparatus 1020 according to the present example embodiment can also be provided as a program having functions as described below. This program is a program for causing a computer to realize an acquisition stream selection function of selecting a compressed data stream to be acquired among multiple compressed data streams corresponding to multiple video/audio contents being distributed, where there are a plurality of content servers that respectively distribute, in relation to the video/audio content, a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, where the first compressed data stream is intermittently distributed so that a data non-distribution period, acquired by dividing a data packet into a data distribution period and the data non-distribution period, and a data non-distribution period of a first compressed data stream distributed by another content server correspond to each other, and a second compressed data stream having a compressed video data stream and a compressed audio data stream, the compressed video data stream including the reference compressed video data and compressed video data generated by using the reference compressed video data, and a content acquisition function of acquiring the selected compressed data stream.

The computer program is stored in a storage section included in a computer, and when a CPU included in the computer reads and executes the program, the program causes the computer to function as the above-described information processing apparatus 1020. Further, a recording medium that stores the computer program and that can be read by the computer can also be provided. The recording medium is, for example, a magnetic disk, an optical disk, a magneto-optical disk, a flash memory, or the like. Further, the above-described computer program can be distributed via a network, for example, without using a recording medium.

As described above, according to at least preferred embodiments, even in an environment where there is a limit on the data bandwidth of the access network to an IPTV subscriber's premise, previewing while switching between multiple channels with a high quality video at a high speed can be realized. As a result, according to at least preferred embodiments according to the present invention, a method for searching for a channel desired to be viewed in a way as comfortable as, or more comfortable than, with a traditional analog broadcast television can be provided to the channel user.

Further, according to the present example embodiment, at the time of switching between a stream for preview and a stream for viewing and listening, a blackout period where no video is displayed or a time during which video of the stream for preview is displayed in a paused state can be minimized. As a result, a seamless channel switching can be provided to the viewer.

Further, according to the present example embodiment, when receiving only the stream for viewing and listening, the IPTV system according to the present embodiment is no different from the traditional IPTV system. Thus, an IPTV system in which a terminal (an existing terminal) that does not support a high-speed preview based on each of the embodiments of the present invention coexists can be established.

The present application contains subject matter related to that disclosed in Japanese Priority Patent Application JP 2008-135035 filed in the Japan Patent Office on May 23, 2008 and Japanese Priority Patent Application JP 2008-135036 filed in the Japan Patent Office on May 23, 2008, the entire contents of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## CLAUSES

1. A content server comprising:

a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; and

a plurality of distribution sections for respectively acquiring from a separate encoder the compressed data stream generated by the encoder and for distributing the acquired compressed data stream, the plurality of distribution sections being assigned individual network addresses.

2. The content server according to clause 1, wherein
the plurality of encoders respectively encode the video/audio content under the same compression and encoding conditions.

3. The content server according to clause 2, wherein
each of the plurality of distribution sections outputs reference compressed video data scheduled distribution time point information relating to a scheduled distribution time point of distribution of the generated reference compressed video data.

4. The content server according to clause 1, wherein
a clock in the content server is synchronized with a reference clock that is provided from a reference clock server located outside the content server, and
the plurality of encoders respectively measure the reference compressed video data scheduled distribution time point based on the synchronized clock.

5. The content server according to clause 1, wherein
the content server includes several devices, each of which having one encoder and one distribution section, connected in parallel with each other.

6. The content server according to clause 1, wherein
the plurality of encoders and the plurality of distribution sections are provided within the same device.

7. An information processing apparatus comprising:
an acquisition stream selection section for selecting a compressed data stream to be acquired among multiple compressed data streams distributed by a content server that includes a plurality of encoders to encode a video/audio content and to generate the multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections to respectively acquire from a separate encoder the compressed data stream generated by the encoder and to distribute the acquired compressed data stream, the plurality of distribution sections being assigned individual network addresses; and
a content acquisition section for acquiring the compressed data stream distributed by the content server based on a selection result of the acquisition stream selection section.

8. The information processing apparatus according to clause 7, wherein
the acquisition stream selection section acquires reference compressed video data scheduled distribution time point information relating to a scheduled distribution time point, which is when the generated reference compressed video data outputted from the content server is to be distributed, and selects the compressed data stream to be acquired based on the acquired reference compressed video data scheduled distribution time point information.

9. The information processing apparatus according to clause 8, wherein
the acquisition stream selection section calculates estimated switching completion time point, which is when switching to the acquired compressed data stream is to be completed, by using a required switching time required for switching a display to the acquired compressed data stream and the time point when a selection process for a stream to be acquired was started, and selects the compressed data stream having a nearest reference compressed video data scheduled distribution time point after the calculated estimated switching completion time point.

10. The information processing apparatus according to clause 9, wherein
the acquisition stream selection section does not select any of the compressed data streams when all of the reference compressed video data scheduled distribution time points corresponding to the respective compressed data streams are ahead of the estimated switching completion time point.

11. The information processing apparatus according to clause 9, wherein
the acquisition stream selection section notifies the content acquisition section of the selection result for the compressed data stream when a time interval between the scheduled distribution time point and the estimated switching completion time point for the selected compressed data stream is equal to or below a predetermined threshold value.

12. The information processing apparatus according to clause 8, wherein
the content acquisition section performs, by IGMP, a switching control of the compressed data stream selected by the acquisition stream selection section.

13. A network device comprising:

an acquisition stream selection section for selecting a compressed data stream to be acquired among multiple compressed data streams distributed by a content server that includes a plurality of encoders to encode a video/audio content and to generate the multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections to respectively acquire from a separate encoder the compressed data stream generated by the encoder and to distribute the acquired compressed data stream, the plurality of distribution sections being assigned individual network addresses;
a content acquisition section for acquiring the compressed data stream distributed by the content server based on a selection result of the acquisition stream selection section; and
a distribution control section for distributing the acquired compressed data stream to an information processing apparatus that is connected via a network.

14. A content distribution method comprising the steps of:

encoding a video/audio content and generating multiple compressed data streams from the video/audio content, where the video/audio content is inputted in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; and
distributing simultaneously each of the multiple compressed data streams that are generated.

15. An information processing method comprising the steps of:

selecting a compressed data stream to be acquired among the distributed multiple compressed data streams generated from a video/audio content encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; and acquiring the selected compressed data stream.

16. A content distribution method comprising the steps of:

selecting a compressed data stream to be acquired among the distributed multiple compressed data streams generated from a video/audio content encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; acquiring the selected compressed data stream; and distributing the acquired compressed data stream to an information processing apparatus that is connected via a network.

17. A content distribution system comprising:

a content server including

a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections for respectively acquiring from a separate encoder the compressed data stream generated by the encoder and for distributing the acquired compressed data stream, the plurality of distribution sections being assigned individual network addresses; and

an information processing apparatus including

an acquisition stream selection section for selecting the compressed data stream to be acquired among the multiple compressed data streams distributed by the content server, and a content acquisition section for acquiring the compressed data stream distributed by the content server based on a selection result of the acquisition stream selection section.

18. A content distribution system comprising:

a content server including

a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections for respectively acquiring from a separate encoder the compressed data stream generated by the encoder and for distributing the acquired compressed data stream, the plurality of distribution sections being assigned individual network addresses;

an information processing apparatus for notifying a network device of the compressed data stream desired to be reproduced among the multiple compressed data streams distributed by the content server and for reproducing the compressed data stream acquired from the network device; and
the network device including

an acquisition stream selection section for selecting, based on the notification received from the information processing apparatus, the compressed data stream to be acquired among the multiple compressed data streams distributed by the content server,
a content acquisition section for acquiring the compressed data stream distributed by the content server based on a selection result of the acquisition stream selection section, and
a distribution control section for distributing the acquired compressed data stream to the information processing apparatus that is connected via a network.

19. A content server comprising:

a first encoder for encoding a video/audio content and for generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data;
a second encoder for encoding the video/audio content and for generating a second compressed data stream having a compressed video data stream and a compressed audio data stream, the compressed video data stream including the reference compressed video data and compressed video data generated by using the reference compressed video data;
a first distribution section for acquiring the first compressed data stream, for dividing the first compressed data stream into a data distribution period and a data non-distribution period, and for intermittently distributing the first compressed data stream so that the data non-distribution period acquired by the dividing and a data non-distribution period of a first compressed data stream distributed by another content server correspond to each other, the first distribution section being assigned a unique network address; and
a second distribution section for acquiring the second compressed data stream and for distributing the acquired second compressed data stream, the second distribution section being assigned a network address different from that of the first distribution section.

20. The content server according to clause 19, wherein
the first distribution section stores the first compressed data stream in a data packet so that the reference compressed video data exists at the beginning of the data distribution period.

21. The content server according to clause 20, wherein
the second distribution section divides the second compressed data stream into a data distribution period and a data non-distribution period, and intermittently distributes the second compressed data stream so that the data non-distribution period of the second compressed data stream and the data non-distribution period of the first compressed data stream exist at the same time point.

22. The content server according to clause 21, wherein
the second distribution section stores the second compressed data stream in a data packet so that the reference compressed video data exists at the beginning of the data distribution period.

23. The content server according to clause 19, wherein,
in the data distribution period, the first distribution section arranges data packets in which the first compressed data streams are stored at regular intervals and transmits the data packets.

24. The content server according to clause 19, wherein
the compressed video data stream in the first compressed data stream and the compressed video data stream in the second compressed data stream have the same resolution.

25. The content server according to clause 19, wherein
the first distribution section and the second distribution section output reference compressed video data scheduled distribution time point information relating to scheduled distribution time points, which are when the generated reference compressed video data are to be distributed.

26. An information processing apparatus comprising:

an acquisition stream selection section for selecting a compressed data stream to be acquired among multiple first compressed data streams and second compressed data streams distributed by a plurality of content servers, where there are the plurality of content servers that respectively include a first encoder to encode a video/audio content and to generate a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder to encode the video/audio content and to generate a second compressed data stream having a compressed video data stream and a compressed audio data stream, the compressed video data stream including the reference compressed video data and compressed video data generated by using the reference compressed video data, a first distribution section to acquire the first compressed data stream, to divide the first compressed data stream into a data distribution period and a data non-distribution period, and to intermittently distribute the first compressed data stream so that the data non-distribution period acquired by the dividing and a data non-distribution period of a first compressed data stream distributed by another content server correspond to each other, the first distribution section being assigned a unique network address, and a second distribution section to acquire the second compressed data stream and to distribute the acquired second compressed data stream, the second distribution section being assigned a network address different from that of the first distribution section; and a content acquisition section for acquiring the compressed data stream distributed by the content server based on a selection result of the acquisition stream selection section.

27. The information processing apparatus according to clause 26, wherein
the information processing apparatus further comprises a channel selection section that converts an operation for selecting a channel corresponding to the video/audio content performed on the information processing apparatus to a predetermined signal; and
the acquisition stream selection section selects the compressed data stream to be acquired based on the signal transmitted from the channel selection section.

28. The information processing apparatus according to clause 27, wherein
the acquisition stream selection section selects, when a change of the channel being acquired is notified from the channel selection section, the first compressed data stream corresponding to the channel after change.

29. The information processing apparatus according to clause 27, wherein
the acquisition stream selection section selects, when the channel after change is designated, the second compressed data stream corresponding to the designated channel.

30. The information processing apparatus according to clause 28, wherein,
when switching from the first compressed data stream of a channel to the first compressed data stream of another channel, the acquisition stream selection section notifies the content acquisition section of an acquisition timing of the compressed data stream so that switching to the compressed data stream to be acquired is performed during the data non-distribution period.

31. The information processing apparatus according to clause 28, wherein,
when switching from the first compressed data stream of a channel being viewed to the second compressed data stream of another channel, the acquisition stream selection section notifies the content acquisition section of an acquisition timing of the compressed data stream so that switching to the compressed data stream to be acquired is performed during the data non-distribution period.

32. The information processing apparatus according to clause 26, wherein
the acquisition stream selection section acquires reference compressed video data scheduled distribution time point information relating to a scheduled distribution time point, which is when the generated reference compressed video data outputted from the content server is to be distributed, and determines a timing of acquiring the compressed data stream based on the acquired reference compressed video data scheduled distribution time point information.

33. The information processing apparatus according to clause 32, wherein
the acquisition stream selection section

calculates estimated switching completion time point, which is when switching to the acquired compressed data stream is to be completed, by using a required switching time required for switching a display to the acquired compressed data stream and the time point when a selection process for a stream to be acquired was started, and notifies the content acquisition section of an acquisition timing of the compressed data stream when a time interval between the scheduled distribution time point and the estimated switching completion time point for the selected compressed data stream is equal to or below a predetermined threshold value.

34. The information processing apparatus according to clause 26, wherein
the content acquisition section performs, by IGMP, a switching control of the compressed data stream selected by the acquisition stream selection section.

35. A content distribution method comprising the steps of:

encoding a video/audio content and generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data;
encoding the video/audio content and generating a second compressed data stream having a compressed video data stream and a compressed audio data stream, the compressed video data stream including the reference compressed video data and compressed video data generated by using the reference compressed video data; and
dividing the generated first compressed data stream into a data distribution period and a data non-distribution period, intermittently distributing the first compressed data stream so that the data non-distribution period acquired by the dividing and a data non-distribution period of a first compressed data stream distributed by another content server correspond to each other, and, at the same time, distributing the second compressed data stream.

36. An information processing method comprising the steps of:

selecting a compressed data stream to be acquired among multiple compressed data streams corresponding to multiple video/audio contents being distributed, where there are a plurality of content servers that respectively distribute, in relation to the video/audio content, a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, where the first compressed data stream is intermittently distributed so that a data non-distribution period, acquired by dividing a data packet into a data distribution period and the data non-distribution period, and a data non-distribution period of a first compressed data stream distributed by another content server correspond to each other, and a second compressed data stream having a compressed video data stream and a compressed audio data stream, the compressed video data stream including the reference compressed video data and compressed video data generated by using the reference compressed video data; and
acquiring the selected compressed data stream.

37. The information processing method according to clause 36, wherein,
in the step of acquiring the selected compressed data stream, an acquisition of the compressed data stream is performed from immediately after the data non-distribution period.

38. A content distribution system comprising:

a plurality of content servers respectively including

a first encoder for encoding a video/audio content and for generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data,
a second encoder for encoding the video/audio content and for generating a second compressed data stream having a compressed video data stream and a compressed audio data stream, the compressed video data stream including the reference compressed video data and compressed video data generated by using the reference compressed video data,

a first distribution section for acquiring the first compressed data stream, for dividing the first compressed data stream into a data distribution period and a data non-distribution period, and for intermittently distributing the first compressed data stream so that the data non-distribution period acquired by the dividing and a data non-distribution period of a first compressed data stream distributed by another content server correspond to each other, the first distribution section being assigned a unique network address, and

a second distribution section for acquiring the second compressed data stream and for distributing the acquired second compressed data stream, the second distribution section being assigned a network address different from that of the first distribution section; and

an information processing apparatus including

an acquisition stream selection section for selecting a compressed data stream to be acquired among the multiple compressed data streams distributed by the plurality of content servers, and

a content acquisition section for acquiring the compressed data stream distributed by the content server based on a selection result of the acquisition stream selection section.

**Claims**

1. A content server comprising:

   a plurality of encoders for encoding a video/audio content and for generating multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; and
   a plurality of distribution sections for respectively acquiring from a separate encoder the compressed data stream generated by the encoder and for distributing the acquired compressed data stream, the plurality of distribution sections being assigned individual network addresses.

2. The content server according to claim 1, wherein
   the plurality of encoders respectively encode the video/audio content under the same compression and encoding conditions.

3. The content server according to claim 2, wherein
   each of the plurality of distribution sections outputs reference compressed video data scheduled distribution time point information relating to a scheduled distribution time point of distribution of the generated reference compressed video data.

4. The content server according to claim 1, wherein
   a clock in the content server is synchronized with a reference clock that is provided from a reference clock server located outside the content server, and
   the plurality of encoders respectively measure the reference compressed video data scheduled distribution time point based on the synchronized clock.

5. An information processing apparatus comprising:

   an acquisition stream selection section for selecting a compressed data stream to be acquired among multiple compressed data streams distributed by a content server that includes a plurality of encoders to encode a video/audio content and to generate the multiple compressed data streams from the video/audio content, where the video/audio content is encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data, and a plurality of distribution sections to respectively acquire from a separate encoder the compressed data stream generated by the encoder and to distribute the acquired compressed data stream, the plurality of distribution sections being assigned individual network addresses; and
a content acquisition section for acquiring the compressed data stream distributed by the content server based on a selection result of the acquisition stream selection section.

6. A content distribution method comprising the steps of:

encoding a video/audio content and generating multiple compressed data streams from the video/audio content, where the video/audio content is inputted in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; and
distributing simultaneously each of the multiple compressed data streams that are generated.

7. An information processing method comprising the steps of:

selecting a compressed data stream to be acquired among the distributed multiple compressed data streams generated from a video/audio content encoded in such a manner that the positions of video frames corresponding to reference compressed video data and the time points of distribution of the reference compressed video data are different for the respective multiple compressed data streams, the reference compressed video data being data, in time series data generated by compressing a video signal, for which encoding of a subsequent video signal can be started without depending on previous data; and
acquiring the selected compressed data stream.

8. A content server comprising:

a first encoder for encoding a video/audio content and for generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data;
a second encoder for encoding the video/audio content and for generating a second compressed data stream having a compressed video data stream and a compressed audio data stream, the compressed video data stream including the reference compressed video data and compressed video data generated by using the reference compressed video data;
a first distribution section for acquiring the first compressed data stream, for dividing the first compressed data stream into a data distribution period and a data non-distribution period, and for intermittently distributing the first compressed data stream so that the data non-distribution period acquired by the dividing and a data non-distribution period of a first compressed data stream distributed by another content server correspond to each other, the first distribution section being assigned a unique network address; and
a second distribution section for acquiring the second compressed data stream and for distributing the acquired second compressed data stream, the second distribution section being assigned a network address different from that of the first distribution section.

9. The content server according to claim 8, wherein
the first distribution section stores the first compressed data stream in a data packet so that the reference compressed video data exists at the beginning of the data distribution period.

10. The content server according to claim 8, wherein,
in the data distribution period, the first distribution section arranges data packets in which the first compressed data streams are stored at regular intervals and transmits the data packets.

11. The content server according to claim 8, wherein
the compressed video data stream in the first compressed data stream and the compressed video data stream in the second compressed data stream have the same resolution.

12. The content server according to claim 8, wherein
the first distribution section and the second distribution section output reference compressed video data scheduled distribution time point information relating to scheduled distribution time points, which are when the generated reference compressed video data are to be distributed.

**13.** An information processing apparatus comprising:

an acquisition stream selection section for selecting a compressed data stream to be acquired among multiple first compressed data streams and second compressed data streams distributed by a plurality of content servers, where there are the plurality of content servers that respectively include a first encoder to encode a video/audio content and to generate a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, a second encoder to encode the video/audio content and to generate a second compressed data stream having a compressed video data stream and a compressed audio data stream, the compressed video data stream including the reference compressed video data and compressed video data generated by using the reference compressed video data, a first distribution section to acquire the first compressed data stream, to divide the first compressed data stream into a data distribution period and a data non-distribution period, and to intermittently distribute the first compressed data stream so that the data non-distribution period acquired by the dividing and a data non-distribution period of a first compressed data stream distributed by another content server correspond to each other, the first distribution section being assigned a unique network address, and a second distribution section to acquire the second compressed data stream and to distribute the acquired second compressed data stream, the second distribution section being assigned a network address different from that of the first distribution section; and
a content acquisition section for acquiring the compressed data stream distributed by the content server based on a selection result of the acquisition stream selection section.

**14.** A content distribution method comprising the steps of:

encoding a video/audio content and generating a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data;
encoding the video/audio content and generating a second compressed data stream having a compressed video data stream and a compressed audio data stream, the compressed video data stream including the reference compressed video data and compressed video data generated by using the reference compressed video data; and
dividing the generated first compressed data stream into a data distribution period and a data non-distribution period, intermittently distributing the first compressed data stream so that the data non-distribution period acquired by the dividing and a data non-distribution period of a first compressed data stream distributed by another content server correspond to each other, and, at the same time, distributing the second compressed data stream.

**15.** An information processing method comprising the steps of:

selecting a compressed data stream to be acquired among multiple compressed data streams corresponding to multiple video/audio contents being distributed, where there are a plurality of content servers that respectively distribute, in relation to the video/audio content, a first compressed data stream having a compressed video data stream and a compressed audio data stream, the compressed video data stream being configured only from reference compressed video data, which is data, in time series data generated by compressing a video signal, for which encoding of a subsequent video signal can be started without depending on previous data, where the first compressed data stream is intermittently distributed so that a data non-distribution period, acquired by dividing a data packet into a data distribution period and the data non-distribution period, and a data non-distribution period of a first compressed data stream distributed by another content server correspond to each other, and a second compressed data stream having a compressed video data stream and a compressed audio data stream, the compressed video data stream including the reference compressed video data and compressed video data generated by using the reference compressed video data; and
acquiring the selected compressed data stream.

# FIG.1

VIDEO/AUDIO SIGNAL OF CH1        VIDEO/AUDIO SIGNAL OF CH2        VIDEO/AUDIO SIGNAL OF CH300

FIRST PROCESSING SECTION   SECOND PROCESSING SECTION   FIRST PROCESSING SECTION   SECOND PROCESSING SECTION   · · ·   FIRST PROCESSING SECTION   SECOND PROCESSING SECTION

10A        10B        10C

1

SCHEDULED DISTRIBUTION TIME POINT INFORMATION TRANSMISSION SERVER

30

SWITCH — 12

REFERENCE CLOCK SERVER

40

ROUTER — 14

ROUTER — 16

SWITCH — 18

20A    20B    20C    20D

INFORMATION PROCESSING APPARATUS   INFORMATION PROCESSING APPARATUS   INFORMATION PROCESSING APPARATUS   · · ·   INFORMATION PROCESSING APPARATUS

EP 2 124 451 A2

# FIG.2

EP 2 124 451 A2

VIDEO/AUDIO SIGNAL OF CHANNEL

~10

~11A

FIRST PROCESSING SECTION

~11B

SECOND PROCESSING SECTION

~101

FIRST ENCODER

~103

SECOND ENCODER

~111

STORAGE SECTION

~109

STORAGE SECTION

~105

FIRST DISTRIBUTION SECTION

~107

SECOND DISTRIBUTION SECTION

CONTENT SERVER

~30

SCHEDULED DISTRIBUTION TIME POINT INFORMATION TRANSMISSION SERVER

~12

SWITCH

~40

REFERENCE CLOCK SERVER

# FIG.3

SWITCH ~18

20

ACQUISITION STREAM SELECTION SECTION ~205

CONTENT ACQUISITION SECTION ~203

CHANNEL SELECTION SECTION ~201

USER INPUT

STORAGE SECTION ~209

CONTENT REPRODUCTION SECTION ~207

INFORMATION PROCESSING APPARATUS

# FIG.4

TIME POINT A      TIME POINT B

ORIGINAL VIDEO/AUDIO SIGNAL

TIME

PICTURE STRUCTURE OF STREAM
OUTPUTTED FROM FIRST ENCODER

GOP( 30 FRAMES = 1 SECOND)

PICTURE STRUCTURE OF STREAM
OUTPUTTED FROM SECOND ENCODER

GOP( 30 FRAMES = 1 SECOND)

SHIFTED BY 15 FRAMES
(0.5 SECONDS)

EP 2 124 451 A2

## FIG.5

40 + N × 188 byte

| IP HEADER 20byte | UDP HEADER 8byte | RTP HEADER 12byte | RTP PAYLOAD N × 188byte |
|---|---|---|---|

| MPEG2-TS PACKET 188byte | MPEG2-TS PACKET 188byte | MPEG2-TS PACKET 188byte | MPEG2-TS PACKET 188byte | MPEG2-TS PACKET 188byte | MPEG2-TS PACKET 188byte | MPEG2-TS PACKET 188byte |
|---|---|---|---|---|---|---|

# FIG.6

IDR PICTURE SCHEDULED DISTRIBUTION TIME POINT AT CALCULATION TIME POINT C : TIME POINT F = TIME POINT C + TIME D + TIME E
TIME D = TIME POINT B - TIME POINT A

EP 2 124 451 A2

**FIG.7**

40 + M × 8 byte

| IP HEADER 20byte | UDP HEADER 8byte | RTP HEADER 12byte | IDR PICTURE SCHEDULED DISTRIBUTION TIME POINT INFORMATION M × 8byte |
|---|---|---|---|

M PIECES

| IP ADDRESS NUMBER (4byte) | IDR PICTURE SCHEDULED DISTRIBUTION TIME POINT (4byte) | IP ADDRESS NUMBER (4byte) | IDR PICTURE SCHEDULED DISTRIBUTION TIME POINT (4byte) | ······· | IP ADDRESS NUMBER (4byte) | IDR PICTURE SCHEDULED DISTRIBUTION TIME POINT (4byte) |

# FIG.8

| Element / Attribute Name | | Element / Attribute Description | Mandated/ Optional |
|---|---|---|---|
| BroadcastOffering type: | | /BroadcastDiscovery | |
| | IPServiceList type (one per service list): | /BroadcastDiscovery/ServiceList | |
| | ServicesDescriptionLocation | If present, this shall contain the identifier(s) of the BCG Record(s) for the BCG Discovery element that carries the information on this offering. | O |
| | ServicesDescriptionLocation@preferred | If present and set to true, specifies that this location contains the preferred BCG. The default value for this attribute is false. There shall be only one preferred BCG. | O |
| | IPService type (one entry per service): | /BroadcastDiscovery/ServiceList/SingleService | |
| | TextualIdentifier@DomainName | An internet DNS domain name registered by the Service Provider that uniquely identifies the Service Provider. If this is not present, then the DNS domain name from the DVB IP Offering record is used. | O |
| | TextualIdentifier@ServiceName | A unique host name for the service within the service provider's domain | M |
| | DVBTriplet@Original Network Id | Identifies the network Id of the originating delivery system | M |
| | DVBTriplet@TS Id | Identifies the Transport Stream | M |
| | DVBTriplet@Service Id | Identifies a service from any other service within the TS. The service Id is the same as the program number in the corresponding program map table. | M |
| | MaxBitrate | Specifies the maximum bitrate (in kbits/s) of the overall stream carrying the service | O |
| | ServiceLocation type (one entry per service location): | /BroadcastDiscovery/ServiceList/SingleService/Service Location  At least one of IPMulticastAddress or RTSPURL shall be present. | |
| | IPMulticastAddress | Signals the use of IGMP to access the service and provides the multicast address at which the service may be accessed.  At least one of IPMulticastAddress or RTSPURL shall be present. | O |
| | IPMulticastAddress@Source | Optionally the IP unicast address of the source of the TS may be provided. | O |
| | IPMulticastAddress@Address | Provides the multicast address at which the service may be accessed. | M |
| | IPMulticastAddress@Port | Provides the port at which the service may be accessed. | M |
| REST OMITTED | | | |

## FIG.9

```
<?xml version="1.0" encoding="UTF-8"?>
<ServiceDiscovery>
        <BroadcastOffering>
                <ServiceList>
                        <ChannelChangeInfo NumberOfStreamsPerChannel=2>
                                <IPMulticastAddress Port="1500">224.0.1.0</IPMulticastAddress>
                        <ChannelChangeInfo>
                        <SingleService>
                                <TextualIdentifier ServiceName ="Channel1"></TextualIdentifier>
                                <ServiceLocation>
                                        <IPMulticastAddress Port="1600">224.0.1.1</IPMulticastAddress>
                                        <IPMulticastAddress Port="1600">224.0.1.2</IPMulticastAddress>
                                </ServiceLocation>
                                <DVBTriplet OrigNetId="0x54593000"TSId="97" ServiceId="16"></DVBTriplet >
                        </SingleService>
                        <SingleService>
                                <TextualIdentifier ServiceName ="Channel2"></TextualIdentifier>
                                <ServiceLocation>
                                        <IPMulticastAddress Port="1600">224.0.1.3</IPMulticastAddress>
                                        <IPMulticastAddress Port="1600">224.0.1.4</IPMulticastAddress>
                                </ServiceLocation>
                                <DVBTriplet OrigNetId="0x54594000"TSId="97" ServiceId="16"></DVBTriplet >
                        </SingleService>

                                        OMITTED

                        <SingleService>
                                <TextualIdentifier ServiceName ="Channel300"></TextualIdentifier>
                                <ServiceLocation>
                                        <IPMulticastAddress Port="1600">224.0.3.1</IPMulticastAddress>
                                        <IPMulticastAddress Port="1600">224.0.3.2</IPMulticastAddress>
                                </ServiceLocation>
                                <DVBTriplet OrigNetId="0x54594000"TSId="97" ServiceId="16"></DVBTriplet >
                        </SingleService>
                </ServiceList>
        </BroadcastOffering>
</ServiceDiscovery>
```

**FIG.10**

TV VIEWING START

S101 — ACQUIRE BROADCAST DISCOVERY RECORD

S103 — ISSUE IGMP MESSAGE

S105 — INITIALIZE CHANNEL SELECTION INFORMATION

S107 — SELECT CHANNEL

S109 — SET CHANNEL SELECTION INFORMATION

S123 — TERMINATE RECEPTION OF CHANNEL

S125 — ISSUE IGMP MESSAGE

TV VIEWING END

S111 — USER OPERATION

S113 — TERMINATION OPERATION?
YES / NO

S115 — CHANNEL SWITCHING OPERATION
NO / YES

S117 — CHANGE PARAMETER TO THAT OF CHANNEL TO BE SWITCHED TO

S119 — SELECT CHANNEL

S121 — SET CHANNEL SELECTION INFORMATION

EP 2 124 451 A2

## FIG.11A

| Type = 0x22 (8) | Reserved (8) | Checksum (16) |
|---|---|---|
| Reserved (8) | | Number of Group Records (16) |
| Group Record [1] | | |
| Group Record [2] | | |
| : | | |
| Group Record [M] | | |

## FIG.11B

| Record Type (8) | Aux. data Len (8) | Number of sources (16) |
|---|---|---|
| Group address (32) | | |
| Source address [1] | | |
| Source address [2] | | |
| : | | |
| Source address [M] | | |
| Auxiliary data | | |

## FIG.12A

| Type = 0x22 | Reserved | Checksum | |
|---|---|---|---|
| Reserved | | Number of Group Records = 1 | |
| Record Type = 1 | Aux. data Len = 0 | Number of sources = 0 | |
| Group address = 224.0.1.0 | | | |

## FIG.12B

| Type = 0x22 | Reserved | Checksum | |
|---|---|---|---|
| Reserved | | Number of Group Records = 1 | |
| Record Type = 2 | Aux. data Len = 0 | Number of sources = 0 | |
| Group address = 224.0.1.0 | | | |

# FIG.13

```
                    ( CHANNEL SELECTION )
                              |
                              | ⌇S201
        ┌─────────────────────────────────┐
        │ ACQUIRE SCHEDULED DISTRIBUTION   │◄──────────────────────────┐ YES
        │ TIME POINT OF SELECTED CHANNEL   │                           │
        └─────────────────────────────────┘                        ⌇S217
                              | ⌇S203                        ╱────────────────────╲
        ┌─────────────────────────────────┐                 ╱   IDR PICTURE        ╲   NO
        │ CALCULATE ESTIMATED SWITCHING    │                ╱ SCHEDULED DISTRIBUTION  ╲──────┐
        │ COMPLETION TIME POINT            │                ╲  TIME POINT INFORMATION ╱      │
        └─────────────────────────────────┘                 ╲    ACQUIRED?          ╱       │
                              | ⌇S205                          ╲────────────────────╱        │
                       ╱──────────────╲           NO                      ▲                  │
                      ╱ NextTime1 ≧    ╲──────────────────────────────────┘                  │
                      ╲ SwitchTime     ╱                                                      │
                       ╲──────────────╱                                                       │
                              | YES                   ⌇S209                                   │
                              | ⌇S207          ╱──────────────╲   NO                          │
                       ╱──────────────╲       ╱ NextTime2 ≧    ╲──────────────────────┐       │
                      ╱ NextTime1 ≦    ╲  NO  ╲ SwitchTime     ╱                       │       │
                      ╲ NextTime2      ╱───┐   ╲──────────────╱                        │       │
                       ╲──────────────╱    │          | YES                           │       │
                              | YES     ⌇S213          |                              │       │
                              |      ╱──────────────╲  | YES                          │       │
                              |     ╱ NextTime2 ≧    ╲─┘                              │       │
                              |     ╲ SwitchTime     ╱                                │       │
                              |      ╲──────────────╱ NO                              │       │
                              |          ⌇S211  |    ⌇S215                            │       │
        ┌─────────────────────────────┐  │   ┌─────────────────────────────┐         │       │
        │ UPDATE CHANNEL SELECTION     │◄─┘   │ UPDATE CHANNEL SELECTION     │         │       │
        │ INFORMATION                  │      │ INFORMATION                  │         │       │
        └─────────────────────────────┘      └─────────────────────────────┘         │       │
                              |                           |                           │       │
                              └─────────────┬─────────────┘                           │       │
                                            | ⌇S219                                   │       │
                                    ╱────────────────╲                                │       │
                                   ╱   EQUAL TO       ╲   NO                           │       │
                                  ╱ OR BELOW ALLOWED   ╲──────────────────────────────┘       │
                                  ╲ BLACKOUT TIME?     ╱                                       │
                                   ╲────────────────╱                                         │
                                            | YES                                             │
                                            └─────────────────────────────────────────────────
```

```
                              | ⌇S221
        ┌─────────────────────────────┐
        │ SSUE IGMP MESSAGE            │
        └─────────────────────────────┘
                              | ⌇S223
        ┌─────────────────────────────┐
        │ START RECEPTION OF IP PACKET │
        └─────────────────────────────┘
                              | ⌇S225
                       ╱──────────────╲
                      ╱ MULTICAST BEING ╲   NO
                      ╲ RECEIVED?       ╱──────┐
                       ╲──────────────╱        │
                              | YES  ⌇S227     │
        ┌─────────────────────────────┐        │
        │ TERMINATE RECEPTION OF IP    │        │
        │ PACKET                       │        │
        └─────────────────────────────┘        │
                              | ⌇S229          │
        ┌─────────────────────────────┐        │
        │ START REPRODUCTION OF STREAM │        │
        │ OF RECEIVED IP PACKET        │        │
        └─────────────────────────────┘        │
                              |                 │
                    ( CHANNEL SELECTION END )
```

# FIG.14A

(case 1)

CURRENT TIME POINT     SwitchTime     NextTime 1

Address 1

NextTime 2          ⟹   SELECT Address 1

Address 2

REQUIRED SWITCHING TIME

(case 2)

CURRENT TIME POINT     SwitchTime          NextTime 1

Address 1

NextTime 2          ⟹   SELECT Address 1

Address 2

REQUIRED SWITCHING TIME

(case 3)

CURRENT TIME POINT     SwitchTime               NextTime 1

Address 1

NextTime 2          ⟹   SELECT Address 2

Address 2

REQUIRED SWITCHING TIME

EP 2 124 451 A2

# FIG.14B

( case 4 )

CURRENT
TIME POINT  NextTime 1    SwitchTime

Address 1

Address 2

$\Longrightarrow$ SELECT Address 2

NextTime 2

REQUIRED
SWITCHING TIME

( case 5 )

CURRENT
TIME POINT

NextTime 1             SwitchTime

Address 1

NextTime 2

Address 2

$\Longrightarrow$ NOT SELECTED

REQUIRED
SWITCHING TIME

( case 6 )

CURRENT
TIME POINT

SwitchTime
NextTime 1

Address 1

NextTime 2

Address 2

$\Longrightarrow$ NOT SELECTED

REQUIRED
SWITCHING TIME

EP 2 124 451 A2

# FIG.15

(case 1)

CURRENT
TIME POINT                    SwitchTime
        NextTime 1

Address 1 ————————————————————————————————————————————————————▶

                NextTime 2

Address 2 ————————————————————————————————————————————————————▶

              ◀————————————————▶
                  REQUIRED
                SWITCHING TIME

(case 2)

CURRENT
TIME POINT             SwitchTime              NextTime 1

Address 1 ————————————————————————————————————————————————————▶

                                                          NextTime 2

Address 2 ————————————————————————————————————————————————————▶

              ◀————————————▶◀————————————————▶
                  REQUIRED      >(ALLOWED BLACKOUT TIME)
                SWITCHING TIME

(case 3)

CURRENT
TIME POINT          SwitchTime   NextTime 1

Address 1 ————————————————————————————————————————————————————▶

                                              NextTime 2

Address 2 ————————————————————————————————————————————————————▶

              ◀————————————▶◀————————▶
                  REQUIRED      ≦(ALLOWED
                SWITCHING TIME  BLACKOUT TIME)

## FIG.16A

| Type = 0x22 | Reserved | Checksum | |
|---|---|---|---|
| Reserved | | Number of Group Records = 1 | |
| Record Type = 1 | Aux. data Len = 0 | Number of sources = 0 | |
| Group address = 224.0.1.1 | | | |

## FIG.16B

| Type = 0x22 | Reserved | Checksum | |
|---|---|---|---|
| Reserved | | Number of Group Records = 2 | |
| Record Type = 2 | Aux. data Len = 0 | Number of sources = 0 | |
| Group address = 224.0.1.1 | | | |
| Record Type = 1 | Aux. data Len = 0 | Number of sources = 0 | |
| Group address = 224.0.1.4 | | | |

## FIG.16C

| Type = 0x22 | Reserved | Checksum | |
|---|---|---|---|
| Reserved | | Number of Group Records = 1 | |
| Record Type = 2 | Aux. data Len = 0 | Number of sources = 0 | |
| Group address = 224.0.1.4 | | | |

# FIG.17

```
   ┌──────────────────────────┐
   │   CHANNEL RECEPTION      │
   │     TERMINATION          │
   └──────────────────────────┘
                │
                ▼
   ┌──────────────────────────┐
   │   ISSUE IGMP MESSAGE     │───S301
   └──────────────────────────┘
                │
                ▼
   ┌──────────────────────────┐
   │  TERMINATE RECEPTION OF IP│
   │         PACKET           │───S303
   └──────────────────────────┘
                │
                ▼
   ┌──────────────────────────┐
   │ TERMINATE REPRODUCTION OF │
   │  STREAM OF RECEIVED IP    │───S305
   │         PACKET           │
   └──────────────────────────┘
                │
                ▼
   ┌──────────────────────────┐
   │           END            │
   └──────────────────────────┘
```

# FIG.18

EP 2 124 451 A2

# FIG.19

VIDEO/AUDIO SIGNAL OF CH1     VIDEO/AUDIO SIGNAL OF CH2     VIDEO/AUDIO SIGNAL OF CH300

| STREAM-FOR-PREVIEW PROCESSING SECTION | STREAM-FOR-VIEWING-AND-LISTENING PROCESSING SECTION |
|---|---|

| STREAM-FOR-PREVIEW PROCESSING SECTION | STREAM-FOR-VIEWING-AND-LISTENING PROCESSING SECTION |
|---|---|

• • •

| STREAM-FOR-PREVIEW PROCESSING SECTION | STREAM-FOR-VIEWING-AND-LISTENING PROCESSING SECTION |
|---|---|

1010A     1010B     1010C

1001

SCHEDULED DISTRIBUTION TIME POINT INFORMATION TRANSMISSION SERVER

SWITCH   1012

REFERENCE CLOCK SERVER

1030                  1040

ROUTER ~1014

ROUTER ~1016

SWITCH ~1018

1020A    1020B    1020C    1020D

| INFORMATION PROCESSING APPARATUS | INFORMATION PROCESSING APPARATUS | INFORMATION PROCESSING APPARATUS | • • • | INFORMATION PROCESSING APPARATUS |
|---|---|---|---|---|

EP 2 124 451 A2

72

## FIG.20

VIDEO/AUDIO SIGNAL OF CHANNEL

~1010

CONTENT SERVER

~1011A
STREAM-FOR-PREVIEW
PROCESSING SECTION

~1011B
STREAM-FOR-VIEWING-AND-
LISTENING ROCESSIN SECTION

~1101
FIRST ENCODER

~1103
SECOND ENCODER

STORAGE SECTION ~1109

~1111
STORAGE SECTION

~1105
FIRST DISTRIBUTION SECTION

~1107
SECOND DISTRIBUTION SECTION

~1030
SCHEDULED DISTRIBUTION TIME POINT INFORMATION TRANSMISSION SERVER

~1012
SWITCH

~1040
REFERENCE CLOCK SERVER

EP 2 124 451 A2

**FIG.21**

EP 2 124 451 A2

# FIG.22

ORIGINAL VIDEO/AUDIO SIGNAL

TIME

PICTURE STRUCTURE OF STREAM OUTPUTTED FROM
STREAM-FOR-PREVIEW PROCESSING SECTION

10 IDR PICTURES = 1 SECOND

PICTURE STRUCTURE OF STREAM OUTPUTTED FROM
STREAM-FOR-VIEWING-AND-LISTENING PROCESSING SECTION

GOP( 30 FRAMES = 1 SECOND)

EP 2 124 451 A2

## FIG.23

40 + N × 188 byte

| IP HEADER 20byte | UDP HEADER 8byte | RTP HEADER 12byte | RTP PAYLOAD N × 188byte |
|---|---|---|---|

| MPEG2-TS PACKET 188byte | MPEG2-TS PACKET 188byte | MPEG2-TS PACKET 188byte | MPEG2-TS PACKET 188byte | MPEG2-TS PACKET 188byte | MPEG2-TS PACKET 188byte | MPEG2-TS PACKET 188byte |
|---|---|---|---|---|---|---|

# FIG.24

## FIG.25A

| Type = 0x22 (8) | Reserved (8) | Checksum (16) |
|---|---|---|
| Reserved (8) | | Number of Group Records (16) |
| Group Record [1] | | |
| Group Record [2] | | |
| | ⋮ | |
| Group Record [M] | | |

## FIG.25B

| Record Type (8) | Aux. data Len (8) | Number of sources (16) |
|---|---|---|
| Group address (32) | | |
| Source address [1] | | |
| Source address [2] | | |
| | ⋮ | |
| Source address [M] | | |
| Auxiliary data | | |

# FIG.26

**FIG.27**

IDR PICTURE SCHEDULED DISTRIBUTION TIME POINT AT CALCULATION TIME POINT C : TIME POINT F = TIME POINT C + TIME D + TIME E
TIME D = TIME POINT B - TIME POINT A

## FIG.28

40 + M × 8 byte

| IP HEADER 20byte | UDP HEADER 8byte | RTP HEADER 12byte | IDR PICTURE SCHEDULED DISTRIBUTION TIME POINT INFORMATION M × 8byte |
|---|---|---|---|

| IP ADDRESS NUMBER (4byte) | IDR PICTURE SCHEDULED DISTRIBUTION TIME POINT (4byte) |
|---|---|
| IP ADDRESS NUMBER (4byte) | IDR PICTURE SCHEDULED DISTRIBUTION TIME POINT (4byte) |
| ⋮ | ⋮ |
| IP ADDRESS NUMBER (4byte) | IDR PICTURE SCHEDULED DISTRIBUTION TIME POINT (4byte) |

M PIECES

EP 2 124 451 A2

# FIG.29

| Element / Attribute Name | Element / Attribute Description | Mandated/ Optional |
|---|---|---|
| BroadcastOffering type: | /BroadcastDiscovery | |
| IPServiceList type (one per service list): | /BroadcastDiscovery/ServiceList | |
| ServicesDescriptionLocation | If present, this shall contain the identifier(s) of the BCG Record(s) for the BCG Discovery element that carries the information on this offering. | O |
| ServicesDescriptionLocation@preferred | If present and set to true, specifies that this location contains the preferred BCG. The default value for this attribute is false. There shall be only one preferred BCG. | O |
| IPService type (one entry per service): | /BroadcastDiscovery/ServiceList/SingleService | |
| TextualIdentifier@DomainName | An internet DNS domain name registered by the Service Provider that uniquely identifies the Service Provider. If this is not present, then the DNS domain name from the DVB IP Offering record is used. | O |
| TextualIdentifier@ServiceName | A unique host name for the service within the service provider's domain | M |
| DVBTriplet@Original Network Id | Identifies the network Id of the originating delivery system | M |
| DVBTriplet@TS Id | Identifies the Transport Stream | M |
| DVBTriplet@Service Id | Identifies a service from any other service within the TS. The service Id is the same as the program number in the corresponding program map table. | M |
| MaxBitrate | Specifies the maximum bitrate (in kbits/s) of the overall stream carrying the service | O |
| ServiceLocation type (one entry per service location): | /BroadcastDiscovery/ServiceList/SingleService/Service Location At least one of IPMulticastAddress or RTSPURL shall be present. | |
| IPMulticastAddress | Signals the use of IGMP to access the service and provides the multicast address at which the service may be accessed. At least one of IPMulticastAddress or RTSPURL shall be present. | O |
| IPMulticastAddress@Source | Optionally the IP unicast address of the source of the TS may be provided. | O |
| IPMulticastAddress@Address | Provides the multicast address at which the service may be accessed. | M |
| IPMulticastAddress@Port | Provides the port at which the service may be accessed. | M |
| REST OMITTED | | |

# FIG.30

```
<?xml version="1.0" encoding="UTF-8"?>
<ServiceDiscovery>
        <BroadcastOffering>
                <ServiceList>
                        <ChannelChangeInfo>
                                <IPMulticastAddress Port="1500">224.0.1.0</IPMulticastAddress>
                        <ChannelChangeInfo>
                        <SingleService>
                                <TextualIdentifier ServiceName ="Channel1"></ TextualIdentifier>
                                <ServiceLocation>
                                                <IPMulticastAddress Port="1600">224.0.1.1</IPMulticastAddress>
                                </ServiceLocation>
                                <xx:PreviewServiceLocation>
                                                <IPMulticastAddress Port="1600">224.0.1.2</IPMulticastAddress>
                                </xx:PreviewServiceLocation>
                                <DVBTriplet OrigNetId="0x54593000"TSId="97" ServiceId="16"></DVBTriplet >
                        </SingleService>
                        <SingleService>
                                <TextualIdentifier ServiceName ="Channel2"></ TextualIdentifier>
                                <ServiceLocation>
                                                <IPMulticastAddress Port="1600">224.0.1.3</IPMulticastAddress>
                                </ServiceLocation>
                                <xx:PreviewServiceLocation>
                                                <IPMulticastAddress Port="1600">224.0.1.4</IPMulticastAddress>
                                </xx:PreviewServiceLocation>
                                <DVBTriplet OrigNetId="0x54594000"TSId="97" ServiceId="16"></DVBTriplet >
                        </SingleService>

                OMITTED

                        <SingleService>
                                <TextualIdentifier ServiceName ="Channel300"></ TextualIdentifier>
                                <ServiceLocation>
                                                <IPMulticastAddress Port="1600">224.0.3.1</IPMulticastAddress>
                                </ServiceLocation>
                                <xx:PreviewServiceLocation>
                                                <IPMulticastAddress Port="1600">224.0.3.2</IPMulticastAddress>
                                </xx:PreviewServiceLocation>
                                <DVBTriplet OrigNetId="0x54594000"TSId="97" ServiceId="16"></DVBTriplet >
                        </SingleService>
                </ServiceList>
        </BroadcastOffering>
</ServiceDiscovery>
```

# FIG.31

TV VIEWING START

S1101 — ACQUIRE BROADCAST DISCOVERY RECORD

S1103 — ISSUE IGMP MESSAGE

S1105 — INITIALIZE CHANNEL SELECTION INFORMATION

S1107 — VIEW CHANNEL/SWITCH STREAM

S1109 — SET CHANNEL SELECTION INFORMATION

S1111 — USER OPERATION

S1113 — TERMINATION OPERATION?
YES
NO

S1115 — PREVIEW OPERATION?
NO
YES

S1117 — PREVIEW CHANNEL

S1119 — SET CHANNEL SELECTION INFORMATION

S1121 — TERMINATE RECEPTION OF CHANNEL

S1123 — ISSUE IGMP MESSAGE

TV VIEWING END

## FIG.32A

| Type = 0x22 | Reserved | Checksum |
|---|---|---|
| Reserved | | Number of Group Records = 1 |
| Record Type = 1 | Aux. data Len = 0 | Number of sources = 0 |
| Group address = 224.0.1.0 | | |

## FIG.32B

| Type = 0x22 | Reserved | Checksum |
|---|---|---|
| Reserved | | Number of Group Records = 1 |
| Record Type = 2 | Aux. data Len = 0 | Number of sources = 0 |
| Group address = 224.0.1.0 | | |

# FIG.33

```
                    ┌─────────────────┐
                    │  PREVIEW START  │
                    └─────────────────┘
                             │
                             ▼
           ┌──────────────────────────────┐
  S1201 ───│   INITIALIZE PARAMETER FOR    │
           │        CHANNEL PREVIEW        │
           └──────────────────────────────┘
                             │
                             ▼
           ┌──────────────────────────────┐
  S1203 ───│    CHANGE PARAMETER TO        │
           │   THAT OF CHANNEL TO BE       │
           │         SWITCHED TO           │
           └──────────────────────────────┘
                             │
                             ▼
           ┌──────────────────────────────┐
  S1205 ───│    SWITCH TO STREAM FOR       │
           │          PREVIEW              │
           └──────────────────────────────┘
                             │
                             ▼
           ┌──────────────────────────────┐
  S1207 ───│  CHANGE PARAMETER TO THAT     │
           │ OF CHANNEL BEING PREVIEWED    │
           └──────────────────────────────┘
                             │
                             ▼
  S1209 ─── ◇ PREVIEW OPERATION CONTINUED? ◇ ──YES──►
                             │ NO
                             ▼
           ┌──────────────────────────────┐
  S1211 ───│    SWITCH TO STREAM FOR       │
           │    VIEWING AND LISTENING      │
           └──────────────────────────────┘
                             │
                             ▼
                    ┌─────────────────┐
                    │  TV VIEWING END │
                    └─────────────────┘


  S1213 ─── ◇ CHANGE SWITCHING SPEED? ◇ ──NO──►
                      │ YES
                      ▼
  S1215 ─── ◇ PREVIEWINTERVAL IS A MINIMUM VALUE? ◇ ──NO──►
                      │ YES
                      ▼
           ┌──────────────────────────────┐
  S1217 ───│   CHANGE PREVIEWINTERVAL      │
           └──────────────────────────────┘
                      │
                      ▼
  S1219 ─── ◇ PREVIEWINTERVAL HAS ELAPSED? ◇ ──NO──►
                      │ YES
```

EP 2 124 451 A2

# FIG.34

SWITCHING TO STREAM
FOR PREVIEW

S1301
ACQUIRE STREAM-FOR-PREVIEW
SHCEDULED DISTRIBUTION TIME
POINT

S1303
CALCULATE ESTIMATED SWITCHING
COMPLETION TIME POINT

S1305
EXECUTE DISTRIBUTION
SWITCHING?
— NO
YES

S1307
IDR PICTURE
SCHEDULED DISTRIBUTION TIME POINT
INFORMATION ACQUIRED?
YES / NO

S1309
ISSUE IGMP MESSAGE

S1311
START RECEPTION OF IP PACKET

S1313
MULTICAST BEING
RECEIVED?
— NO
YES

S1315
TERMINATE RECEPTION OF IP PACKET

S1317
START REPRODUCTION OF STREAM
OF RECEIVED IP PACKET

SWITCHING END

EP 2 124 451 A2

## FIG.35A

| Type = 0x22 | Reserved | Checksum |
|---|---|---|
| Reserved | | Number of Group Records = 1 |
| Record Type = 1 | Aux. data Len = 0 | Number of sources = 0 |
| Group address = 224.0.1.1 | | |

## FIG.35B

| Type = 0x22 | Reserved | Checksum |
|---|---|---|
| Reserved | | Number of Group Records = 2 |
| Record Type = 2 | Aux. data Len = 0 | Number of sources = 0 |
| Group address = 224.0.1.1 | | |
| Record Type = 1 | Aux. data Len = 0 | Number of sources = 0 |
| Group address = 224.0.1.4 | | |

## FIG.35C

| Type = 0x22 | Reserved | Checksum |
|---|---|---|
| Reserved | | Number of Group Records = 1 |
| Record Type = 2 | Aux. data Len = 0 | Number of sources = 0 |
| Group address = 224.0.1.4 | | |

# FIG.36

```
        ┌─────────────────────────────┐
        │  SWITCHING TO STREAM FOR    │
        │   VIEWING AND LISTENING     │
        └─────────────────────────────┘
                      │
                      ▼           ～S1401
        ┌─────────────────────────────┐
        │  ACQUIRE STREAM-FOR-VIEWING- │
        │  AND-LISTENING SHCEDULED     │
        │  DISTRIBUTION TIME POINT     │
        └─────────────────────────────┘
                      │
                      ▼           ～S1403
        ┌─────────────────────────────┐
        │  CALCULATE ESTIMATED SWITCHING│
        │    COMPLETION TIME POINT      │
        └─────────────────────────────┘
```

ISSUE IGMP MESSAGE  ～S1409

START RECEPTION OF IP PACKET  ～S1411

IDR PICTURE SCHEDULED DISTRIBUTION TIME POINT INFORMATION ACQUIRED?  ～S1407

MULTICAST BEING RECEIVED?  ～S1413

EXECUTE DISTRIBUTION SWITCHING?  ～S1405

TERMINATE RECEPTION OF IP PACKET  ～S1415

START REPRODUCTION OF STREAM OF RECEIVED IP PACKET  ～S1417

SWITCHING END

# FIG.37

( case 1 )

CURRENT
TIME POINT                SwitchTime
                   NextTime
STREAM FOR VIEWING
AND LISTENING

REQUIRED
SWITCHING TIME

( case 2 )

CURRENT
TIME POINT          SwitchTime              NextTime

STREAM FOR VIEWING
AND LISTENING

REQUIRED
SWITCHING TIME        >(DISTRIBUTION SWITCHING)

( case 3 )

CURRENT
TIME POINT          SwitchTime          NextTime

STREAM FOR VIEWING
AND LISTENING

REQUIRED
SWITCHING TIME        ≦(DISTRIBUTION
                      SWITCHING)

EP 2 124 451 A2

# FIG.38

```
┌─────────────────────────┐
│   CHANNEL RECEPTION      │
│      TERMINATION         │
└─────────────────────────┘
             │
             ▼
┌─────────────────────────┐
│   ISSUE IGMP MESSAGE     │──── S1501
└─────────────────────────┘
             │
             ▼
┌─────────────────────────┐
│ TERMINATE RECEPTION OF IP│
│         PACKET           │──── S1503
└─────────────────────────┘
             │
             ▼
┌─────────────────────────┐
│ TERMINATE REPRODUCTION OF│
│  STREAM OF RECEIVED IP   │──── S1505
│         PACKET           │
└─────────────────────────┘
             │
             ▼
┌─────────────────────────┐
│          END            │
└─────────────────────────┘
```

## FIG.39

FIG.40

# FIG.41

EP 2 124 451 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004114667 A
- WO 2004114668 A
- US 20050081244 A

- JP 2008135035 A
- JP 2008135036 A